# FASCICULE DE BREVET EUROPEEN

(11) **EP 4 367 510 B1**
(45) Date de publication et mention de la délivrance du brevet: **12.11.2025**
(21) Numéro de dépôt: 22757977.8
(22) Date de dépôt: 13.08.2022
(51) Int. Cl.: G01N 29/04, G01N 29/24, G01N 29/22, G01N 29/265

(54) **DISPOSITIF DE TEST NON DESTRUCTIF À ULTRASONS HYBRIDE TRANSDUCTEURS ÉLECTROMAGNÉTIQUES ACOUSTIQUES / LASER COMPRENANT UN ASSEMBLAGE OPTIQUE ROTATIF MONOLITHIQUE DE TRANSMETTEURS LASER AGILES MATRICIELS AVEC GUIDAGE DE MULTIFAISCEAUX LASER POUR LE CONTRÔLE D'OBJETS MÉTALLURGIQUES**
HYBRIDES ZERSTÖRUNGSFREIES LASER/EMAT-ULTRASCHALL-TESTGERÄT MIT MONOLITISCHEM ROTIERENDEM OPTISCHEM AUFBAU VON LASERSTRAHL-ARRAY-SENDERN MIT BEWEGLICHER STRAHLFÜHRUNG ZUR PRÜFUNG METALLURGISCHER OBJEKTE
HYBRID LASER/EMAT ULTRASONIC NON-DESTRUCTIVE TEST DEVICE COMPRISING A MONOLITHIC ROTATING OPTICAL ASSEMBLY OF AGILE-BEAM LASER ARRAY TRANSMITTERS GUIDED BY A PLURALITY OF LASER BEAMS FOR TESTING METALLURGICAL OBJECTS

(30) Priorité: 19.10.2021 FR 2111096
(43) Date de publication de la demande: 15.05.2024
(73) Titulaire: STEELEMAT S.À R.L, 1468 Luxembourg (LU)
(72) Inventeur: EVDOKIMOV, Alexey, Moscow region Mechnikovo, 143422 (RU); SUBBOTIN, Artemii, Odintsovo, 143003 (RU); MALYNKA, Sergii, Dnipropetrovsk region Dnipro, 49126 (UA); SIDOROV, Georgii, Kyiv region Slavutich, 07100 (UA)
(86) Numéro de dépôt international: PCT/EP2022/072741
(87) Numéro de publication internationale: WO 2023/066545

(56) Documents cités:
- US-A- 5 948 291
- EDWARDS C ET AL: "AN INTEGRATED OPTICAL FIBRE - EMAT DEVICE FOR APPLICATIONS IN ULTRASONIC NDT", BRITISH JOURNAL OF NON DESTRUCTIVE TESTING, BRITISH INSTITUTE OF NON DESTRUCTIVE TESTING, NORTHAMPTON, GB, vol. 32, no. 2, 1 February 1990 (1990-02-01), pages 76 - 78, XP000095725
- GRAHAM G M ET AL: "Automated system for laser ultrasonic sensing of weld penetration", MECHATRONICS, PERGAMON PRESS, OXFORD, GB, vol. 7, no. 8, 1 December 1997 (1997-12-01), pages 711 - 721, XP004098539, ISSN: 0957-4158, DOI: 10.1016/S0957-4158(97)00031-7

## Description

### Domaine technique

Cette invention se rapporte généralement à une technologie de test non destructif à ultrasons (CNDU), destinée à équiper une machine-outil pour le travail des métaux. Elle met en œuvre une technique de travail par rayon laser et de traitement par choc laser. De ce fait, l'invention appartient au domaine technique de la classe B23K et sa sous-classe 26, de la classification internationale des brevets.

L'invention met en œuvre principalement un assemblage optique rotatif monolithique de miroirs de type TLAM (désigné par ABLAT en anglais), pour effectuer un guidage agile multifaisceaux laser secondaires sortants, à partir d'un même faisceau laser entrant, mettant en œuvre :
a. une surveillance de la qualité de pièces métalliques, par focalisation de faisceau laser (B23K 26/02 et 26/03);
b. une focalisation automatique de faisceaux laser (B23K 26/04);
c. une mise en forme du faisceau laser, à l'aide de foyers multiples (B23K 26/06);
d. des moyens optiques de mise en forme du faisceau laser, de type lentilles et miroirs (B23K 26/064);
e. une division du faisceau laser en faisceaux multiples, avec des foyers multiples (B23K 26/067);
f. des moyens de détermination de la configuration du spot laser (B23K 26/073);
g. un mouvement relatif entre le faisceau laser et la pièce (B23K 26/08);
h. un système de balayage, comportant un mouvement relatif entre le faisceau laser et la tête du laser (B23K 26/082);
i. un traitement par chocs laser (B23K 26/356);
j. un dispositif formant une ligne pointillée d'impacts laser sur la pièce (B23K 26/359);
k. des équipements auxiliaires, et notamment des transducteurs électromagnétiques acoustiques de type TEMA (dits EMAT en anglais) (B23K 26/70).

L'invention concerne généralement une technologie CNDU de type hybride TEMAs/ Laser, comprenant un assemblage TLAM (désigné par ABLAT en anglais) optique rotatif monolithique, pour le contrôle d'objets métallurgiques,
a. fait de multiples miroirs rigidement liés, arrangés selon une hélicoïde à pas de vis cylindrique circulaire,
b. en rotation selon un cylindre autour d'un même arbre rotatif, et,
c. animé par un même moteur d'entrainement,
d. pour effectuer un guidage agile multi-faisceaux-laser.

La technologie de l'invention concerne également un tel dispositif CNDU hybride TEMAs/Laser de type TLAM (désigné par ABLAT en anglais) mettant en œuvre une technique combinant à la fois:
a. une émission de vibrations mécaniques ultrasoniques par process par choc laser, à l'aide d'une multitude de faisceaux laser secondaires distants déviés impactant la pièce métallique; ce de manière agile par saut à partir d'un même faisceau laser entrant, et,
b. la réception et le monitorage des signaux-induits par les vibrations mécaniques ultrasoniques induites dans la pièce métallique, à l'aide d' une multitude de transducteurs électromagnétiques acoustiques de type TEMA (dit EMAT en anglais) ou équivalents, fonctionnant en mode réception.

L'application principale du dispositif de l'invention est le contrôle de qualité des faces latérales de larges pièces métallurgiques, notamment les faces supérieures et inférieures de brames d'acier, et de la coulée en continu d'acier dans une aciérie.

### Technique antérieure

La détection et la caractérisation des défauts dans les produits métallurgiques sont couramment réalisées par des systèmes CNDU non destructifs d'inspection par ultrasons.

Une des techniques CNDU décrites par l'art antérieur est la technique CCNDU (désignée par CUNDT en anglais), mettant en œuvre en particulier un transducteur électromagnétique acoustique TEMA (dit EMAT en anglais) et, basé sur un mécanisme de couplage magnétique. Les ondes sonores sont générées dans le matériau, et non par contact avec la surface du matériau des produits testés. Les TEMAs offrent de forts avantages par rapport aux transducteurs piézoélectriques CCNDU. Un TEMA peut générer, en tant qu'émetteur, et/ou recevoir en tant que récepteur, différents modes d'ondes ultrasoniques dans des matériaux conducteurs, ce sans contact physique, et sans utiliser de couplant liquide avec les pièces testées. De telles caractéristiques sans contact et sans couplant améliorent la fiabilité des tests. En outre, les propriétés physiques du chemin de transmission des ondes ultrasonores ne changent pas du fait du contact. De plus, les spécifications de tolérance requises pour la position et la propulsion des pièces métallurgiques testés par des sondes TEMA sont assez lâche. Cela fait des transducteurs TEMAs une solution particulièrement bien adaptée pour des applications industrielles, telles que celles impliquant une inspection à moyenne et haute température, et de mauvaises conditions de la surface des pièces métallurgiques testées. Un TEMA est connu de l'état de la technique comme étant un émetteur d'ondes ultrasoniques à faible rendement, mais comme étant un récepteur d'ondes ultrasoniques efficace.

Une variante de la technique CCNDU, décrite par l'art antérieur est la technologie hybride TEMA/Laser. La génération ultrasonique est produite par un (ou plusieurs) laser(s) pulsé(s). Et la détection d'ondes ultrasoniques est réalisée par un (ou plusieurs) transducteur(s) électromagnétique acoustique TEMA, qui sont combinées en une technique ultrasonique hybride TEMA/Laser, pour l'inspection des discontinuités dans les produits métallurgiques. La technologie hybride TEMA/Laser résultante est encore techniquement sans contact. Le TEMA est placé à proximité immédiate de la surface du produit. Le TEMA peut être configuré pour fonctionner à des températures élevées. Les systèmes hybrides TEMA/Laser de l'art antérieur constituent une meilleure combinaison pour le test ultrasonique non destructif d'un produit métallurgique sans contact de surface. L'un des principaux avantages de cette technologie hybride TEMA/ Laser, outre le fait d'être sans contact, est sa capacité à détecter simultanément des défauts de surface (à l'aide d'ondes de Rayleigh) et des défauts de sous-surface en profondeur (à l'aide d'ondes longitudinales et transversales). L'utilisation d'un émetteur laser, au lieu d'un émetteur TEMA, permet de générer différents types d'ondes-ultrasoniques inclinées, de fréquence plus élevée (10 MHz), et d'intensité supérieure à celle que l'on peut attendre avec un émetteur TEMA. De plus, l'impact laser d'un émetteur laser peut générer des ondes ultrasoniques à grande profondeur et à une grande distance de la surface du matériau. Tandis que l'efficacité d'un émetteur TEMA diminue considérablement avec la distance à la surface du matériau et la distance des discontinuités. Typiquement, 2 à 3 mm est généralement la distance maximale autorisée pour maintenir l'efficacité d'un émetteur TEMA. Un premier exemple de cette technologie hybride TEMA/Laser est décrit dans le document Edwards C et All intitulé « An Integrated Optical Fibre - EMAT device for application in Ultrasonic NDT" publié par le « British Journal of Non-Destructive Testing , Northampton, GB, vol. 32, no. 2, pages 76-78», le 1 février 1990. Un deuxième exemple de cette technologie hybride TEMA/Laser est décrit dans le document Graham G.M. et Al intitulé « Automated System for Laser ultrasonic sensing of weld penetration » publié par « Mechatronics Pergamon Press, Oxford, GB, vol. 7, no. 8, pages 711-721 », le 1 décembre 1997.

Selon l'art antérieur CNDU, les données ultrasonores de la topologie des discontinuités dans un produit peuvent être traitées numériquement et affichées dans un certain nombre de formats différents. Les formats les plus courants sont appelés A-Scan, B-Scan et C-Scan; ou leurs présentations topologiques équivalentes. Chaque mode de présentation A-Scan, B-Scan et C-Scan offre une manière différente de regarder et d'évaluer les discontinuités sur et/ou à l'intérieur du matériau du produit inspecté. Il est habituel de numériser et/ou d'afficher les résultats d'un test CNDU successivement dans les trois formes de présentation.

Selon l'art antérieur CNDU, lorsqu'un seul récepteur ultrasonique est positionné en un point de la surface du produit et est induit par un émetteur ultrasonique, la présentation la plus élémentaire des données de forme des ondes-ultrasoniques reçues, vues et fournies par un récepteur ultrasonique unique, se présente sous la forme d'un A-scan d'affichage de forme des ondes reçues. Dans un A-Scan, l'amplitude des échos et le temps de transit du signal ultrasonique depuis les discontinuités, captés par un TEMA, sont tracés sur un diagramme simple. L'axe vertical représente l'amplitude du signal et l'axe horizontal représente le temps de transit. L'énergie sonore de l'émetteur ultrasonique est induite et propagée à travers le matériau sous forme d'ondes ultrasoniques. Lorsqu'il y a une discontinuité dans le corps du produit, une partie de l'énergie d'un trajet d'onde est réfléchie par un tel réflecteur de discontinuité vers le récepteur ultrasonique. La présentation A-Scan affiche la quantité d'énergie ultrasonore reçue en fonction du temps de transit. La quantité relative d'énergie reçue est tracée le long de l'axe vertical. Le temps de transit écoulé, qui est lié à la distance parcourue dans le matériau, est affiché le long de l'axe horizontal. Dans la présentation A-Scan, la taille relative des discontinuités peut être estimée en comparant l'amplitude du signal obtenu à partir d'un réflecteur de discontinuité inconnu à celle d'un réflecteur de discontinuité connu.

Selon l'art antérieur CNDU, lors de la mise en œuvre d'une scanographie linéaire d'un objet, le long d'une ligne de détection sur la surface de l'objet, appartenant à un plan de scanographie le traversant verticalement, un B-Scan montre une vue numérisée en coupe du produit selon le plan de scanographie traversant la ligne de détection. Un B-Scan combine les multiples données A-Scans fournies,
a. soit par un seul récepteur ultrasonique déplacé par étapes suivant une matrice linéaire réceptrice faite de points récepteurs successifs le long de la ligne de détection;
b. soit par une multitude de récepteurs ultrasoniques disposés de manière fixe dans les points récepteurs distants d'une matrice linéaire réceptrice disposée le long de la ligne de détection;
c. soit par un seul récepteur ultrasonique fixe induit par une multitude d'émetteurs ultrasonores disposés de manière fixe en des points émetteurs distants, disposés le long d'une ligne d'impulsion d'une matrice linéaire émettrice.

Dans un B-Scan, la profondeur d'un réflecteur de discontinuité est affichée le long de l'axe vertical. A partir d'un B-Scan, la profondeur des réflecteurs de discontinuités et leurs dimensions linéaires approximatives dans la direction de la ligne de balayage peuvent être déterminées.

La présentation C-Scan est un type de présentation qui est possible lorsqu'une multitude de B-Scans bidimensionnels sont réalisés le long de lignes de détection (de scannographie) parallèles successives et séparées, positionnées perpendiculairement à un axe du produit. Un C-Scan est une vue de type plan de l'emplacement tridimensionnel et de la taille des discontinuités. L'image C-Scan représente une vue de dessus du produit parallèle au motif de balayage des multiples lignes de détection. La présentation C-Scan fournit une vue en 3D des caractéristiques des discontinuités du produit qui réfléchissent et diffusent les ondes sonores sur la surface et à l'intérieur du produit.

Selon l'art antérieur CNDU, il est connu de mettre en œuvre une matrice d'impulsions laser (LEA) ultrasonique sur un produit, à partir de plusieurs faisceaux laser. Il est également connu de mettre en œuvre une matrice de récepteurs TEMA (ERA) ultrasonique disposée sur le produit.

Il est également connu de l'art antérieur CNDU, de combiner des émetteurs laser à ultrasons et des récepteurs TEMAs, dans un dispositif CNDU à ultrasons hybride à doubles matrices TEMAs/Impulsions-Laser, incluant une matrice d'impulsions laser (LEA) ultrasonique, et une matrice de récepteurs TEMA (ERA) ultrasonique.

Il est connu par la technique antérieure, d'utiliser un séparateur de faisceau diffractif (LBS), pour diviser (en parallèle) un faisceau laser entrant pulsé et sa puissance en un paquet de n faisceaux laser secondaires sortants pulsés, focalisés en parallèle sur n points d'impulsion distants d'une matrice impulsions laser (LEA) ultrasonique, selon une technique dite de « Beam Splitting ». En raison de la division parallèle, l'énergie de chaque faisceau laser sortant pulsé est divisée par plus de n.

Un exemple de cette technique de « Beam Splitting » est décrit dans le brevet US 7,629,555 B2 au nom de Gross et al. Cette technique est inadaptée aux applications industrielles de contrôle de pièces métallurgiques de grande taille, qui nécessitent une matrice impulsions laser (LEA) faite de faisceaux laser sortants de forte intensité.

Il est également connu par la technique antérieure, d'utiliser un scanner continu de faisceaux (LSS), pour déplacer continument un faisceau laser entrant pulsé en une tranche continue de faisceaux laser sortants pulsés, focalisés de manière mobile continue, mais non successivement ponctuelle, le long d'une ligne de focalisation passant par éventuellement n points d'impulsion d'une matrice impulsions laser (LEA) ultrasonique. Cette technologie dite « Beam Steering » fait généralement référence à tout élément optique à variation continue, y compris par exemple des lentilles mobiles, des prismes variables, des lentilles à focale variable, des miroirs déformables, des miroirs oscillants, des modulateurs de phase spatiaux, etc. Le moyen le plus courant de rediriger de manière continue un faisceau laser entrant pulsé est de le réfléchir sur des miroirs ou de le diffracter par des réseaux holographiques montés sur des scanners mécaniques, tels que des prismes rotatifs, des scanners à miroir oscillant. La technique « Beam Steering » classique n'est pas adaptée pour des applications CNDU industrielles efficaces. Car la position et donc l'énergie des faisceaux laser sortants pulsés est diffusée en mouvement continu en direction du matériau; et non focalisée et non concentrée en des points d'impulsion discrets distants.

Un exemple de cette technique de « Beam Steering » est décrit dans le brevet US 4,838,631 au nom de Chande et al. Le dispositif décrit utilise un miroir galvanométrique pour rediriger de manière continue le faisceau laser entrant en direction de plusieurs fibres optiques. Le fait d'utiliser un miroir galvanométrique, qui par nature n'est pas fixé rigidement, mais oscille, rend le dispositif très fragile aux vibrations. Cette technologie ne peut être utilisée efficacement dans des environnements très contraignants, et à hautes vibrations, telle que l'industrie métallurgique. En outre, les techniques « Beam Steering », et notamment celles utilisant un miroir galvanométrique, ne peuvent réaliser que de faibles variations angulaires du faisceau laser entrant. De ce fait, les dispositifs de cette technique nécessitent un grand encombrement dans la direction perpendiculaire au plan d'impact.

Les Transmetteurs Laser Agile Matriciels TLAM (désignés par ABLAT en anglais) sont connus de la technique antérieure. La focalisation agile par ABLAT d'un faisceau laser entrant consiste à le diffracter de manière discontinue séquentielle et par sauts en une multitude de faisceaux laser sortants successifs angulairement distants, ce en direction de n points d'impulsion dispersés distants d'une matrice impulsions laser (LEA) ultrasonique; plutôt que de les diriger vers une ligne continue de balayage. Les TLAMs (désignés par ABLATs en anglais) sont généralement utilisés par l'art antérieur dans des domaines de très haute technologie, dans les communications laser, l'acquisition et le suivi de cibles, la microscopie laser et l'interférométrie. Les domaines principaux d'applications sont : celui des radars laser, qui nécessitent la capacité de pointer rapidement vers un grand nombre d'objets largement espacés; le suivi et la discrimination de cibles; celui des capteurs pour la surveillance, et celui du suivi des objets spatiaux. Ils ne sont pas actuellement utilisés ou connus par l'art antérieur pour les applications CNDU de contrôle de qualité de l'industrie métallurgique.

L'art antérieur conceptuellement le plus proche de l'invention est décrit dans le brevet US 5,948,291 au nom de Neylan et al. Le dispositif décrit comprend un faisceau laser entrant, et une multitude de n disques réflecteurs rotatifs, indépendants les uns des autres, comportant chacun sur leur périphérie, soit une fraction totalement réfléchissante (miroir), ou une fraction totalement transmissive et donc non réfléchissante, ou une fraction partiellement transmissive (miroir partiel).

Les n disques réflecteurs indépendants du dispositif sont chacun fixés sur n axes rotatifs différents non accouplés. Le faisceau laser entrant est aligné sur la base et à la périphérie des différents disques réflecteurs en rotation. Le dispositif comprend en outre un dispositif de commande sélective des n différents moteurs, pour pouvoir réaliser, par une rotation différentielle des n disques réflecteurs non accouplés, différents scénarios d'amplitude de l'énergie des faisceaux laser sortants déviés impactant une ligne pointillée de points d'impact fixes. Le dispositif comprend des lentilles de focalisation des faisceaux laser sortants. Mais, Il convient de constater que le dispositif décrit, s'il comprend n disques réflecteurs comprenant n fractions de miroirs rotatifs, alors il comprend obligatoirement n axes rotatifs différents de ces n disques réflecteurs rotatifs indépendants; et n moyens indépendants de mise en rotation de ces n axes rotatifs; c'est-à-dire soit n moteurs différents, ou soit n dispositifs de couplage rotatif mécanique du type engrenages ou équivalent.

Ce dispositif de l'art antérieur décrit n'est pas du type optique-électromagnétique-acoustique CNDU hybride TEMAs/Laser. Il ne comprend pas d'ensemble capteur, composé de transducteurs électromagnétiques acoustiques du type TEMA ou équivalent. Il n'est pas destiné au contrôle de qualité de pièces métallurgiques. Et il ne décrit pas les moyens techniques d'un tel résultat technique par méthode ABLAT.

Ce dispositif de l'art antérieur décrit peut, dans certaines configurations décrites, fonctionner de manière agile comme un TLAM (désigné par ABLAT en anglais). Mais dans une telle configuration de type ABLAT :
a. Son assemblage optique rotatif, incluant les n miroirs formés des fractions totalement ou partiellement réfléchissantes de ses n disques réflecteurs indépendants non accouplés, est structurellement non monolithique. Il est constitué de pièces optiques/mécaniques indépendantes, qui ne sont pas toutes rigidement mécaniquement liées, et qui ne sont pas en position fixe les unes par rapport aux autres. En particulier, les n disques réflecteurs et leurs n axes rotatifs sont en rotation l'un par rapport à l'autre, et donc sont non fixes l'un par rapport à l'autre. L'assemblage optique rotatif est donc à géométrie déformée au cours de la rotation. Son assemblage optique rotatif, constitué des n disques réflecteurs indépendants en rotation, n'est pas fixé rigidement sur un même arbre rotatif.
b. Les n miroirs et leurs n point de réflexion associés ne sont pas en position fixe par rapport au même axe de rotation. Et, ils ne sont mis en rotation synchronisée par le même moteur d'entraînement.
c. Les n disques réflecteurs rotatifs sont obligatoirement en position rotative inclinée par rapport à l'axe de rotation globale. De ce fait, pendant la mise en rotation de l' assemblage optique rotatif, les distances de réflexion rotatives des n points de réflexion des n miroirs, perpendiculairement et vis-à-vis de l'axe de rotation principal, sont toutes continument variables.
d. Chacun des n points de réflexion des n miroirs parcourt un cercle de rotation, centré sur l'axe de rotation principal. Ce cercle de rotation n'est pas perpendiculaire, mais continument incliné de sensiblement 45° vis-à-vis de l'axe de rotation principal.
e. La projection de ce cercle de rotation, parallèlement à un plan de projection parallèle à l' axe de rotation principal et passant par son centre de rotation, est formée d'une ellipse et non pas d'un segment.
f. La projection de ce cercle de rotation, parallèlement à un plan de rotation perpendiculaire à l' axe de rotation principal et passant par son centre de rotation, est également formée d'une ellipse et non d'un cercle.
g. Le cylindre de réflexion virtuel entourant les n points de réflexion des n disques réflecteurs inclinés, qui lui sont liés, est déformé et n'a pas un rayon de cylindre constant au cours de la rotation.
h. Les n points de réflexion des n miroirs indépendants de ces n disques réflecteurs ne sont pas longitudinalement fixes, au cours du mouvement rotatif, mais ils sont en mouvement longitudinal alternatif vis-à-vis de l'axe principal de rotation et de l'axe du faisceau laser principal, alternativement en avant puis en arrière.
i. La ligne hélicoïdale pointillée rotative joignant les n points de réflexion des n miroirs, est à enroulement elliptique déformé au cours de la rotation et non à enroulement circulaire fixe. Elle n'a pas un de pas de vis circulaire.

Le défaut principal de ce dispositif de l'art antérieur, lorsqu'il est utilisé en mode TLAM (désigné par ABLAT en anglais), est qu'il nécessite n arbres rotatifs et n moyens indépendants de mise en rotation de n ces arbres rotatifs, de type moteur ou équivalent, pour dévier le faisceau laser entrant en n faisceaux laser sortants impactant n points d'impact laser. Cela induit des couts de construction, une augmentation de volume et poids, une sensibilité aux vibrations, une fragilité, et des risques de pannes, sensiblement proportionnels au nombre d' arbres rotatifs. En outre, cela entraine une augmentation de l'encombrement vertical du dispositif qui l'empêche d'être utilisé dans des application industrielles à place disponible réduite.

### Problème technique

Il ressort de l'analyse de l'art antérieur, qu'en raison des limitations ci-dessus, les dispositifs CNDU hybrides Laser-TEMA souffrent en particulier des inconvénients suivants pour la A-Scannographie et la B-Scannographie de contrôle qualité CNDU d'objets métallurgiques, que l'invention vise à résoudre:
a. Les dispositifs CNDU hybride TEMAs/Laser de type séparation de faisceaux (désignés par «Beam Splitting» en anglais) sont inefficaces. Car ils entrainent une division de la puissance laser entrante proportionnelle au nombre de faisceaux sortant secondaires impactant des points d'impact laser. De ce fait ils diminuent le ratio signal-bruit et affaiblissent proportionnellement la résolution du contrôle CNDU. Ces dispositifs sont de ce fait inadapté dans des applications CNDU industrielles, tel que le contrôle de pièces métallurgiques, qui nécessitent des chocs laser de haute énergie.
b. Les dispositifs CNDU hybride TEMAs/Laser non agiles de type à déplacement continu de faisceaux (désignés par «Beam Steering» en anglais), sont très fragile et sensibles aux vibrations. Ils nécessitent un grand encombrement dans la direction perpendiculaire au plan d'impact. Ces dispositifs sont de ce fait inutilisables dans des applications CNDU industrielles telles que le contrôle de la face inférieure d'une coulée d'acier dans une aciérie, ou les vibrations sont importantes, et où la place verticale disponible est réduite.
c. Les dispositifs CNDU hybride TEMAs/Laser, de type agile et Transmetteurs Laser Agiles Matriciels (TLAM) (désignés par « Agile-Beam Laser Array Transmitters » ou ABLAT en anglais), de l'art antérieur sont à assemblage optique rotatif non monolithique. Ils nécessitent un grand nombre de pièces optiques/mécaniques non liées l'une à l'autre, et en mouvements de rotation indépendants. Ils nécessitent un grand nombre d'arbres rotatifs, et un grand nombre de moyens indépendants de mise en rotation de ces arbres rotatifs, de type moteur ou équivalent, qui sont généralement proportionnels au nombre de points d'impact laser. Ils sont de ce fait résonnant et sensibles aux vibrations. Ils sont couteux. Leur prix est sensiblement proportionnel au nombre de points d'impact laser. Du fait de leur nombre important de moteurs et d'arbres rotatifs à axes non colinéaires au faisceau laser entrant, ils sont encombrants dans le sens vertical au plan d'impact Laser, c'est-à-dire perpendiculairement à la zone de contrôle d'une pièce métallique. En outre leur assemblage optique rotatif non monolithique entraine des risques de démantèlement à haute vitesse de rotation; et donc, des risques de sécurité de non-protection contre les faisceaux laser à haute énergie qui pourraient être déviés accidentellement de leur trajectoire. En sorte que ces dispositifs ne sont ni techniquement, ni économiquement, ni en matière de sécurité, adaptés au contrôle CNDU de pièces métallurgiques dans un environnement industriel difficile. Ils sont en outre inutilisables pour des application industrielles à place disponible réduite, telles que le contrôle de la face inférieure d'une coulée d'acier dans une aciérie, ou la place verticale inférieure disponible entre les rouleaux d'appuis de la coulée en continu est très réduite.

L'art antérieur ne propose aucune solution technique efficace, sure et économique de configuration d'un dispositif CNDU pour équiper une machine-outil :
a. effectuant la scannographie en continu de pièces métalliques en milieu hostile, à place disponible réduite et à haut niveau de vibrations; et,
b. notamment, effectuant le contrôle qualité de brames d'acier de grandes sections, en vue de la détection et la caractérisation objective de leurs discontinuités de surface et de sous surface, lors de (ou après) leur coulée en continu en aciéries; ce,
c. avec un seul assemblage optique rotatif monolithique de pièces mécaniques et/ou optiques toutes rigidement liées entre elle, en rotation autour d'un seul axe de rotation, et,
d. dont l'assemblage optique rotatif est activé par un seul moteur d'entraînement;
e. dont les points d'impact des faisceaux laser secondaires sont alignés sur plusieurs lignes pointillées d'impacts distantes;
f. dont les spots d'impacts laser des faisceaux laser secondaires sont fins et rectangulaires; et orientés selon différents axes d'orientation, notamment perpendiculaires; et,
g. dont les transducteurs électromagnétiques acoustiques TEMA ont des orientations directionnelles privilégiées de capture des signaux induits ultrasoniques générés par les discontinuités, qui sont organisés géométriquement vis à vis de spots d'impacts laser rectangulaires orientés, pour assurer la détection et la qualification de discontinuités d'une pièce métallique, ayant des orientations principales quelconques de défauts, aussi bien longitudinales que transversales.

### Résumé de l'invention

En bref, un objet de cette invention est de fournir un nouveau Dispositif optique-électromagnétique-acoustique CNDU hybride TEMAs/Laser, comprenant un Assemblage Optique Rotatif monolithique de type TLAM (désigné par ABLAT en anglais), avec guidage agile multi-faisceaux-laser, pour équiper une Machine-Outil effectuant un contrôle qualité du travail des métaux, sur une Zone De Contrôle de la Surface d'une Pièce Métallique.

Le Dispositif selon l'invention est du type qui fonctionne par une combinaison :
a. d'un Process par Chocs effectué par faisceaux laser, générant des Chocs Laser sur la Zone De Contrôle, induisant des Vibrations Mécaniques dans le Corps de la Pièce Métallique, et,
b. d'un Monitorage, par des Transducteurs Électromagnétique Acoustique TEMA, des Signaux Induits ultrasoniques générés par l'interaction des Vibrations Mécaniques avec les Discontinuités De Surface et les Discontinuités De Sous-Surface dans le Corps de la Pièce Métallique, qui doivent être caractérisées.

L'invention concerne un Dispositif CNDU hybride TEMAs/Laser du type spécifique décrit ci après. Le Dispositif comprend:
a. un Arbre Rotatif;
b. une Source-Laser-Entrante;
c. un Assemblage-Optique-Rotatif;
d. des Moyens De Rotation;
e. un Ensemble Réflecteur monolithique; et,
f. un Ensemble Capteur.

L'Arbre Rotatif est capable de tourner autour de l'Axe De Rotation. La Source Laser Entrante est équipée de Moyens De Guidage Optique, configurés pour produire un Faisceau Laser Entrant avec une certaine Puissance Laser Entrante, dirigé le long d'un Axe De Faisceau Entrant parallèle à l'Axe De Rotation, ce à une certaine Distance De Faisceau de l'Axe De Rotation. L'Assemblage Optique Rotatif est configuré pour tourner autour de l'Axe de Rotation. Les Moyens De Rotation comprennent un Moteur D'Entraînement, connecté à l'Arbre Rotatif. Il est configuré pour induire sa rotation autour de l'Axe De Rotation, avec un Sens De Rotation continu, soit horaire continu soit anti-horaire continu. L'Ensemble-Réflecteur fait partie de l'Assemblage Optique Rotatif. Il est composé d'une pluralité (d' au moins deux) Miroirs agissant comme une Barrière-Optique.

Chacun des Miroirs est configuré pour que, dans certaines positions rotatives de l'Assemblage-Optique-Rotatif :
a. le Miroir intercepte l'Axe De Faisceau Entrant, et,
b. le Miroir présente un Point De Réflexion (i) positionné à une certaine Distance De Réflexion rotative perpendiculaire de l'Axe De Rotation, (ii) pour réfléchir le Faisceau Laser Entrant impacté sur ce Miroir (M), (iii) avec un changement de Direction Angulaire De Faisceau, et (iv) avec une Efficacité De Réflexion de l'énergie du Faisceau Laser Entrant sensiblement égale à cent pour cent.

L' Ensemble Capteur est composé d'une pluralité de (au moins deux) Transducteurs Électromagnétique Acoustique de type TEMA. Leur Sonde Électromagnétique Active fait face à la Zone De Contrôle et est sensiblement centrée sur un Point De Détection de la Zone De Contrôle. Chaque Sonde Électromagnétique Active est configurée pour générer un Signal A-Scan de détection de la position des Défauts versus temps/ distance, acquis à partir des Signaux Induits ultrasoniques au voisinage de son Point De Détection.

Le Dispositif de l'invention est du type comportant un Assemblage Optique Rotatif configuré géométriquement de telle sorte que, lorsque le Moteur D'Entraînement est activé :
a. Le Faisceau Laser Entrant impacte successivement un Point De Réflexion associé et appartenant à un de ses Miroirs distants.
b. Chacun des Points De Réflexion des Miroirs, parcourt un Cercle De-Rotation, d'un certain Rayon De Rotation, centré sur un Centre De Rotation fixe sur l'Axe De Rotation;
c. Les différents Miroirs redirigent de manière agile, successivement et de manière discontinue le Faisceau Laser Entrant selon une Collection Faisceaux Secondaires, faite d'un fagot de Faisceaux Laser Secondaires distants, issus d'une multitude de changements successifs et discontinus des Directions Angulaires De Faisceau du Faisceau Laser Entrant, par réflexion sur la succession des Miroirs distants et en rotation.
d. L' Assemblage Optique Rotatif et ses Miroirs sont configurés géométriquement de telle sorte les Faisceaux Laser Secondaires générés successivement impactent un Ensemble Impacts fait d'une multitude de Points-D'Impact distants, situés
   i. soit sur le Plan D'Impact faisant face à l'Assemblage Optique Rotatif, situé sur la Surface de la Zone De-Contrôle, et à proximité d'un Point De Détection d'un Transducteur Électromagnétique Acoustique TEMA, ou,
   ii. soit sur un Miroir Auxiliaire.

Le Dispositif de l'invention se caractérise par la combinaison technique différentiante de caractéristiques techniques combinées suivantes:
a. Son Assemblage Optique Rotatif, incluant ses Miroirs, leurs pièces mécaniques de connexion et ses Point De Réflexion associés, en rotation,
   i. est monolithique, c'est-à-dire constitué de pièces mécaniques et/ou optiques toutes rigidement mécaniquement liées entre elles et en position fixe non modifiable les unes par rapport aux autres;
   ii. est fixé rigidement par des Moyens De Fixation sur le même Arbre Rotatif; et
   iii. à une géométrie rigide indéformable au cours de sa rotation.
b. Les Miroirs de l' Ensemble Réflecteur et leurs Points De Réflexion associés, sont en position fixe par rapport au même Axe De Rotation, et sont mis en rotation synchronisée par le même Moteur D'Entraînement.
c. Pendant la mise en rotation de l'Assemblage Optique Rotatif par le Moteur-D'Entraînement :
   i. Les Distances De Réflexion rotatives des Points De Réflexion de tous les Miroirs, perpendiculairement et vis-à-vis de l' Axe De Rotation, sont toutes continument égales entre elles et sensiblement égales à la Distance De Faisceau.
   ii. Chacun des Points De Réflexion de tous les Miroirs, parcourt un Cercle De Rotation, centré sur l'Axe De Rotation,
      - chacun continument perpendiculaire à l'Axe-De-Rotation, et,
      - chacun ayant un Rayon De Rotation, constitué par sa Distance De-Réflexion, continument égal à la Distance De Faisceau.
   iii. Chacun des Cercles De Rotation :
      - présente une projection, parallèlement à un plan de projection parallèle à l' Axe De Rotation et passant par son Centre De Rotation, formée d'un Segment De Mouvement Transversal, perpendiculaire à l' Axe De-Rotation et centré sur son Centre De Rotation; et,
      - présente une projection, parallèlement à un plan de rotation perpendiculaire à l' Axe De Rotation et passant par son Centre De Rotation, formée d'un Cercle De Mouvement Projeté Planaire, confondu avec le Cercle De Rotation, et ayant un Rayon De Rotation Projetée, continument égal à la Distance De Faisceau.

### Solution technique

De manière simplifiée et synthétique, une des méthodes pour différentier, dans sa forme minimale, un Dispositif optique-électromagnétique-acoustique CNDU hybride TEMAs/Laser selon l'invention, vis-à-vis d'autres dispositif du même type de l'art antérieur, est de constater les critères combinés suivants :
a. Le Dispositif ne comporte qu'un seul Assemblage Optique Rotatif monolithique en mouvement rotatif.
b. Le Dispositif ne comporte qu'un seul Arbre Rotatif et un seul Axe De Rotation.
c. Son unique Assemblage Optique Rotatif est monolithique, c'est-à-dire constitué de pièces mécaniques et/ou optiques toutes rigidement liées entre elles.
d. Son unique Assemblage Optique Rotatif, et l'ensemble de toutes ses de pièces mécaniques et/ou optiques, est fixé rigidement sur le même Arbre Rotatif.
e. Les Distances De Réflexion de tous les Miroirs, perpendiculairement et vis-à-vis de l' Axe-De-Rotation, sont continuellement toutes égales entre elles.
f. Les Points De Réflexion de chacun de ses Miroirs rotatifs, parcourent chacun un Cercle De Rotation, centré sur l'Axe De Rotation, et continument perpendiculaire à l'Axe De Rotation.
g. Les Points De Réflexion de chacun de ses Miroirs rotatifs sont positionnés sur une Ligne Hélicoïdale Pointillée virtuelle rotative (i) à pas de vis cylindrique circulaire, et (ii) dont la position longitudinale est fixe longitudinalement vis-à-vis du seul Arbre Rotatif.
h. Tous les Miroirs de l' Assemblage Optique Rotatif sont entrainés en rotation synchronisée vis-à-vis du seul Axe De Rotation, à l'aide d'un seul Moteur D'Entraînement.

### Brève description des dessins

Ces caractéristiques, aspects et avantages de la présente invention, ainsi que d'autres, seront mieux compris lorsque la description détaillée suivante sera lue en référence aux dessins annexés, qui illustrent l'invention; dans lesquels des caractères identiques représentent des parties identiques sur l'ensemble des dessins.
[Fig.1] est une vue de face du Dispositif de l'invention, dans sa forme schématique.
[Fig.2] est une vue en perspective du Dispositif de l'invention, dans sa forme schématique.
[Fig.3] est une vue en perspective de la partie droite du Dispositif de l'invention, dans sa forme schématique.
[Fig.4] est une vue en perspective de la partie centrale du Dispositif de l'invention, dans sa forme schématique.
[Fig.5] est une vue partielle en perspective du Dispositif de l'invention, dans sa forme schématique, sur laquelle apparaissent les cercles de rotation, le cylindre virtuel de réflexion et la ligne hélicoïdale rotatifs, sur lesquels sont fixés les miroirs rotatifs.
[Fig.6] est une vue de face du Dispositif de l'invention, dans sa forme schématique, sur laquelle apparaissent les cercles de rotation, le cylindre virtuel de réflexion et la ligne hélicoïdale rotatifs, sur lesquels sont fixés les miroirs rotatifs.
[Fig.7] est vue partielle en perspective du Dispositif de l'invention, dans sa forme schématique, sur laquelle apparaissent un détail du cylindre virtuel de réflexion et de la ligne hélicoïdale rotatifs, sur lesquels sont fixés en rotation les miroirs rotatifs.
[Fig.8] est une vue partielle de face du Dispositif de l'invention, montrant un détail du cylindre virtuel de réflexion et de la ligne hélicoïdale rotatifs, sur laquelle apparait l'inclinaison angulaire des miroirs rotatifs.
[Fig.9] est une vue de gauche du Dispositif de l'invention, dans sa forme schématique.
[Fig.10] est vue simplifiée perspective du Dispositif de l'invention, dans une configuration incluant un assemblage monolithique de disques cylindriques rotatifs sur lesquels sont fixés ses miroirs rotatifs.
[Fig.11] est vue simplifiée de face du Dispositif de l'invention, dans une configuration incluant un assemblage monolithique de disques cylindriques rotatifs sur lesquels sont fixés ses miroirs rotatifs.
[Fig.12] est vue partielle en perspective du Dispositif de l'invention, ou apparait un détail d'une configuration incluant un assemblage monolithique de disques cylindriques rotatifs sur lesquels sont fixés ses miroirs rotatifs.
[Fig.13] est vue partielle en perspective grossie du Dispositif de l'invention, ou apparait un détail d'une configuration incluant un assemblage monolithique de disques cylindriques rotatifs sur lesquels sont fixés ses miroirs rotatifs, et de leurs configurations géométriques.
[Fig.14] est vue en perspective du Dispositif de l'invention, ou apparait une configuration incluant un premier assemblage de rigidification, fait de tubes rigides évidés amont, disposés selon un cylindre de rigidification.
[Fig.15] est vue en perspective du Dispositif de l'invention, ou apparait une configuration incluant un premier assemblage de rigidification, fait de tubes rigides évidés amont, disposés selon un cylindre de rigidification, emboités à la périphérie d'un assemblage monolithique de disques cylindriques rotatifs, sur lesquels sont fixés ses miroirs rotatifs.
[Fig.16] est vue en perspective partielle du Dispositif de l'invention, ou apparait un détail grossi d' une configuration incluant un premier assemblage de rigidification fait de tubes rigides évidés amont, disposés selon un cylindre de rigidification, emboités à la périphérie d'un assemblage monolithique de disques cylindriques rotatifs sur lesquels sont fixés ses miroirs rotatifs.
[Fig.17] est vue en perspective du Dispositif de l'invention, ou apparait une configuration incluant un second assemblage de rigidification, fait de tubes rigides évidés avals, disposés selon un cylindre de rigidification.
[Fig.18] est vue en perspective du Dispositif de l'invention, ou apparait une configuration incluant un premier assemblage de rigidification fait de tubes rigides évidés amont, et un second assemblage de rigidification fait de tubes rigides évidés avals, tous deux disposés selon un cylindre de rigidification et emboités à la périphérie d'un assemblage monolithique de disques cylindriques rotatifs sur lesquels sont fixés ses miroirs rotatifs.
[Fig.19] est vue en perspective partielle grossie d'un détail de la configuration représentée [Fig.18], ou apparait le positionnement relatif du premier et du second assemblages de rigidification vis-à-vis des miroirs rotatifs.
[Fig.20] est vue en perspective du Dispositif de l'invention, ou apparait une configuration incluant un assemblage de focalisation fait de lentilles de focalisation.
[Fig.21] est vue en perspective partielle du Dispositif de l'invention, ou apparait une configuration incluant un assemblage de focalisation fait de lentilles de focalisation cylindriques.
[Fig.22] est vue en perspective du Dispositif de l'invention, ou apparait une configuration incluant un assemblage de focalisation fait de lentilles de focalisation cylindriques, et un ensemble réflecteur auxiliaire.
[Fig.23] est vue en perspective partielle grossie d'un détail de l' ensemble réflecteur auxiliaire de la configuration du Dispositif représenté [Fig.22].
[Fig.24] est vue en perspective partielle du Dispositif de l'invention, ou apparait une configuration incluant un assemblage de focalisation fait de lentilles de focalisation cylindriques, et un ensemble réflecteur auxiliaire, montrant la configuration géométrique des faisceaux laser secondaires et secondaires déviés générés.
[Fig.25] est vue en perspective du Dispositif de l'invention, ou apparait une configuration incluant un assemblage de focalisation fait de lentilles de focalisation cylindriques, et un ensemble réflecteur auxiliaire, montrant la configuration géométrique des faisceaux laser secondaires et secondaires déviés générés, impactant 3 lignes pointillées parallèles d'impacts laser.
[Fig.26] est vue en perspective du Dispositif de l'invention, ou apparait une configuration incluant un assemblage de focalisation fait de lentilles de focalisation cylindriques, et un ensemble réflecteur auxiliaire, montrant la configuration géométrique des faisceaux secondaires et secondaires déviés générés, impactant 3 lignes pointillées parallèles d'impacts laser rectangulaires longitudinaux et transversaux.
[Fig.27] est vue en perspective du Dispositif de l'invention, ou apparait une configuration incluant un assemblage de focalisation fait de lentilles de focalisation cylindriques, et un ensemble réflecteur auxiliaire, montrant la configuration géométrique des faisceaux laser secondaires et secondaires déviés générés, impactant 3 lignes pointillées parallèles d' impacts laser rectangulaires longitudinaux et transversaux, et la configuration géométrique optimale de TEMAs directionnels pour détecter des défauts longitudinaux et transversaux.
[Fig.28] est vue en perspective partielle du Dispositif de l'invention, ou apparait une configuration incluant des moyens de gestion de la position angulaire des miroirs rotatifs.
[Fig.29] est vue en perspective globale du Dispositif de l'invention.
[Fig.30] est vue en perspective globale d'une Machine-Outil équipée de deux Dispositifs de l'invention, pour effectuer un contrôle qualité de la face supérieure et inférieure de brames d'acier, pendant ou après leur coulée en continu.

### Description des modes de réalisation

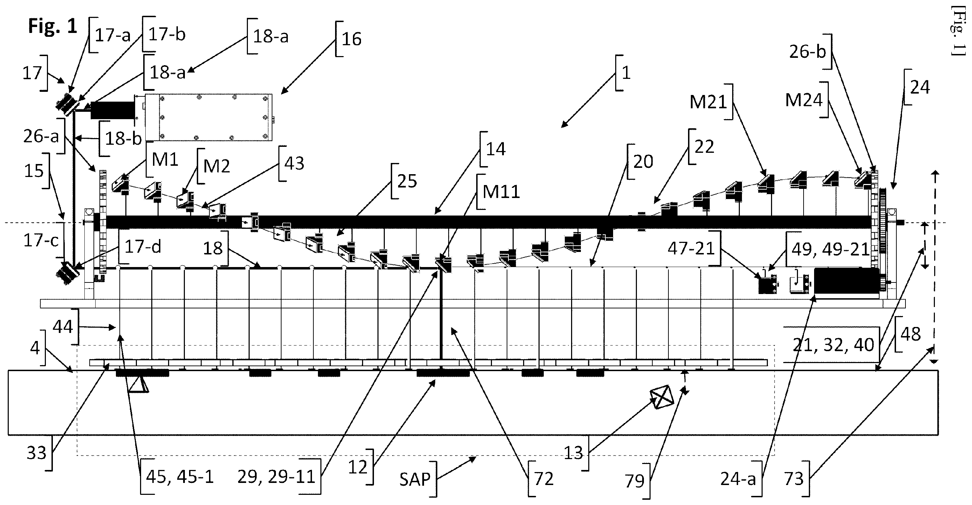

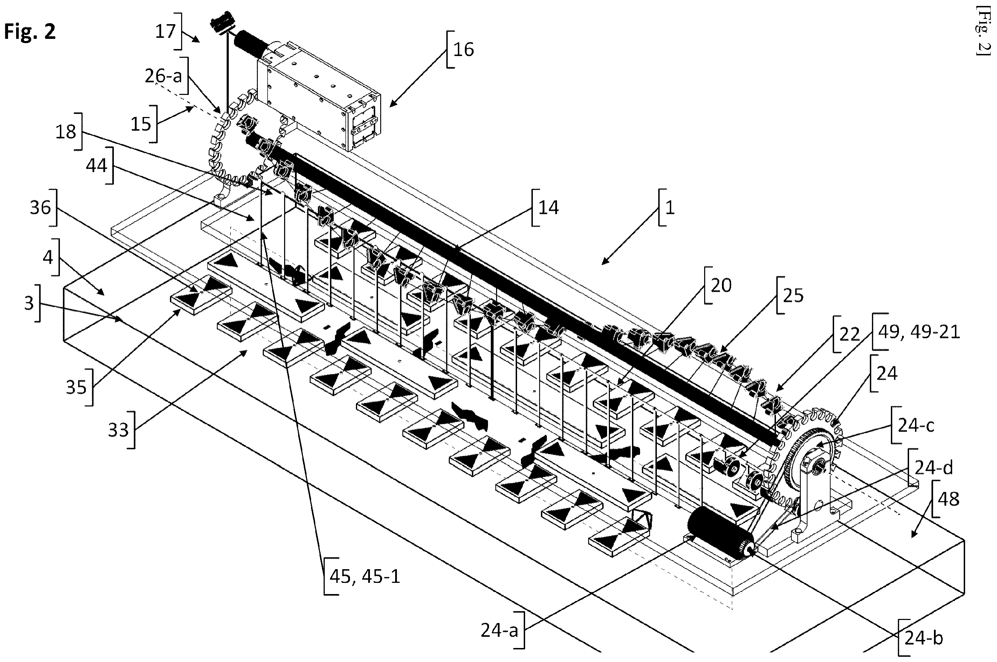

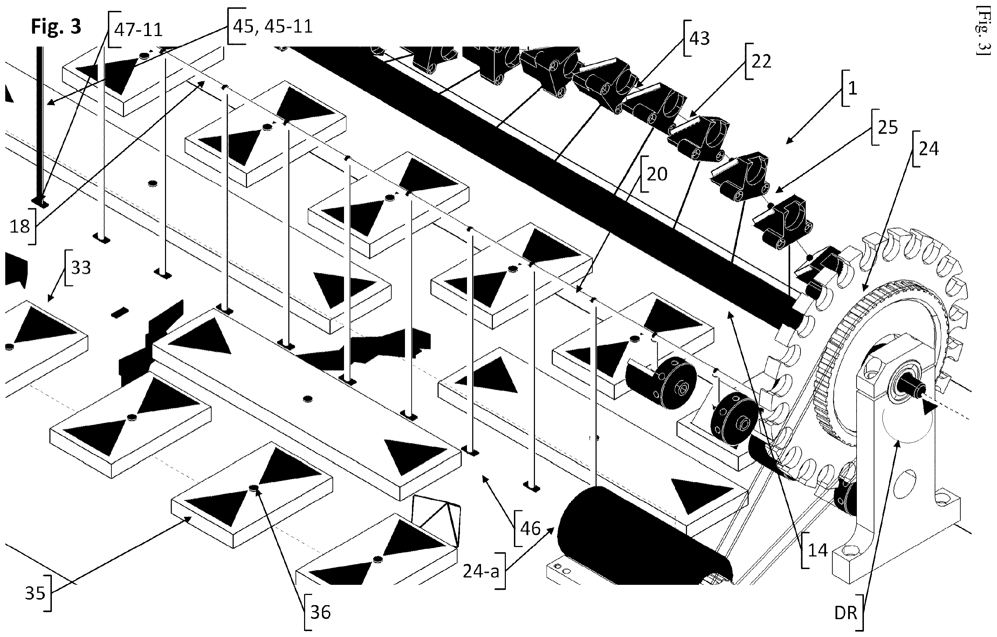

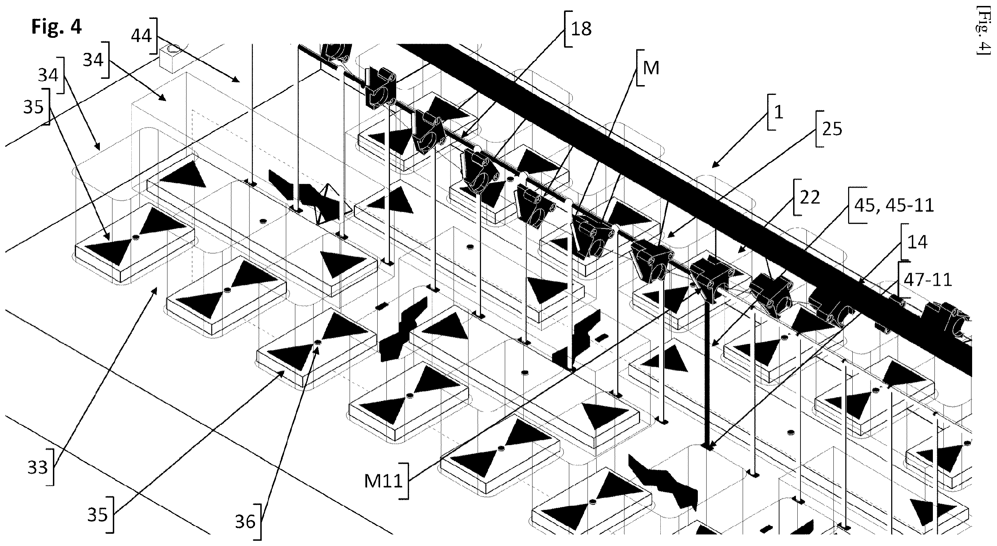

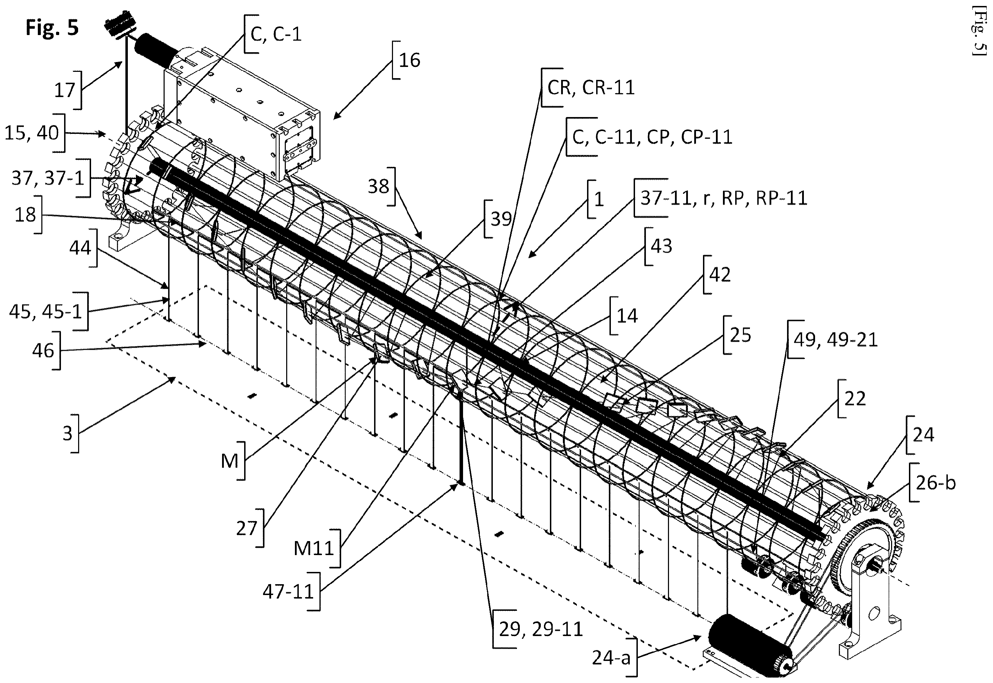

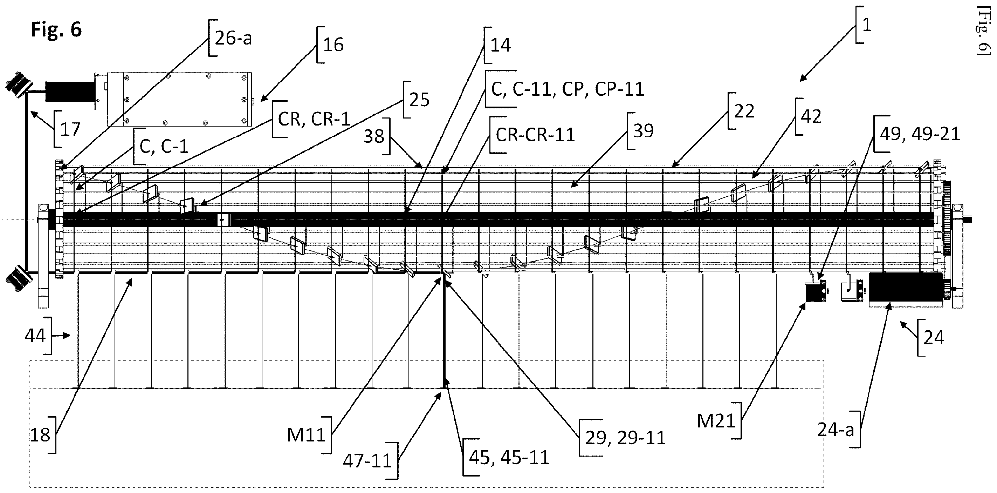

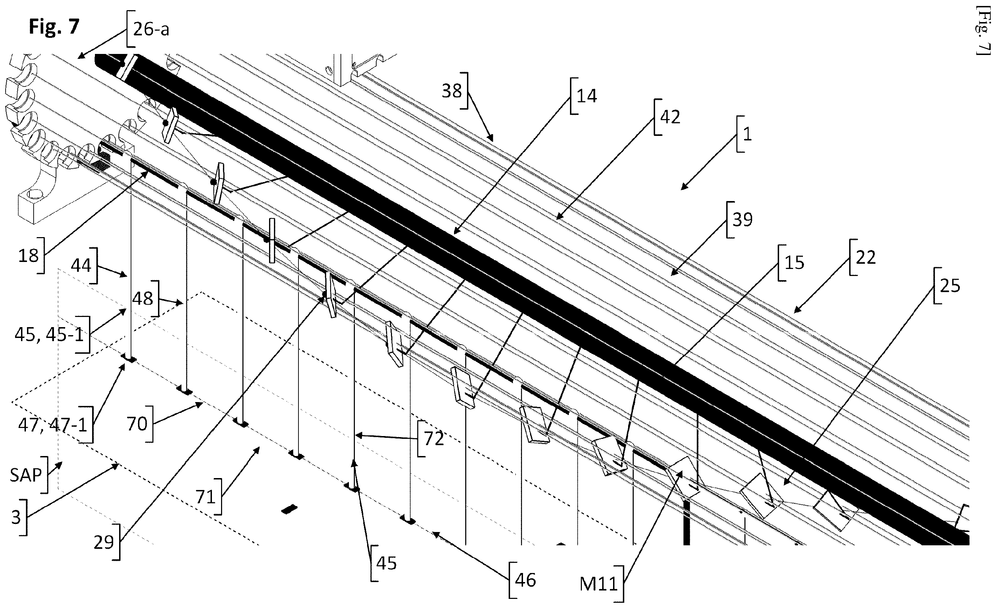

En référence aux figures [Fig.1], [Fig.2], [Fig.3], [Fig.4], [Fig.5], [Fig.6], et [Fig.7], on voit un Dispositif (1) optique-électromagnétique-acoustique CNDU hybride TEMAs/Laser, comprenant un Assemblage-Optique-Rotatif (22) monolithique de type TLAM (désigné par ABLAT en anglais). L' Assemblage-Optique-Rotatif (22) réalise un guidage agile-multi-faisceaux-laser, pour une Machine-Outil (2) effectuant un contrôle qualité du traitement de métaux, sur une Zone-De-Contrôle (3) de la Surface (4) d'une Pièce-Métallique (5).

On constate que le Dispositif (1) comprend : un Arbre-Rotatif (14); une Source-Laser-Entrante (16); un Assemblage-Optique-Rotatif (22); des Moyens-De-Rotation (24) de l'Assemblage-Optique-Rotatif (22); un Ensemble-Réflecteur (25) faisant partie de l'Assemblage-Optique-Rotatif (22); et un Ensemble-Capteur (33).

L' Arbre-Rotatif (14) est capable de tourner autour d'un Axe-De-Rotation (15). La Source-Laser-Entrante (16) est équipée de Moyens-De-Guidage-Optique (17), configurés pour produire un Faisceau-Laser-Entrant (18), avec une certaine Puissance-Laser-Entrante (PI), dirigé le long de l'Axe-De-Faisceau-Entrant (20) parallèle à l'Axe-De-Rotation (15), ce à une certaine Distance-De-Faisceau (21) de l'Axe-De-Rotation (15). Les Moyens-De-Guidage-Optique (17) comportent un Assemblage-De-Réflexion-Angulaire-Réglable-Primaire (17-a), équipé d'un Miroir-Angulairement-Réglable-Primaire (17-b), et un Assemblage-De-Réflexion-Angulaire-Réglable-Secondaire (17-c), équipé d'un Miroir-Angulairement-Réglable-Secondaire (17-d). La Source-Laser-Entrante (16) émet un Faisceau-Laser-Primaire (18-a), réfléchi d'un angle de 90° sur le Miroir-Angulairement-Réglable-Primaire (17-b), en un Faisceau-Laser-Secondaire (18-b). Le Faisceau-Laser-Secondaire (18-b) est ensuite réfléchi d'un angle de 90° sur le Miroir-Angulairement-Réglable-Secondaire (17-d), et donne naissance au Faisceau-Laser-Entrant (18).

L' Assemblage-Optique-Rotatif (22) est configuré pour tourner autour de l'Axe-De-Rotation (15). Les Moyens-De-Rotation (24) comprennent un Moteur-D'Entraînement (24-a), connecté à l'Arbre-Rotatif (14); une Roue-Dentée-D'Entrainement (24-b) fixée sur l'arbre du moteur; une Roue-Dentée-De-Rotation (24-c) fixée sur l'Arbre-Rotatif (14); et une Courroie (24-d) reliant les deux roues dentées pour transmettre le mouvement rotatif. Le Moteur-D'Entraînement (24-a) est configuré pour induire une rotation de l'Arbre-Rotatif (14) autour de l'Axe-De-Rotation (15), avec un Sens-De-Rotation (DR) continu, soit horaire continu soit anti-horaire continu.

L' Ensemble-Réflecteur (25) fait partie de l'Assemblage-Optique-Rotatif (22). Il est composé d'une pluralité de n = 24 Miroirs (M, M1, M2, ..., M11, M21, ..., M24) agissant comme une Barrière-Optique (27). Chacun des Miroirs (M) est configuré pour que, dans certaines positions rotatives de l'Assemblage-Optique-Rotatif (22), un des Miroir (M, M11) intercepte l'Axe-De-Faisceau-Entrant (20). Chaque Miroir (M) présente un Point-De-Réflexion (29, 29-11) (i) positionné à une certaine Distance-De-Réflexion (32) rotative perpendiculaire de l'Axe-De-Rotation (15), (ii) pour réfléchir le Faisceau-Laser-Entrant (18) impacté sur ce Miroir (M), (iii) avec un changement de Direction-Angulaire-De-Faisceau (A), et (iv) avec une Efficacité-De-Réflexion (E) de l'énergie du Faisceau-Laser-Entrant (18) sensiblement égale à cent pour cent.

L' Ensemble-Capteur (33) est composé de p = 25 Transducteurs-Electromagnétique-Acoustique (34) du type TEMA ou équivalent, ci après désignés par TEMAs. Leur Sonde-Électromagnétique-Active (35) fait face à la Zone-De-Contrôle (3). Chaque Sonde-Electromagnétique-Active (35) est sensiblement centrée sur un Point-De-Détection (36) de la Zone-De-Contrôle (3). Elle est configurée pour générer un Signal-A-Scan (AS) de détection de la position des Défauts (12, 13) versus temps/ distance, acquis à partir des Signaux-Induits (11) ultrasonique au voisinage de son Point-De-Détection (36).

On constate que l'Assemblage-Optique-Rotatif (22) est configuré pour présenter en outre les particularités techniques suivantes :
a. Lorsque le Moteur-D'Entraînement (24-a) est activé, le Faisceau-Laser-Entrant (18) impacte successivement un des 24 Point-De-Réflexion (29, 29-11) associé et appartenant à un de ses 24 Miroirs (M, M11) distants.
b. Les 24 différents Miroirs (M, M1, M2, ..., M11, M21, ..., M24) redirigent de manière agile, successivement et de manière discontinue le Faisceau-Laser-Entrant (18) selon une Collection-Faisceaux-Secondaires (44), faite d'un fagot de 24 Faisceaux-Laser-Secondaires (45, 45-1, ..., 45-11, ..., 45-24) distants, issus d'une multitude de 24 changements successifs et discontinus des Directions-Angulaire-De-Faisceau (A) du Faisceau-Laser-Entrant (18); ce par réflexion sur la succession des 24 Miroirs (M) distants et en rotation.
c. L' Assemblage-Optique-Rotatif (22) et ses 24 Miroirs (M) sont configurés géométriquement de telle sorte que lorsque le Moteur-D'Entraînement (24-a) est activé, les 24 Faisceaux-Laser-Secondaires (45, 45-1, ..., 45-11, ..., 45-24), générés successivement, impactent un Ensemble-Impacts (46) fait d'une multitude de n = 24 Points-D'Impact (47, 47-1, ..., 47-11..., 47-21, ..., 47-24) distants. Ils sont situés : soit (i) pour les 20 premiers, sur le Plan-D'Impact (48) faisant face à l'Assemblage-Optique-Rotatif (22), situé sur la Surface (4) de la Zone-De-Contrôle (3), et à proximité d'un Point-De-Détection (36) d'un Transducteur-Électromagnétique-Acoustique TEMA (34), ou,(ii) soit, pour les quatre suivants, sur un Miroir-Auxiliaire (49, 49-21, ..., 49-24).

On voit que le Dispositif (1) présente la combinaison nouvelle de caractéristiques techniques suivantes:
a. Son Assemblage-Optique-Rotatif (22) incluant ses 24 Miroirs (M), leurs pièces mécaniques de connexion et ses 24 Point-De-Réflexion (29, 29-11) associés, en rotation, est monolithique. C'est-à-dire qu'il est constitué de pièces mécaniques et optiques toutes rigidement liées entre elles, et en position fixe non modifiables les unes par rapport aux autres. Il est fixé rigidement par des Moyens-De-Fixation (23) sur le même Arbre-Rotatif (14). Il à une géométrie rigide indéformable au cours de sa rotation.
b. Les n = 24 Miroirs (M) de l' Ensemble-Réflecteur (25), faisant partie de l'Assemblage-Optique-Rotatif (22) monolithique, sont rigidement liés en positions fixes relatives, l'un par rapport à l'autre et vis-à-vis du même Arbre-Rotatif (14).
c. Les n = 24 Miroirs (M) de l' Ensemble-Réflecteur (25) et leurs 24 Points-De-Réflexion (29, 29-11) associés, sont en position fixe par rapport au même unique Axe-De-Rotation (15). Ils sont mis en rotation synchronisée par le même unique Moteur-D'Entraînement (24-a).

En référence aux figures [Fig.5] et [Fig.6], on voit que les Distances-De-Réflexion (32) rotatives des 24 Points-De-Réflexion (29, 29-11) des 24 Miroirs (M), perpendiculairement et vis-à-vis de l' Axe-De-Rotation (15), sont toutes continument égales entre elles, et sensiblement égales à la Distance-De-Faisceau (21). On voit également que chacun des 24 Points-De-Réflexion (29, 29-11) de tous les 24 Miroirs (M), parcourt un Cercle-De-Rotation (C, C-1, ..., C-11, ...), centré sur l'Axe-De-Rotation (15). Chacun de ces 24 Cercle-De-Rotation (C) est centré sur et continument perpendiculaire à l'Axe-De-Rotation (15). Chacun des 24 Cercles-De-Rotation (C) présente une projection, parallèlement à un plan de projection parallèle à l' Axe-De-Rotation (15) et passant par son Centre-De-Rotation (CR, CR-1, ... , CR-11, ...), formée d'un Segment-De-Mouvement-Transversal (ST, ST-1, ..., ST-11, ...), perpendiculaire à l' Axe-De-Rotation (15) et centré sur son Centre-De-Rotation (CR). De plus, chacun de ces 24 Cercles-De-Rotation (C) présente une projection, parallèlement à un plan de rotation perpendiculaire à l' Axe-De-Rotation (15) et passant par son Centre-De-Rotation (CR, CR-1, ..., CR-11, ...), formée d'un Cercle-De-Mouvement-Projeté-Planaire (CP, CP-1, ..., CP-11, ...), confondu avec le Cercle-De-Rotation (C), et ayant un Rayon-De-Rotation-Projetée (RP, RP-1, ..., RP-11, ...), continument égal à la Distance-De-Faisceau (21).

On voit que le Dispositif (1) présente les propriétés géométriques suivantes :
a. Chacun des 24 Point-De-Réflexion (29) des Miroir (M) est positionné de manière fixe vis à vis d'une même Surface-Cylindrique-De-Réflexion (38) rotative d'un Cylindre-Virtuel-De-Réflexion (39) de révolution et rotatif, en rotation autour de l'Axe-De-Rotation (15), à section circulaire constante. Il s'étend sur toute la longueur de l' Assemblage-Optique-Rotatif (22), entre deux Flancs (26-a, 26-b) circulaires latéraux qui lui sont liés.
b. Le Rayon-De-Cylindre-De-Réflexion (41) du Cylindre-Virtuel-De-Réflexion (39) est constant et sensiblement égal aux Rayons-De-Rotation (37, 37-1, ..., 37-11...) de chacun des 24 Cercle-De-Rotation (C, C-1, ..., C-11, ...), et, à la Distance-De-Faisceau (21).
c. La section transversale du Cylindre-Virtuel-De-Réflexion (39) de révolution et de sa Surface-Cylindrique-De-Réflexion (38) rotative est constamment circulaire.
d. La position longitudinale du Cylindre-Virtuel-De-Réflexion (39) est fixe vis-à-vis de l'Arbre-Rotatif (14), c'est-à-dire sans aucun déplacement longitudinal vis-à-vis de l'axe Axe-De-Rotation (15), quand le Moteur-D'Entraînement (24-a) est activé.
e. Les 24 Points-De-Réflexion (29) de chacun des 24 Miroirs (M) sont positionnés sur une Ligne-Hélicoïdale-Pointillée (43) rotative, à enroulement hélicoïdal circulaire, de rayon égal à la Distance-De-Faisceau (21), et à pas de vis cylindrique circulaire.
f. La Ligne-Hélicoïdale-Pointillée (43) est fixe ainsi que ses points sur la Surface-Cylindrique-De-Réflexion (38), et en rotation avec elle. Mais, sa position longitudinale est fixe vis-à-vis de l'Arbre-Rotatif (14), c'est-à-dire sans aucun déplacement longitudinal vis-à-vis de l'Axe-De-Rotation (15), quand le Moteur-D'Entraînement (24-a) est activé.
g. Lorsque le Moteur-D'Entraînement (24-a) est activé, le Faisceau-Laser-Entrant (18) est continument positionné sensiblement le long de 24 Lignes-Génératrices-De-Réflexion (42) rectilignes successives de la Surface-Cylindrique-De-Réflexion (38) rotative, attachées chacune à un Point-De-Réflexion (29) d'un des 24 Miroirs (M). Chaque Ligne-Génératrice-De-Réflexion se déplace en rotation avec le Cylindre-Virtuel-De-Réflexion (39), mais sans déplacement longitudinal vis-à-vis de l'Axe-De-Rotation (15).

On considère un Système-De-Coordonnées-Cylindriques (CCS), non représenté sur les figures, et défini de la manière suivante. L'Axe-Cylindrique-Polaire (52) coïncide avec l'Axe-De-Rotation (15). Le Plan-De-Référence (53) est un plan de rotation de référence perpendiculaire à l'Axe-De-Rotation (15) et le coupant à un certain Point-D'Origine (O) de référence. Alors, les Distances-Angulaires-Polaires (Dθ) entre les Coordonnées-Angulaires (θ) de deux Points-De-Réflexion (29) successifs de la Ligne-Hélicoïdale-Pointillée (43), joignant tous les Points-De-Réflexion (29) et à enroulement circulaire, sont positives et constantes. Les Distances-Cylindriques (r) des Points-De-Réflexion (29) sont constantes et toutes égales à la Distance-De-Faisceau (21). Le Pas-De-Vis (57) cylindrique circulaire de la Ligne-Hélicoïdale-Pointillée (43) est positif et constant.

Les Distances-Angulaires-Polaires (Dθ) constantes sont sensiblement égales à 360° divisé par le Nombre-De-Miroirs (n = 24). Dθ = 360° / 24 = 15°. En sorte que dans le Système-De-Coordonnées-Cylindriques (CCS), la Longueur-Globale-De-Réflexion (Z), constituée de la différence entre les Hauteurs (z1, zn) des deux Miroirs-Extrémaux (M1, Mn) les plus éloignés de l'Assemblage-Optique-Rotatif (22), est sensiblement égale au Pas-De-Vis (57) de la Ligne-Hélicoïdale-Pointillée (43). Ainsi, l'Ensemble-Réflecteur (25) présente un Spectre-Angulaire (AS) de Coordonnées-Angulaires (θ) couvrant sensiblement 360° = 24 x 15°.

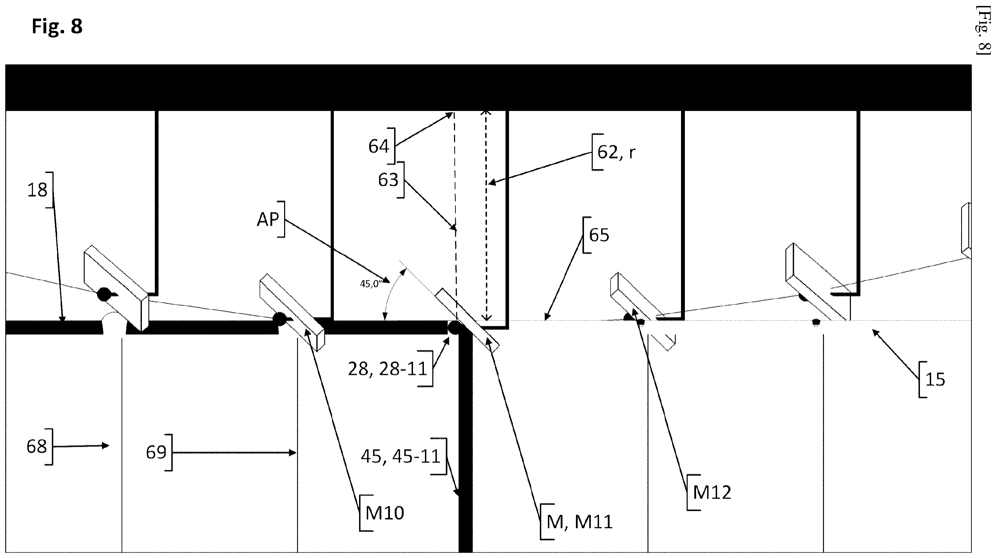

En référence à la figure [Fig.8], on considère, pour chacun des 24 Miroirs (M, M11), son Segment-Radial (63) joignant son Point-De-Réflexion (28) à son Point-De-Projection (64) sur l'Axe-De-Rotation (15). On voit que pour chaque Miroir (M, M11), et vis-à-vis de son Plan-D'Orientation (65) passant par le Point-De-Réflexion (29, 29-11) et perpendiculaire au Segment-Radial (63); le Segment-Radial (63) a une Longueur-Radiale (62) constante égale à la Distance-De-Faisceau (21).L'Angle-De-Roulis (AR) rotatif est nul à 0°. L'Angle-De-Tangage (AP) rotatif est le même pour tous les 24 Miroirs (M). Et, la position longitudinale du Point-De-Projection (64) de chaque Segment-Radial (63) est fixe selon l'Axe-De-Rotation (15) et vis-à-vis de l'Arbre-Rotatif (14). En sorte que les 24 Faisceaux-Laser-Secondaires (45, 45-11, ...) sont tous parallèles et disposés selon le même Plan-De-Faisceaux-Secondaires (68), passant par l'Axe-De-Rotation (15) et perpendiculaires au Plan-D'Impact (48). Et ils sont disposés selon un Réseau-Plan-De-Faisceaux-Secondaires (69).

En outre, on constate que l'Angle-De-Tangage (AP) rotatif de chaque Miroir (M) est sensiblement continument égal à 45°. Et, la Zone-De-Contrôle (3) et le Plan-D'Impact (48) sont parallèles à l'Axe-De-Rotation (15).

En référence à la figure [Fig.7], on voit que les 20 premiers Points-D'Impact (47, 47-1) de la Zone-De-Contrôle (3) sont alignés sur une Ligne-Pointillée-D'Impact (70) rectiligne du Plan-D'Impact (48). Ils sont distants d'une certaine Distance-D'Impacts (71) entre deux Points-D'impact (47) adjacents.

En référence à la figure [Fig.1], on voit qu'ainsi les 24 Faisceaux-Laser-Secondaires (45) sont chacun perpendiculaires au Plan-D'Impact (48). La Longueur-Secondaire (72) de chacun des 24 Faisceaux-Laser-Secondaires (45), et donc la Dimension-Verticale (73) de l'Assemblage-Optique-Rotatif (22) sont minimisées.

Selon une disposition préférée de l'invention, non représentée sur les figures, le Dispositif (1) est équipé d'un Processeur-B-Scan (BSP) numérique, connecté aux 26 Transducteurs-Électromagnétique-Acoustique TEMA (34). Il est configuré pour traiter et combiner les informations de leurs Signaux-A-Scan (AS) de détection. Le Processeur-B-Scan (BSP) génère une Présentation-B-Scan (75) numérique bidimensionnelle d'une section de la Pièce-Métallique (5), dans un Plan-De-B-Scannographie (SAP) sensiblement confondu avec le Plan-De-Faisceaux-Secondaires (68) vertical, perpendiculaire au Plan-D'Impact (48) de la Zone-De-Contrôle (3) de Pièce-Métallique (5), sensiblement le long de la Ligne-De-Détection (77) joignant la Ligne-Pointillée-D'Impact (70) . La Présentation-B-Scan (75) représente les Positions-Numériques (78) vis-à-vis de la Profondeur (79) des Discontinuités (12, 13) dans le Plan-De-B-Scannographie (SAP).

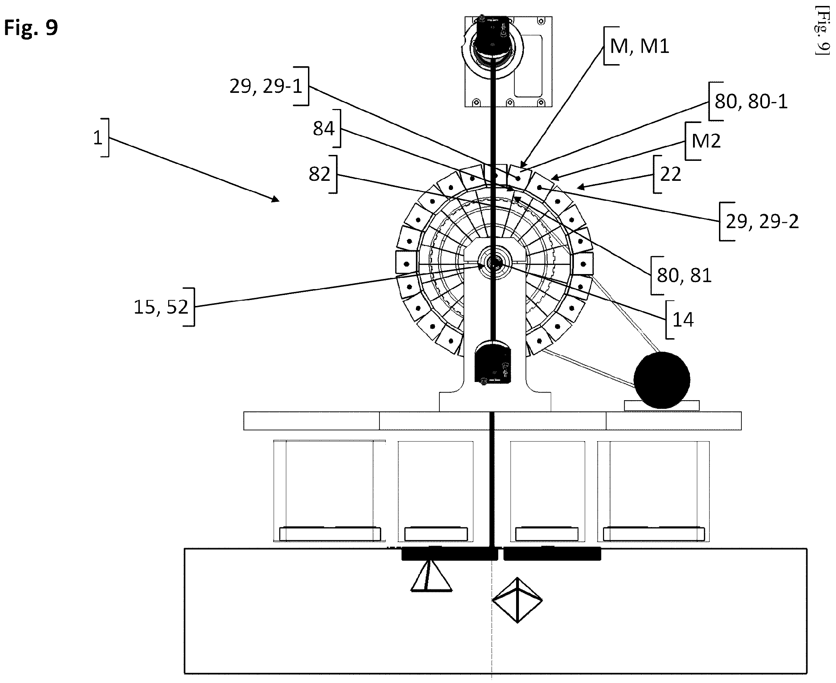

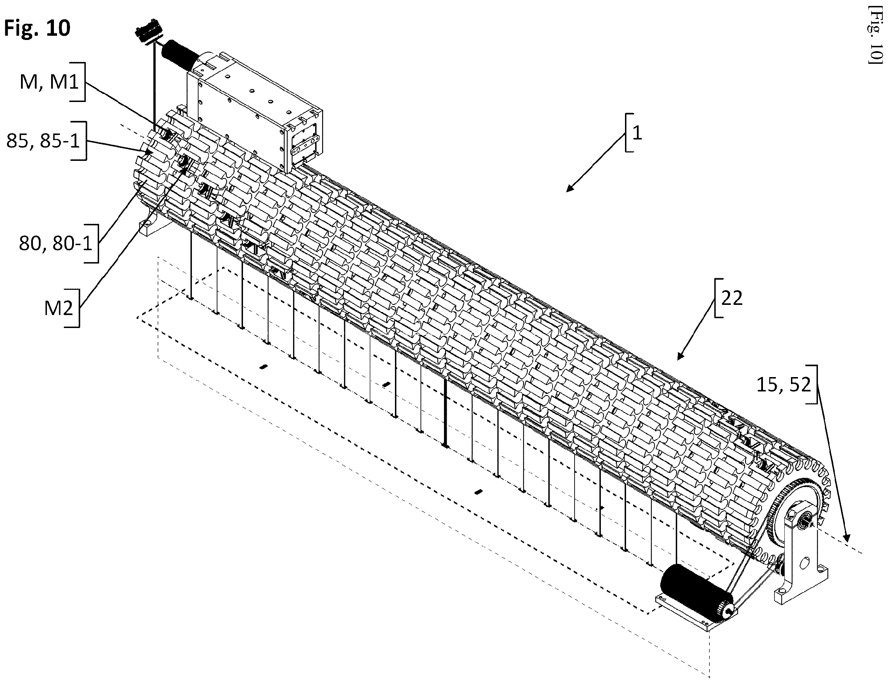

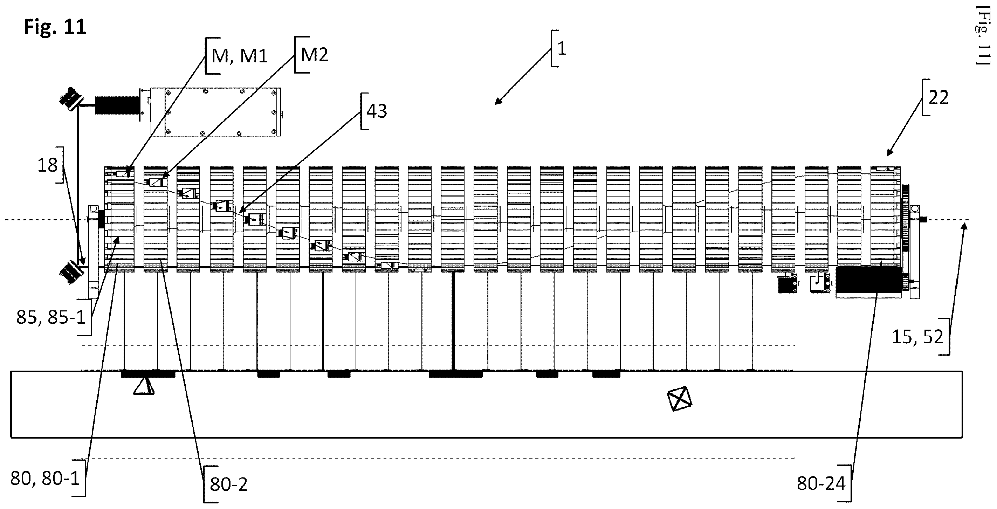

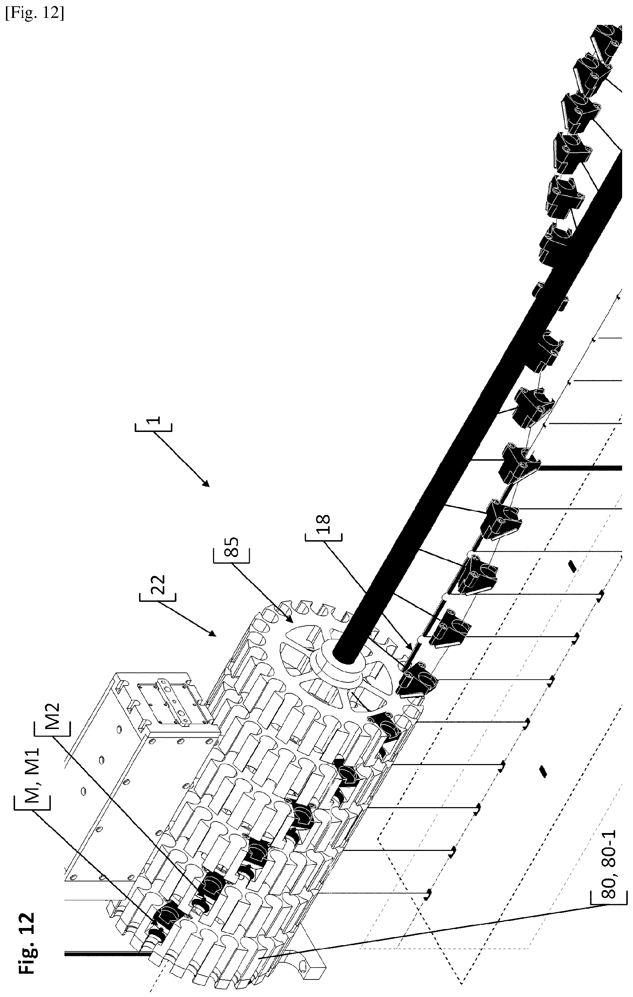

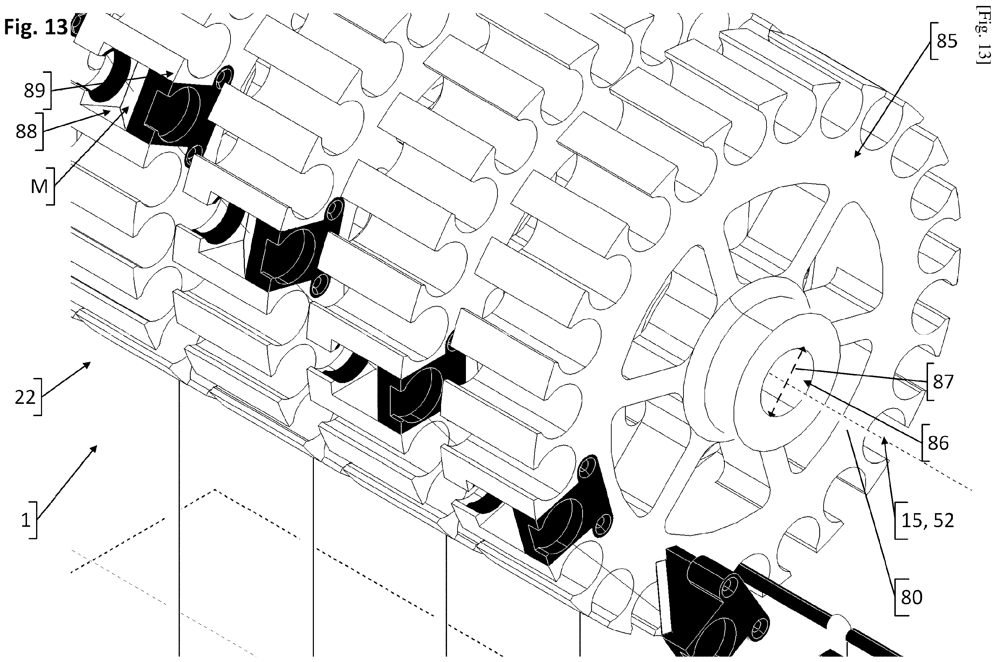

En référence aux figures[Fig.9], [Fig.10], [Fig.11], [Fig.12], et [Fig.13], on voit une configuration préférée par l'invention de l' Assemblage-Optique-Rotatif (22) du Dispositif (1). L' Assemblage-Optique-Rotatif (22) est constitué d'un assemblage mécanique de 24 Sections-Support (80) géométriquement identiques. Elles sont disposées cote à cote selon l'Axe-De-Rotation (15). Un Miroir (M, M1, M2) est fixé sur chacune des 24 Sections-Support (80, 80-1, 80-24). On voit que, dans un Système-De-Coordonnées-Cylindriques (CCS), dont l'Axe-Cylindrique-Polaire (52) coïncide avec l'Axe-De-Rotation (15), deux Sections-Support (80, 80-1, 80-2) adjacentes équipées de leur Miroir (M, M1, M2), sont en position pivotées, l'une par rapport à l'autre, perpendiculairement à l'Axe-De-Rotation (15), d'une Distance-Angulaire-Polaire (Dθ) de 15° entre deux Points-De-Réflexion (29, 29-1, 29-2) successifs appartenant à leurs Miroirs (M, M-1, M-2) respectifs de la Ligne-Hélicoïdale-Pointillée (43).

En référence à la figure [Fig.9], on voit une première variante de configuration préférée de son Assemblage-Optique-Rotatif (22) du Dispositif (1). Ses 24 Sections-Support (80) ont chacune la forme d'une Poutre-Support (81) allongée, dont l'Axe-Support (82) intersecte l'Axe-De-Rotation (15). Chacune des 24 Poutres-Support (81) est fixée à l'Arbre-Rotatif (14) par un Moyen-De-Fixation (83). Un Miroir (M, M1) est fixé sur une Extrémité-Support (84) de chacune des 24 Poutres-Support (81).

En référence aux figures [Fig.10], [Fig.11], [Fig.12], et [Fig.13], on voit une deuxième variante de configuration préférée de l'Assemblage-Optique-Rotatif (22) du Dispositif (1). Ses 24 Sections-Support (80) ont chacune la forme d'un Disque-Support (85, 85-1) de forme cylindrique plate. Chaque Disque-Support (85) est percé d'un Trou-De-Fixation (86), ménagé perpendiculairement et en son centre. Son Diamètre-De-Trou (87) est sensiblement égal au diamètre de l'Arbre-Rotatif (14). Les 24 Disques-Support (85) sont enchâssés cote à cote sur et le long de l'Axe-De-Rotation (15) par leur Trou-De-Fixation (86) le long et perpendiculairement à l'Axe-De-Rotation (15). Chaque Disque-Support (85) est muni d'un Logement-Support (88), ménagé sur sa Périphérie-De-Disque (89), sur lequel est fixé son Miroir (M).

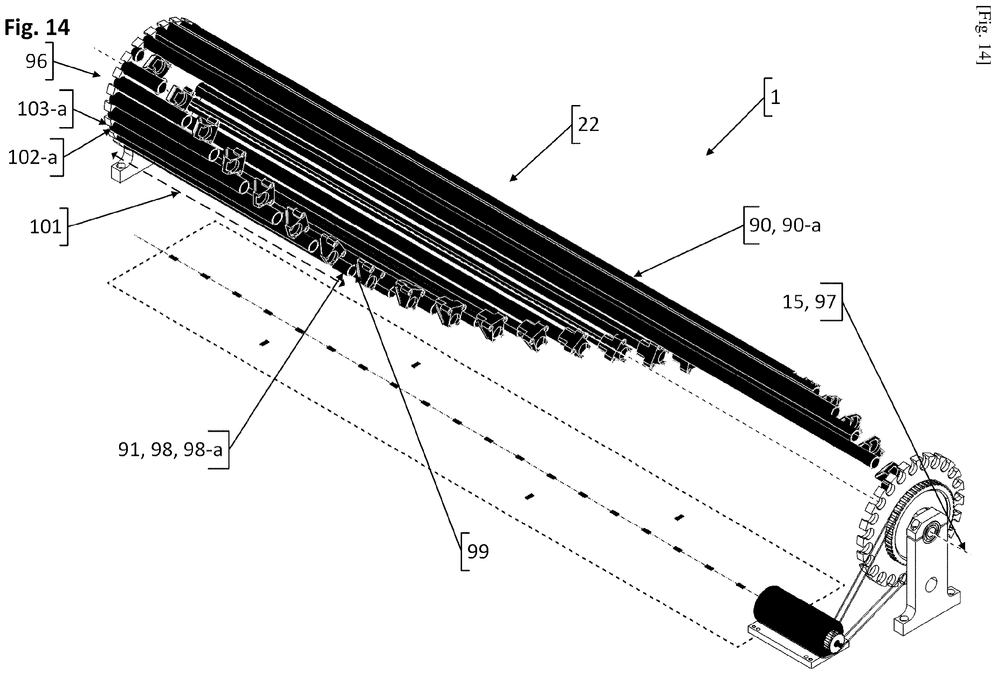

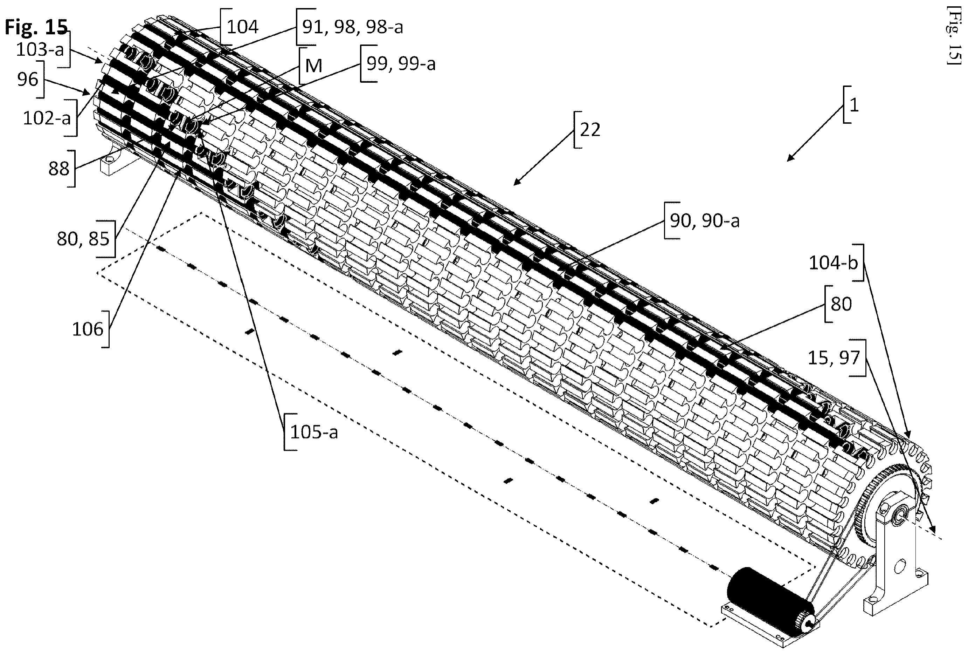

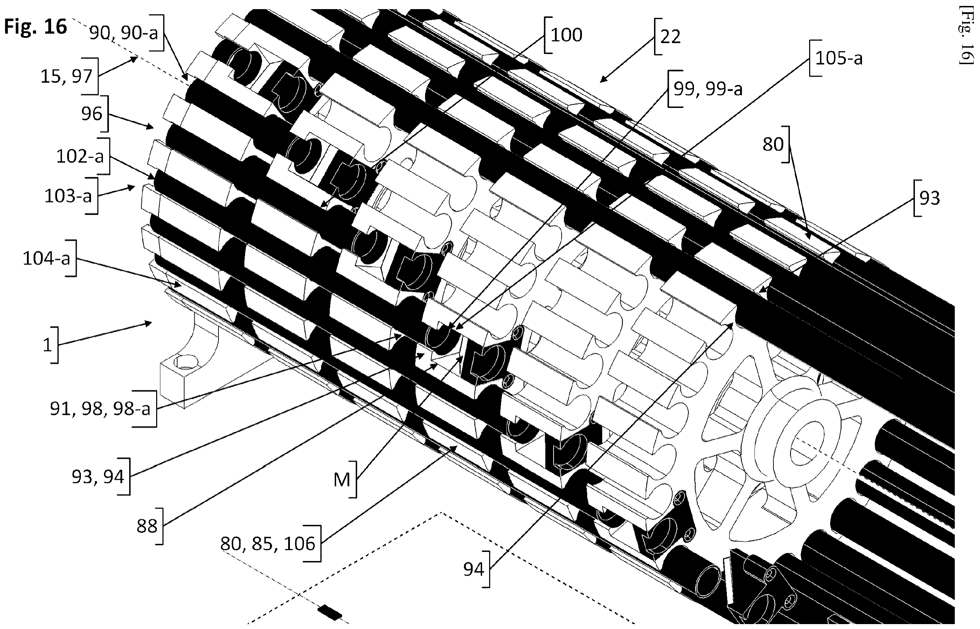

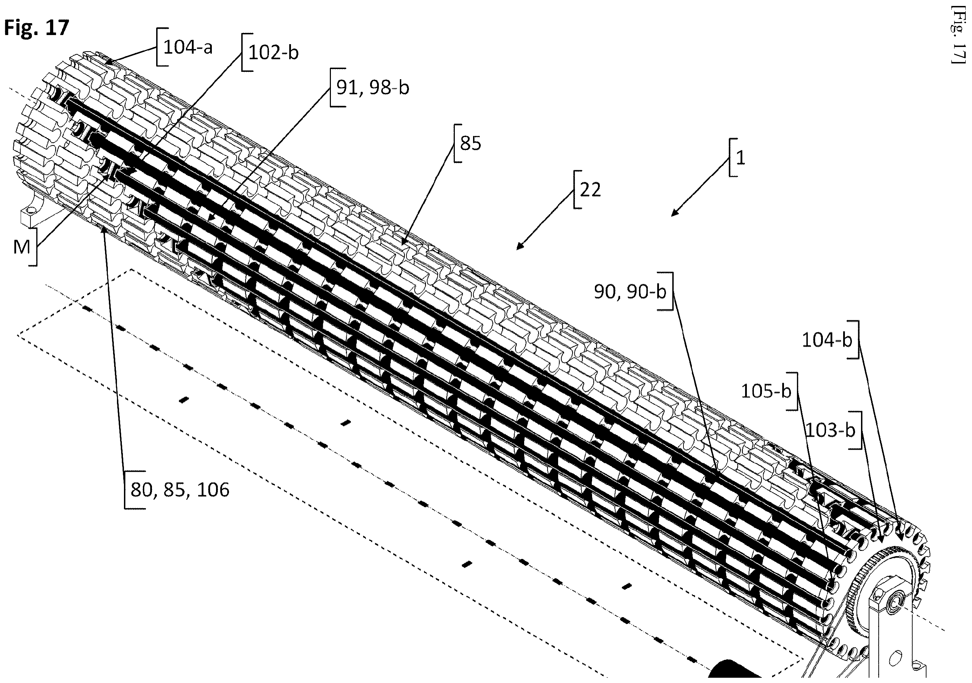

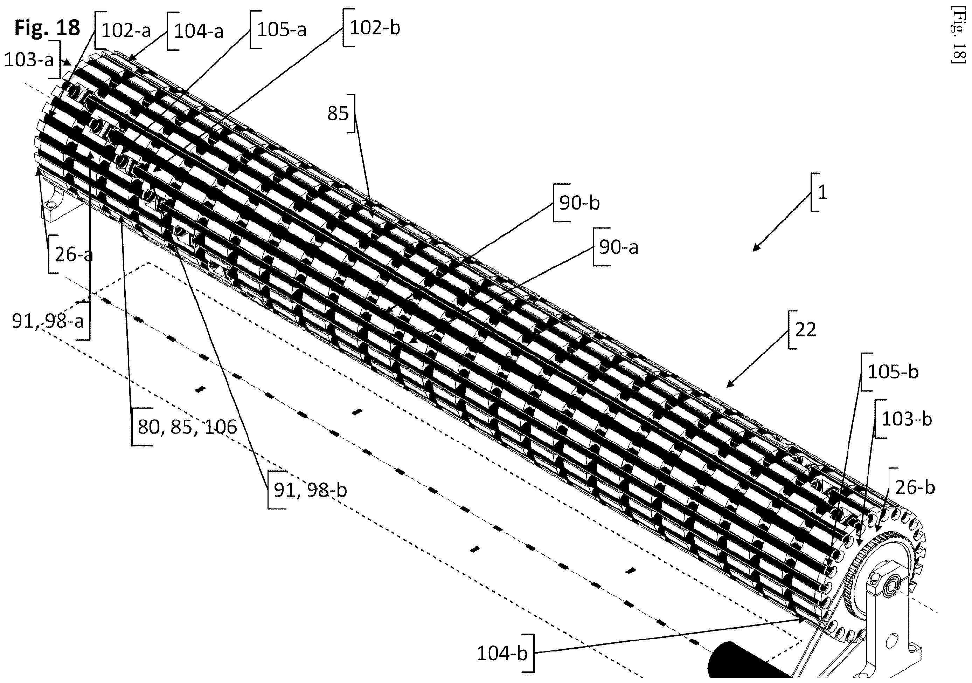

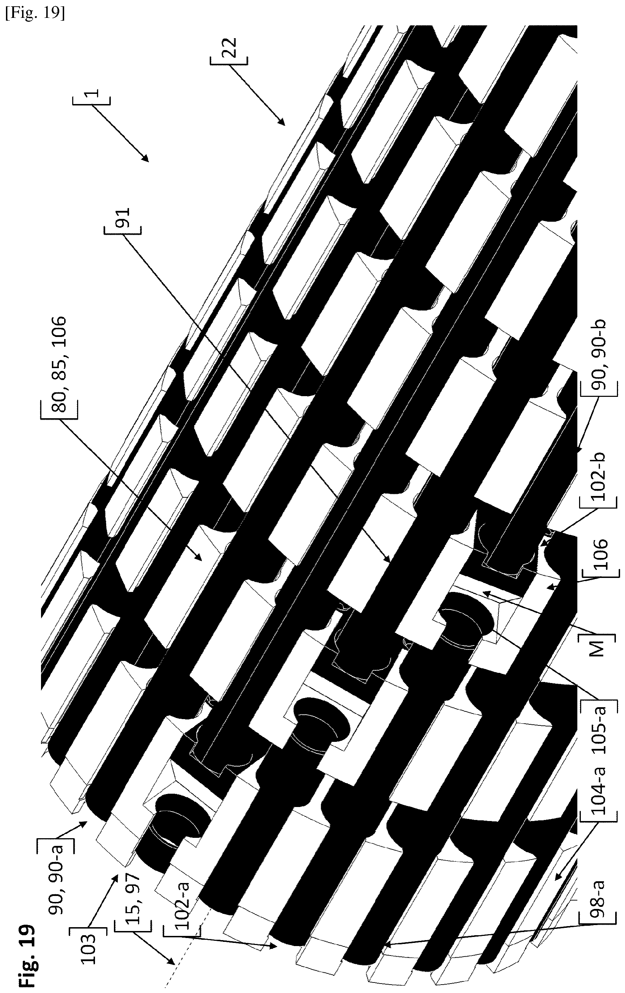

En référence aux figures [Fig.14], [Fig.15], [Fig.16], [Fig.17],[Fig.18], et [Fig.19], on voit une disposition complémentaire de configuration de l'Assemblage-Optique-Rotatif (22), préférée par l'invention.

L'Assemblage-Optique-Rotatif (22) est équipé d'un Assemblage-De-Rigidification (90, 90-a). Il est constitué d'une pluralité de Tiges-Rigides (91). Leur Axe-De-Rigidification (92) est parallèle à l'Axe-De-Rotation (15). Les Tiges-Rigides (91) sont fixes par rapport à l'Arbre-Rotatif (14), et fixes l'une par rapport à l'autre. Chaque Tige-Rigide (91) traverse au moins une Section-Support (80), à laquelle elle est fixée rigidement par Emboitement (93) dans un Evidement-De-Rigidification (94) de cette Section-Support (80).

On voit que les Tiges-Rigides (91) sont disposées sensiblement le long de Lignes-Génératrices-De-Rigidification (95) rectilignes d'un même Cylindre-Virtuel-De-Rigidification (96) de révolution. L' Axe-De-Cylindre-De-Rigidification (97) du Cylindre-Virtuel-De-Rigidification (96) est confondu avec l'Axe-De-Rotation (15).

En référence aux figures [Fig.15], et [Fig.16], on voit une disposition complémentaire de la deuxième variante de configuration préférée (décrite ci-dessus) de son Assemblage-Optique-Rotatif (22). On voit que l'Assemblage-Optique-Rotatif (22) est constitué d'un assemblage mécanique de 24 Disques-Support (85), géométriquement identiques et de forme cylindrique plate. Ils sont disposés cote à cote, de manière perpendiculaire et centrée par rapport à l'Axe-De-Rotation (15). Chaque Disque-Support (85) est muni d'un Logement-Support (88) ménagé sur sa Périphérie-De-Disque (89), sur lequel est fixé son Miroir (M). L' Assemblage-De-Rigidification (90) est formé de Tiges-Rigide (91) constituée chacune d'un Tube-Rigide-Evidé (98) rectiligne. Chacun ménage intérieurement un Canal-Longitudinal (99, 99-a) vide le traversant de part en part, selon son Axe-De-Rigidification (92). Chaque Canal-Longitudinal (99) est disposé sensiblement le long d'une Ligne-Génératrices-De-Rigidification (95) rectiligne du Cylindre-Virtuel-De-Rigidification (96). La distance de chaque Canal-Longitudinal (99) vis-à-vis de l'Axe-De-Rotation (15) est constante, et sensiblement égale au Rayon-de-Cylindre-De-Réflexion (41) et à la Distance-De-Faisceau (21) . En sorte que le Cylindre-Virtuel-De-Rigidification(96) est sensiblement confondu avec le Cylindre-Virtuel-De-Réflexion (39) de révolution. Les Tubes-Rigides-Evidés (98; 98-a) sont enchâssés dans des Encoches-De-Disque (100) successives ménagées sur la Périphérie-De-Disque (89) de certains des 24 Disques-Support (85).

En référence aux figures [Fig.14], [Fig.15], et [Fig.16], on voit que l'Assemblage l'Assemblage-De-Rigidification (90) comporte un Assemblage-De-Rigidification-Tubulaire-Amont (90-a), constitué par des Tubes-Rigides-Evidés-Amont (98-a) qui ont des Longueurs-De-Tube (101) différentes. Les Tubes-Rigides-Evidés-Amont (98-a) sont géométriquement configurés de manière qu'ils s'étendent chacun longitudinalement entre, (i) d'une part, une Extrémité-Amont-De-Tube-Amont (102-a), située au voisinage de la même Face-Latérale-Amont (103-a) du premier Disque-Support-Amont (104-a) de l'Assemblage-Optique-Rotatif (22), par laquelle pénètre perpendiculairement le Faisceau-Laser-Entrant (18), et (ii) d'autre, une Extrémité-Avale-De-Tube-Amont (105-a), disposée en regard du Miroir (M) d'un Disque-Support-Intermédiaire (106) particulier variable, différent pour chaque Tube-Rigides-Evidé-Amont (98-a).

On comprend que lorsque le Moteur-D'Entraînement (24-a) et la Source-Laser-Entrante (16) sont activés :
a. Les Axes-De-Rigidification (92) des Tubes-Rigides-Evidés-Amont (98-a) sont en rotation sont confondus avec des Lignes-Génératrices-De-Réflexion (42) rectilignes du Cylindre-Virtuel-De-Réflexion (39) de révolution.
b. Le Faisceau-Laser-Entrant (18) pénètre successivement au travers du Canal-Longitudinal (99, 99-a) d'un des Tubes-Rigides-Evidés-Amont (98-a) successifs et impacte successivement le Point-De-Réflexion (29) d'un Miroir (M) d'un des Disque-Support-Intermédiaire (106) particulier lui faisant face.
c. L'Assemblage-De-Rigidification-Tubulaire-Amont (90-a) assure concomitamment (i) une rigidification et une immunisation aux vibrations longitudinales de l'Assemblage-Optique-Rotatif (22), et, (ii) une protection de sécurité par encapsulation du Faisceau-Laser-Entrant (18) pendant la rotation de l'Assemblage-Optique-Rotatif (22).

En référence aux figures [Fig.17], et [Fig.18], on voit que l'Assemblage-De-Rigidification (90) comporte également un Assemblage-De-Rigidification-Tubulaire-Aval (90-b) constitué par des Tubes-Rigides-Evidés-Aval (98-b) qui ont des Longueurs-De-Tube (101) différentes. Les Tubes-Rigides-Evidés-Aval (98-b) sont géométriquement configurés de manière qu'ils s'étendent chacun longitudinalement entre, (i) d'une part, une Extrémité-Amont-De-Tube-Aval (102-b), disposée en arrière du Miroir (M) d'un Disque-Support-Intermédiaire (106) particulier, différent pour chaque Tube-Rigides-Evidé-Aval (98-b); et, (ii) d'autre part, par une Extrémité-Avale-De-Tube-Aval (105-b), située au voisinage de la même Face-Latérale-Aval (103-b) du dernier Disque-Support-Aval (104-b) de l'Assemblage-Optique-Rotatif (22). On constate que les 24 Tubes-Rigides-Evidés-Amont (98-a) sont emboités dans des Encoches-De-Disque (100), espacées angulairement de 15,° de la périphérie du Flanc (26-a) amont. De même les 24 Tubes-Rigides-Evidés-Aval (98-b) sont emboités dans des Encoches-De-Disque (100), espacées angulairement de 15°, de la périphérie du Flanc (26-b) aval. Cela permet une indexation angulaire précise lors du montage.

On comprend que :
a. L'Assemblage-De-Rigidification-Tubulaire-Amont (90-a) et l'Assemblage-De-Rigidification-Tubulaire-Aval (90-b) ont une topologie similaire. Et, ils sont complémentaires. Ils sont sensiblement l'image l'un de l'autre après une réflexion miroir combinée avec une rotation axiale de 180°.
b. La combinaison de l'Assemblage-De-Rigidification-Tubulaire-Amont (90-a) et de l'Assemblage-De-Rigidification-Tubulaire-Aval (90-b), (i) assure une rigidification et une immunisation aux vibrations longitudinales de l'Assemblage-Optique-Rotatif (22), sur toute sa longueur pendant sa rotation, et, (ii) sert de guide pour permettre un assemblage et une indexation angulaire aisée et précise des Disques-Support (85), en combinaison avec les Flancs (26-a, 26-b) latéraux.
c. Les Tubes-Rigides-Evidés-Aval (98-b) ne sont jamais pénétrés par le Faisceau-Laser-Entrant (18).

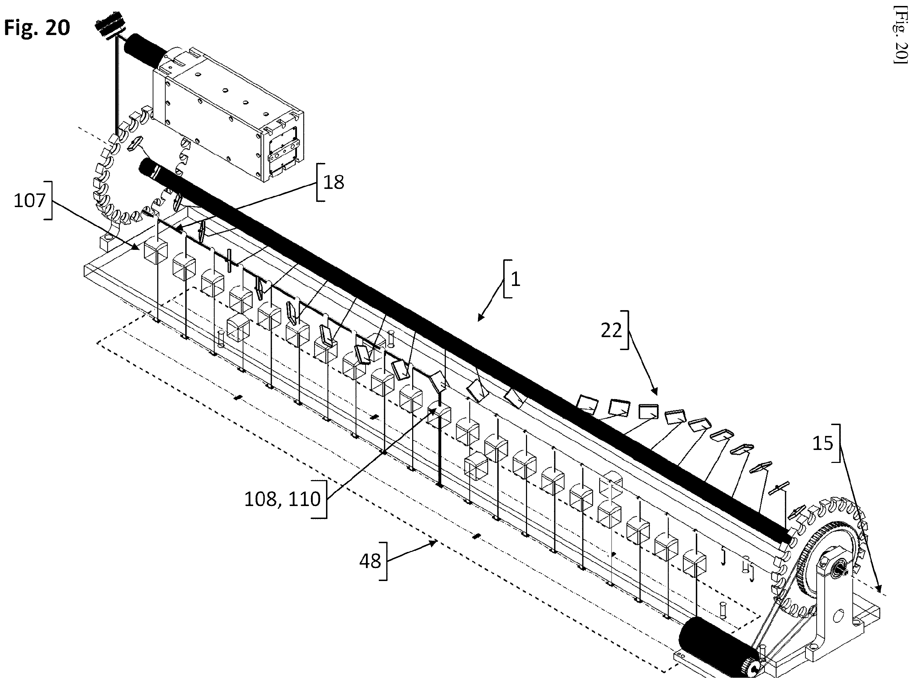

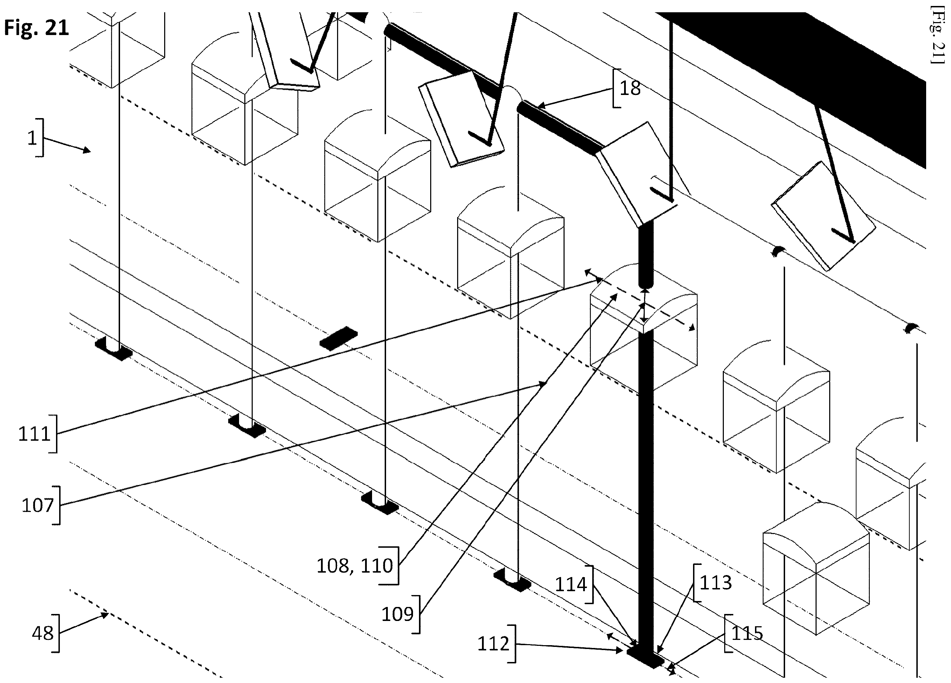

En référence aux figures [Fig.20] et [Fig.21], on voit une troisième variante de configuration préférée du Dispositif (1) de l'invention. Le Dispositif (1) est équipé d'un Assemblage-De-Focalisation (107), constitué de Lentilles-De-Focalisation (108), fixes vis-à-vis de l'Axe-De-Rotation (15) et du Plan-D'Impact (48). Ces Lentilles-De-Focalisation (108) sont positionnées entre l'Assemblage-Optique-Rotatif (22) et le Plan-D'Impact (48). Leur Axe-Optique (109) est perpendiculaire au Plan-D'Impact (48).

On voit en outre que l'Assemblage-De-Focalisation (107) est équipé de Lentilles-De-Focalisation-Cylindriques (110). Selon l'invention, ces Lentilles-De-Focalisation-Cylindriques (110) peuvent être de type cylindrique ou semi-cylindrique. Dans le cas représenté il s'agit de de lentilles de type semi-cylindrique. Elles présentent un Axe-De-Cylindre-Optique (111) sensiblement parallèle au Plan-D'Impact (48).

On constate que les Lentilles-De-Focalisation Cylindriques (110) sont configurées pour focaliser les Faisceaux-Laser-Secondaires (45) les traversant, selon un Spot-D'Impact-Laser-Rectangulaire (112) étroit. C'est-à-dire que sa Longueur-De-Spot-Laser (113) est au moins deux fois supérieure à sa Largueur-De-Spot-Laser (114). En sorte que cela définit ainsi un Axe-De-Spot-Rectangulaire (115) orienté selon la Longueur-De-Spot-Laser (113).

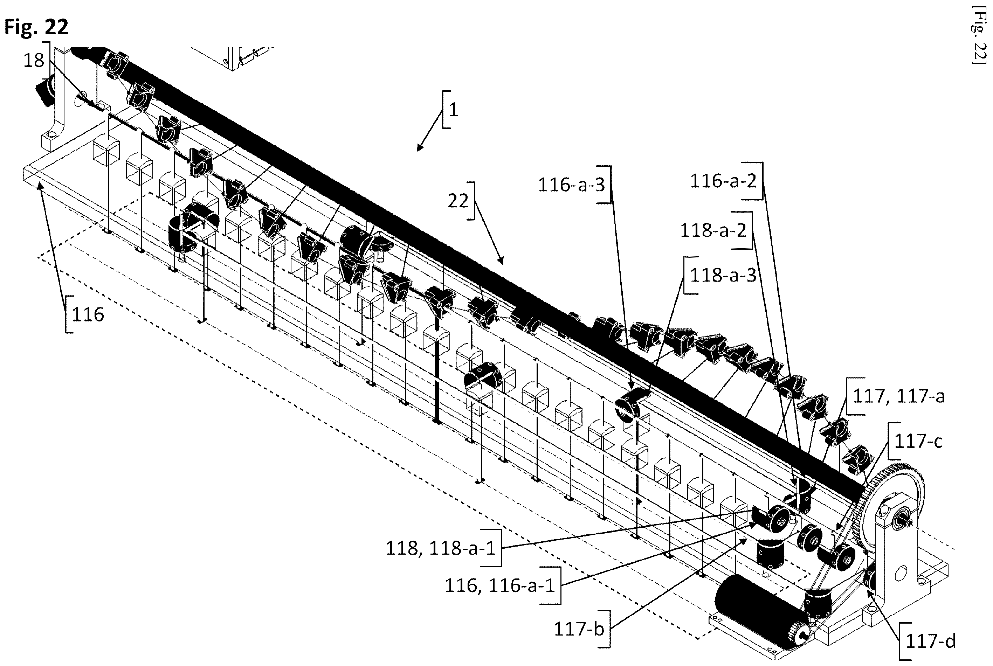

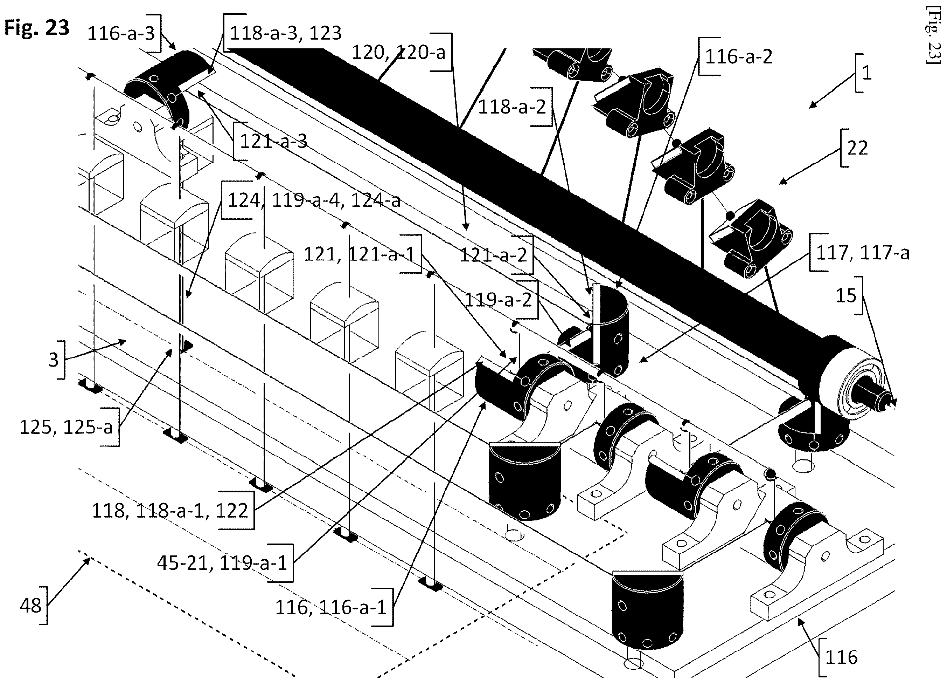

En référence aux figures [Fig.22] et [Fig.23], on voit une quatrième variante de configuration préférée du Dispositif (1) de l'invention. Le Dispositif (1) comprend un Support-Secondaire (116), en position fixe vis-à-vis de l'Axe-De-Rotation (15) et du Plan-D'Impact (48). On voit que le Dispositif (1) comprend quatre Ensembles-Réflecteur-Auxiliaire (117, 117-a, 117-b, 117-c, 117-d). Le premier Ensemble-Réflecteur-Auxiliaire (117, 117-a) est composé de (q = 3) Miroirs-Auxiliaires (118, 118-a-1, 118-a-2, 118-a-3). Les Miroirs-Auxiliaires (118) sont chacun collés sur un Support-Miroir-Auxiliaire (116-a-1, 116-a-2, 116-a-3); à orientation angulaire réglable en tangage et en lacet. Chaque Support-Miroir-Auxiliaire (116-a-1, 116-a-2, 116-a-3) est fixé sur le Support-Secondaire (116). En sorte que tous les Miroirs-Auxiliaires (118) sont chacun en position fixe entre eux et vis-à-vis du Support-Secondaire (116). Les Miroirs-Auxiliaires (118, 118-a-1, 118-a-2, 118-a-3) sont positionnés et configurés géométriquement pour dévier par réflexions successives des Faisceaux-Laser-Auxiliaires (119, 119-a-1, 119-a-2, 119-a-3, 119-a-4) d'une Collection-Faisceaux-Auxiliaire (120, 120-a, 120-b, 120-c, 120-d), dont le premier faisceau dévié (119-a-1) est constitué d'un des 4 derniers Faisceaux-Laser-Secondaires (45, 45-21) émis par l'Assemblage-Optique-Rotatif (22).

Les Miroirs-Auxiliaires (118, 118-a-1, 118-a-2, 118-a-3) sont chacun successivement impactés par un des Faisceaux-Laser-Auxiliaires (119, 119-a-1, 119-a-2, 119-a-3) impactant précédent en un Point-De-Réflexion-Auxiliaire (121, 121-a-1, 121-a-2, 121-a-3) de ce Miroirs-Auxiliaire (118, 118-a-1, 118-a-2, 118-a-3) suivant, chaque fois avec un changement de Direction-Angulaire-De-Faisceau (A) du Faisceau-Laser-Auxiliaire (119, 119-a-1, 119-a-2, 119-a-3) impactant précédent.

Un Miroir-Auxiliaire-Amont (122, 118-a-1) de l'Ensemble-Réflecteur-Auxiliaire (117, 117-a) est positionné sur le trajet d'un Faisceau-Laser-Secondaire (45, 45-21). Le Miroir-Auxiliaire-Amont (122,118-a-1) est configuré géométriquement pour être impacté par ce Faisceau-Laser-Secondaire (45, 45-21) sur son Point-De-Réflexion-Auxiliaire (121, 121-a-1); et pour réfléchir un premier Faisceau-Laser-Auxiliaire (119, 119-a-2) dévié de la Collection-Faisceaux-Auxiliaire (120, 120-a).

Un Miroir-Auxiliaire-Aval (123, 118-a-3) de l'Ensemble-Réflecteur-Auxiliaire (117, 117-a) est configuré géométriquement pour faire face sensiblement à la fois (i) au dernier Faisceau-Laser-Auxiliaire (119, 119-a-3) dévié précédent de la Collection-Faisceaux-Auxiliaire (120, 120-a), et (ii) à la Zone-De-Contrôle (3). Le Miroir-Auxiliaire-Aval (123, 118-a-3) dévie ce dernier Faisceau-Laser-Auxiliaire (119, 119-a-3) dévié précédent selon un ultime Faisceau-Laser-Secondaire-Dévié (124, 119-a-4, 124-a), qui impacte, en aval de la Collection-Faisceaux-Auxiliaire (120, 120-a), un Point-D'impact-Dévié (125, 125-a) du Plan-D'Impact (48) de de la Zone-De-Contrôle (3), voisin d'un Point-De-Détection (36) d'un Transducteur-Électromagnétique-Acoustique TEMA (34).

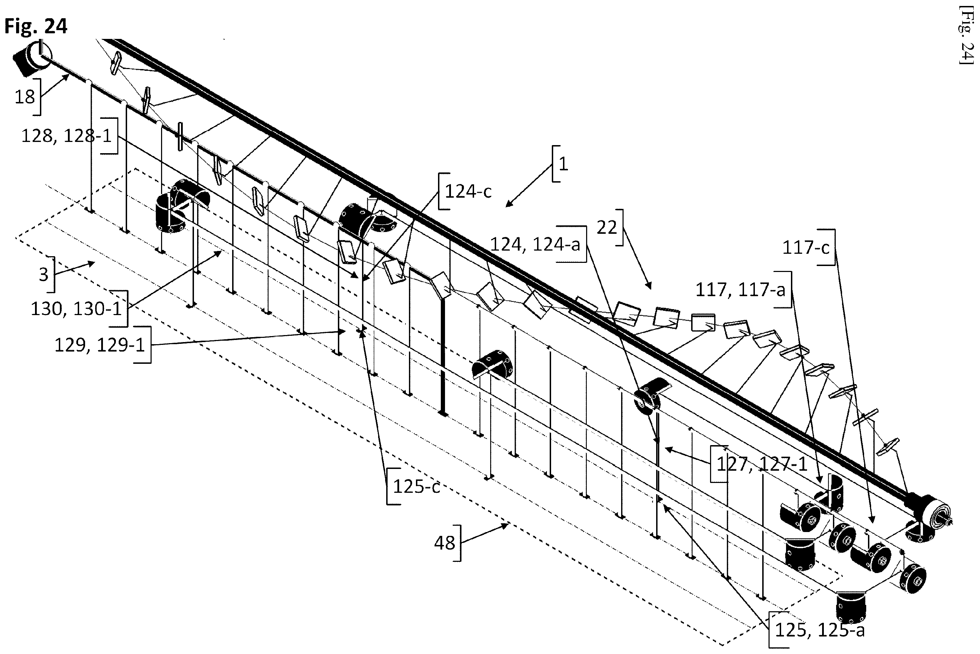

En référence à la figure [Fig.24], on voit une première disposition complémentaire de la quatrième variante de configuration préférée du Dispositif (1) décrite ci-dessus. Le Dispositif (1) est équipé d'un Assemblage-Réflecteur-Auxiliaire (126, 126-1), constitué de deux Ensembles-Réflecteur-Auxiliaires (117, 117-a, 117-c). Ces deux Ensembles-Réflecteur-Auxiliaires (117, 117-a, 117-c) sont configurés géométriquement de telle sorte que leurs au moins deux Faisceaux-Laser-Secondaires-Déviés (124, 124-a, 124-c) sont parallèles et disposés selon un même Plan-De-Faisceaux-Secondaires-Déviés (127, 127-1) sensiblement perpendiculaires au Plan-D'Impact (48). Ils sont disposés selon un Réseau-Plan-De-Faisceaux-Secondaires-Déviés (128, 128-1). Ils impactent un Ensemble-Impacts-Déviés (129, 129-1) fait d'au moins deux Points-D'Impact-Déviés (125, 125-a, 125-c) distants, disposés sur une Ligne-Pointillée-D'Impacts-Déviés (130, 130-1) rectiligne du Plan-D'Impact (48) de la Zone-De-Contrôle (3).

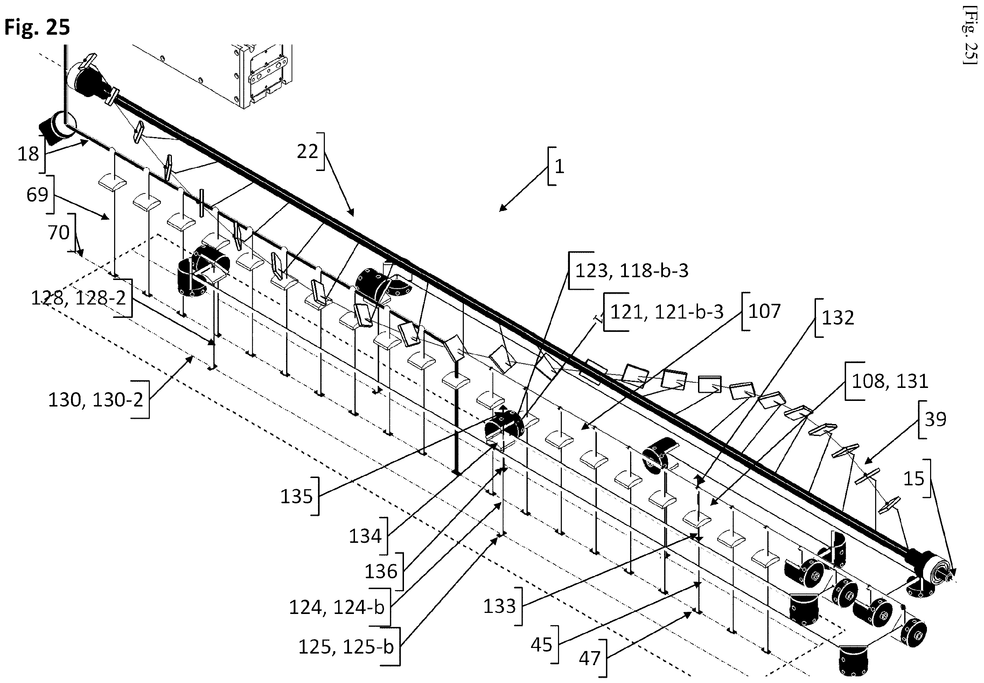

En référence à la figure [Fig.25], on voit que le Dispositif (1) est équipé d'un Assemblage-De-Focalisation (107) constituée de Lentilles-De-Focalisation (108), positionnées de manière fixe vis-à-vis de l'Axe-De-Rotation (15) et du Plan-D'Impact (48). Ces Lentilles-De-Focalisation (108) sont configurés géométriquement en deux groupes, selon le positionnement de leurs Axes-Optiques (109). Un premier groupe est constitué de Lentilles-De-Focalisation-Secondaires (131) dont l'Axe-Optique-Secondaire (132) est confondu avec l'Axe-Secondaire (133) d'un Faisceau-Laser-Secondaire (45), issu du Point-De-Réflexion (29) d'un Miroir (M) rotatif. Et dans ce cas, la Lentille-De-Focalisation-Secondaires (131) est fixée vis-à-vis de l'Axe-De-Rotation (15), entre le Cylindre-Virtuel-De-Réflexion (39) de révolution et le Point-D'Impact (47) de ce Faisceau-Laser-Secondaire (45). Elle est configurée pour focaliser ce Faisceau-Laser-Secondaire (45) sur son Point-D'Impact (47) de la Ligne-Pointillée-D'Impact (70) principale. Un second groupe est constitué de Lentilles-De-Focalisation-Auxiliaires (134), dont l'Axe-Optique-Auxiliaire (135) est confondu avec l'Axe Auxiliaire (136) d'un ultime Faisceau-Laser-Secondaire-Dévié (124), issu du Point-De-Réflexion-Auxiliaire (121, 121-b-3) final d'un Miroir-Auxiliaire-Aval (123, 118-b-3). Et dans ce cas, la Lentille-De-Focalisation-Secondaires (131) est fixée vis-à-vis de l'Axe-De-Rotation (15), entre le Cylindre-Virtuel-De-Réflexion (39) de révolution et le Point-D'impact-Dévié (125, 125-b) du Faisceau-Laser-Secondaire-Dévié (124, 124-b). Elle est configurée pour focaliser ce Faisceau-Laser-Secondaire-Dévié (124, 124-b) sur son Point-D'impact-Dévié (125, 125-b) d'une Ligne-Pointillée-D'Impacts-Déviés (130, 130-2) auxiliaire.

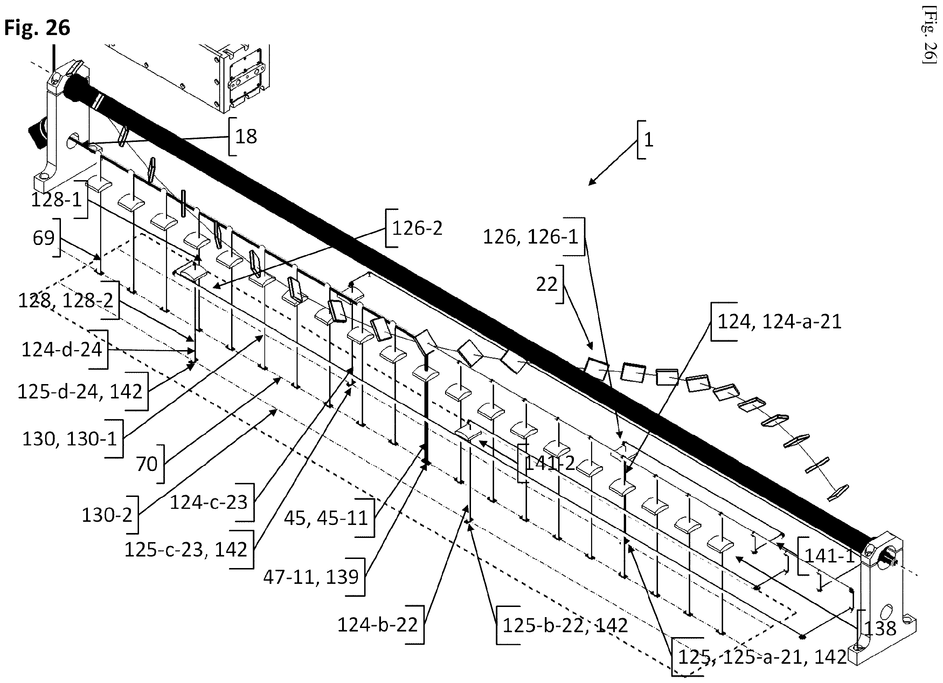

En référence à la figure [Fig.26], on voit une deuxième disposition complémentaire de la quatrième variante de configuration préférée du Dispositif (1) décrite ci-dessus. Préférentiellement, le Dispositif (1) est équipé d'un Assemblage-De-Focalisation (107) constitué de Lentilles-De-Focalisation (108) cylindriques, fixes vis-à-vis du Support-Secondaire (116); et présentant un Axe-De-Cylindre-Optique (111) sensiblement parallèle au Plan-D'Impact (48).

Ces Lentilles-De-Focalisation-Cylindriques (110) sont configurées chacune pour focaliser un Faisceau-Laser-Secondaire (45) ou un Faisceau-Laser-Secondaire-Dévié (124) selon un Spot-D'Impact-Laser-Rectangulaire (112) sur le Plan-D'Impact (48), selon un Axe-De-Spot-Rectangulaire (115). Ces Lentilles-De-Focalisation-Cylindriques (110) sont géométriquement configurées de telle manière que l'Assemblage-De-Focalisation (107) soit divisée en deux groupes. Un premier groupe forme la Collection-De-Focalisation-Longitudinale (137), constituée de Lentilles-De-Focalisation-Cylindriques-Longitudinales (138). C'est-à-dire que leur Axe-De-Cylindre-Optique (111) est sensiblement longitudinal vis-à-vis de de l'Axe-De-Rotation (15). Elles sont focalisées sur un Spot-D'Impact-Laser-Rectangulaire-Longitudinal (139). Un second groupe forme la Collection-De-Focalisation-Transversale (140), constituée de Lentilles-De-Focalisation-Cylindriques-Transversales (141) . C'est-à-dire que leur Axe-De-Cylindre-Optique (111) est sensiblement transversal vis-à-vis de de l'Axe-De-Rotation (15). Elles sont focalisées sur un Spot-D'Impact-Laser-Rectangulaire-Transversal (142).

Le Dispositif (1) comporte à la fois un Réseau-Plan-De-Faisceaux-Secondaires (69) et deux Réseaux-Plan-De-Faisceaux-Secondaires-Déviés (128, 128-1, 128-2). Le Réseau-Plan-De-Faisceaux-Secondaires (69), est constitué de Faisceaux-Laser-Secondaires (45, 45-11) émis par l'Assemblage-Optique-Rotatif (22), qui impactent les Points-D'Impact (47) sur la Ligne-Pointillée-D'Impacts (70) principale. Les deux Réseaux-Plan-De-Faisceaux-Secondaires-Déviés (128, 128-1, 128-2) sont chacun constitués de Faisceaux-Laser-Secondaires-Déviés (124, 124-a-21, 124-b-22, 124-c-23, 124-d-24) issus d'un Assemblage-Réflecteur-Auxiliaire (126, 126-1, 126-2) différent, qui impactent les Points-D'Impact-Déviés (125, 125-a-21, 125-b-22, 125-c-23, 125-d-24) de deux Lignes-Pointillées-D'Impacts-Déviés (130, 130-1, 130-2) auxiliaires.

On voit que selon l'invention les Lentilles-De-Focalisation-Cylindriques-Longitudinales (138), et les Lentilles-De-Focalisation-Cylindriques-Transversales (141) sont positionnées de manière complémentaire et exclusive en deux groupes. Un premier groupe (110-1) focalise le Réseau-Plan-De-Faisceaux-Secondaires (69) sur sa Ligne-Pointillée-D'Impact (70), uniquement selon des Spots-D'Impact-Laser-Rectangulaire-Longitudinaux (139), ou uniquement selon des Spots-D'Impact-Laser-Rectangulaire-Transversaux (142). Dans le cas décrit sur les figures, le premier groupe (110-1) constitué de Lentilles-De-Focalisation-Cylindriques-Longitudinales (138) focalise le Réseau-Plan-De-Faisceaux-Secondaires (69) sur sa Ligne-Pointillée-D'Impact (70) uniquement selon des Spots-D'Impact-Laser-Rectangulaire-Longitudinaux (47-11, 139). Alternativement, et de manière exclusive de la précédente, le deuxième groupe (110-2) focalise les deux Réseaux-Plan-De-Faisceaux-Secondaires-Déviés (128, 128-1, 128-2) sur les deux Lignes-Pointillées-D'Impacts-Déviés (130, 130-1, 130-2), uniquement selon des Spots-D'Impact-Laser-Rectangulaire-Transversaux (142), ou uniquement selon des Spots-D'Impact-Laser-Rectangulaire-Longitudinaux (139). Dans le cas décrit sur les figures, le deuxième groupe (110-2) de Lentilles-De-Focalisation-Cylindriques-Transversales (141, 141-1, 141-2) focalise le Réseau Plan-De-Faisceaux-Secondaires-Déviés (128) sur deux Ligne-Pointillée-D'Impacts-Déviés (130, 130-1, 130-2) uniquement selon des Spots-D'Impact-Laser-Rectangulaire-Transversaux (142, 125-a-21, 125-b-22, 125-c-23, 125-d-24).

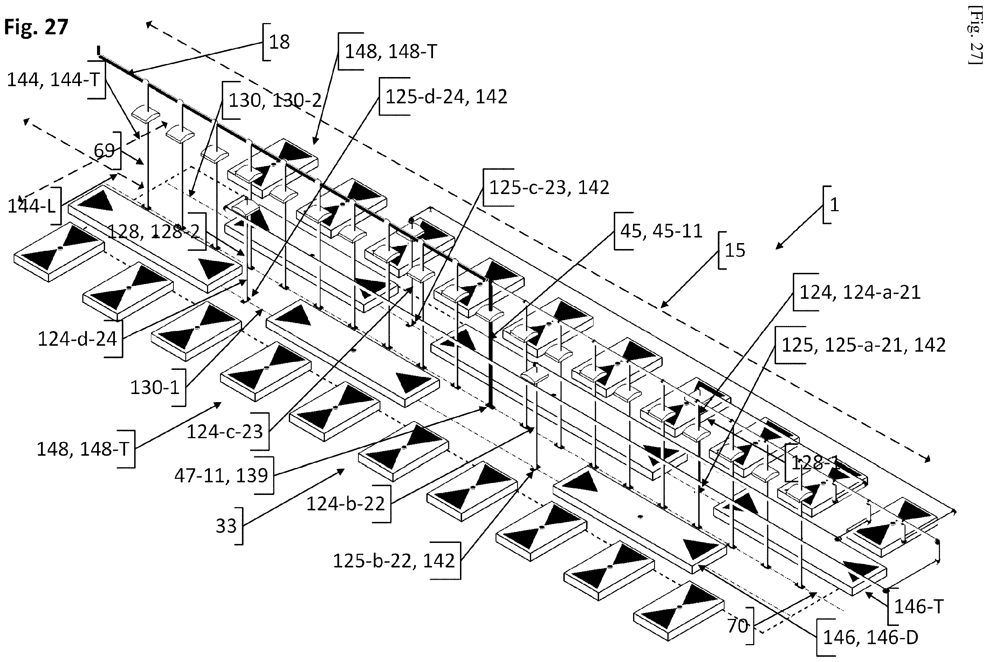

En référence à la figure [Fig.27], on voit une cinquième variante de configuration préférée du Dispositif (1) de l'invention. On voit que le Dispositif (1) comprend Ensemble-Capteur (33) composé de TEMAs-Directionnels (143), du type présentant un Orientation-Directionnelle-Privilégiée-De-Capture (144, 144-L, 144-T) des Signaux-Induits (11) ultrasoniques générés par l'interaction des Vibrations-Mécaniques (8) avec les Discontinuités-De-Surface (12) et/ou les Discontinuités-De-Sous-Surface (13).

L'Ensemble-Capteur (33) est configuré de manière à être divisé en deux groupes. Un premier groupe forme la Collection-De-Capteurs-Longitudinaux (145), constituée de TEMAs-Longitudinaux (146, 146-T, 146-D), c'est-à-dire à Orientation-Directionnelle-Privilégiée-De-Capture (144, 144-L) selon une direction longitudinale vis-à-vis de de l'Axe-De-Rotation (15). Et un deuxième groupe forme la Collection-De-Capteurs-Transversaux (147), constituée de TEMAs-Transversaux (148, 148-T, 148-D), c'est-à-dire à Orientation-Directionnelle-Privilégiée-De-Capture (144, 144-T) selon une direction transversale vis-à-vis de de l'Axe-De-Rotation (15).

On voit que les Spots-D'Impact-Laser-Rectangulaire-Transversaux (142, 15-a-21, 125-b-22, 125-c-23, 125-d-24) sont (en nombre) principalement (et sur la figure tous) situés entre deux TEMAs-Longitudinaux (146). Et, les Spots-D'Impact-Laser-Rectangulaire-Longitudinaux (139, 47-11) sont (en nombre) principalement (et sur la figure tous) situés en regard et au dessus ou en dessous de TEMAs-Transversaux (148), perpendiculairement à l'Axe-De-Rotation (15).

On voit à la figure [Fig.27] que l' Assemblage-Optique-Rotatif (22) est géométriquement configuré de manière que le Réseau-Plan-De-Faisceaux-Secondaires (69), est constitué de Faisceaux-Laser-Secondaires (45, 45-11) qui impactent les Points-D'Impact (139, 47-11) de la Ligne-Pointillée-D'Impact (70) principale.

De plus, les deux Réseaux-Plan-De-Faisceaux-Secondaires-Déviés (128, 128-1, 128-2), sont constitués de deux groupes de Faisceaux-Laser-Secondaire-Déviés (124-a, 124-c) et (124-b, 124-d), issus de deux Assemblages-Réflecteur-Auxiliaires (126, 126-1, 126-2), qui impactent deux Lignes-Pointillées-D'Impacts-Déviés (130, 130-1, 130-2) auxiliaires distantes. On voit que la Ligne-Pointillée-D'Impact (70) principale et les deux Lignes-Pointillées-D'impacts-Déviés (130, 130-1, 130-2) auxiliaires sont toutes trois parallèles à l'Axe-De-Rotation (15) et distantes entre elles. Selon cette configuration préférée de l'invention, les deux Lignes-Pointillées-D'impacts-Déviés (130, 130-1, 130-2) auxiliaires sont situées de part et d'autre, c'est-à-dire au dessus et au dessous de la Ligne-Pointillée-D'Impact (70) principale.

On voit à la figure [Fig.27] que l'Assemblage-Optique-Rotatif (22) est géométriquement configuré de manière que la Ligne-Pointillée-D'Impact (70) principale est formée uniquement de Spots-D'Impact-Laser-Rectangulaire-Longitudinaux (139). Et ses deux Lignes-Pointillées-D'impacts-Déviés (130, 130-1, 130-2) auxiliaires sont formées uniquement de Spots-D'Impact-Laser-Rectangulaire-Transversaux (142, 125-a-21, 125-b-22, 125-c-23, 125-d-24).

On voit à la figure [Fig.27] que le Dispositif (1) et son Assemblage-Optique-Rotatif (22) sont géométriquement configuré de manière que ses TEMAs-Longitudinaux (146, 146-T, 146-D) sont principalement (en nombre) (et sur la figure tous) alignés de part et d'autre et de manière alternée vis-à-vis de Ligne-Pointillée-D'Impact (70) principale. En outre, ils sont positionnés longitudinalement a coté d'un Spot-D'Impact-Laser-Rectangulaire-Transversal (142, 125-a-21, 125-b-22, 125-c-23, 125-d-24) d'une des deux Lignes-Pointillées-D'impacts-Déviés (130, 130-1, 130-2) auxiliaires. Et de plus, ses TEMAs-Transversaux (148, 148-T, 148-D) sont principalement (en nombre) (et sur la figure tous) positionnés et alignés alternativement au dessus et/ou en dessous des Capteurs-TEMAs-Longitudinaux (146, 146-T, 146-D), dans une direction perpendiculaire à l'Axe-De-Rotation (15).

Dans un configuration avantageuse recommandée par l'invention, le Dispositif (1) est équipé en outre de Moyens-De-Contrôle-De-La-Position-Angulaire (149) du seul Arbre-Rotatif (14), et donc de l'Assemblage-Optique-Rotatif (22) monolithique en rotation vis-à-vis de l' Axe-De-Rotation (15); et reliés à l'unique Arbre-Rotatif (14). Il comporte également des Moyens-De-Contrôle-Et-Cadencement-Des-Impulsions-Laser (150), reliés électriquement à la Source-Laser-Entrante (16), et configurés pour monitorer et/ou cadencer la génération d'impulsions laser par la Source-Laser-Entrante (16). Il comporte également des Moyens-De-Cadencement-De-La-Rotation-Moteur (151), reliés électriquement au Moteur-D'Entraînement (24-a).

Un Processeur-De-Cadencement-Synchronisé-Impulsions-Laser-Rotation (152) est relié électriquement aux Moyens-De-Monitoring-De-La-Position-Angulaire (149) de l'Arbre-Rotatif (14). Il est aussi relié électriquement aux Moyens-De-Cadencement-De-La-Rotation-Moteur (151). Il reçoit continument la position angulaire de l'Arbre-Rotatif (14). Le Processeur-De-Cadencement-Synchronisé-Impulsions-Laser-Rotation (152) est configuré soit en Mode-Pilotage-Moteur (153), soit en Mode-Pilotage-Impulsions.

En Mode-Pilotage-Moteur (153), le Processeur-De-Cadencement-Synchronisé-Impulsions-Laser-Rotation (152) est configuré pour piloter électriquement les Moyens-De-Cadencement-De-La-Rotation-Moteur (151), en fonction du cadencement des impulsions laser générées par la Source-Laser-Entrante (16). Dans ce mode, il positionne de manière adaptative la position angulaire axiale de l'Assemblage-Optique-Rotatif (22), en sorte que le Nombre-D'impulsions-D'Impact-Miroir (NIM) des impulsions du Faisceau-Laser-Entrant (18) impactant chacun des Miroirs (M, M1, ..., M20) en rotation, au voisinage de son Point-De-Réflexion (29) de la Ligne-Hélicoïdale-Pointillée (43) rotative, soit constant (par exemple NIM = 2).

Alternativement, en Mode-Pilotage-Impulsions (154), le Processeur-De-Cadencement-Synchronisé-Impulsions-Laser-Rotation (152) est configuré pour piloter électriquement les Moyens-De-Contrôle-Et-Cadencement-Des-Impulsions-Laser (150), en fonction des informations du cadencement de la position angulaire axiale de l'Assemblage-Optique-Rotatif (22), reçues continument des Moyens-De-Contrôle-De-La-Position-Angulaire (149). Dans ce mode, il pilote successivement le cadencement des impulsions du Faisceau-Laser-Entrant (18), en sorte que le Nombre-D'impulsions-D'Impact-Miroir (NIM) des impulsions du Faisceau-Laser-Entrant (18) impactant chacun des Miroirs (M, M1, ..., M20) en rotation, au voisinage de son Point-De-Réflexion (29) de la Ligne-Hélicoïdale-Pointillée (43) rotative, soit constant (par exemple NIM = 2),

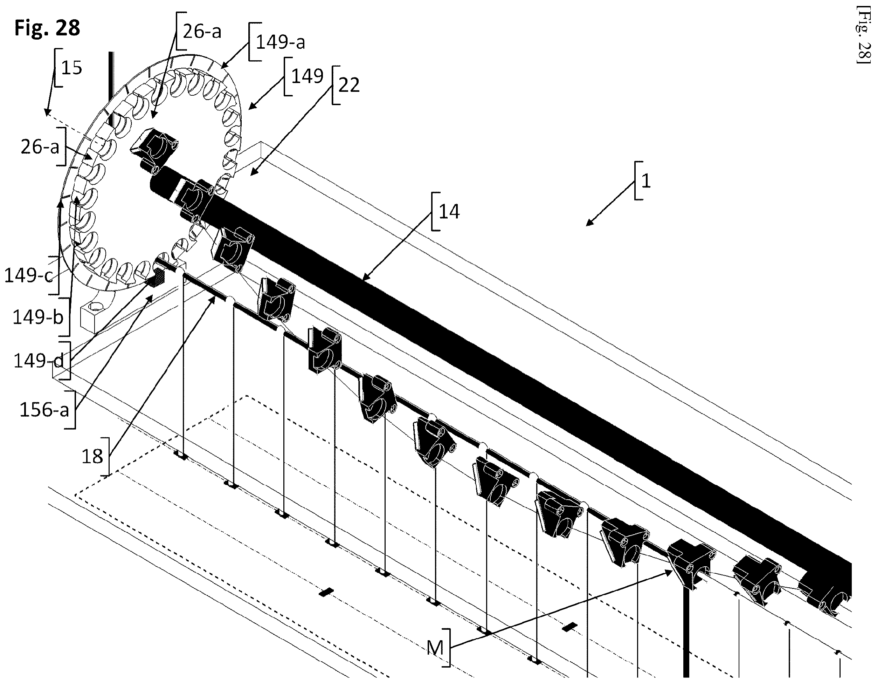

En référence à la figure [Fig.28], on voit que l'Assemblage-Optique-Rotatif (22) du Dispositif (1) est équipé de Moyens-De-Contrôle-De-La-Position-Angulaire (149), adaptés à la mise en œuvre du processus d'adaptation continue de la rotation de l'Assemblage-Optique-Rotatif (22) au cadencement des impulsions laser émises par la Source-Laser-Entrante (16). Pour faciliter la compréhension, les Disques-Support (85) rotatifs ne sont pas représentés. On voit que Moyens-De-Contrôle-De-La-Position-Angulaire (149) comprennent un Disque-D'indexation-Angulaire (149-a). Il a un diamètre sensiblement égal mais supérieur à celui des Flancs (26-a, 26-b) latéraux liés à l'Assemblage-Optique-Rotatif (22). Il est placé rigidement à gauche du Flanc (26-a) gauche latéral. En sorte qu'il est fixe par rapport à l'Arbre-Rotatif (14), et tourne de concert avec l'Assemblage-Optique-Rotatif (22) autour de l'Axe-De-Rotation (15). Il est percé de 24 Evidements-Circulaires (149-b), positionnés en couronne sur son pourtour, et tous angulairement distants de 15° autour de son axe. Chaque Evidement-Circulaire (149-b) à un diamètre égal à celui des évidements pratiqués sur le pourtour des Flancs (26-a, 26-b) latéraux. Il est positionné selon la direction de l'Axe-De-Rotation (15) en regard de ces évidements; de manière à ménager une solution de continuité tubulaire à l'intérieur de l'Assemblage-Optique-Rotatif (22), au travers de laquelle peut pénétrer successivement le Faisceau-Laser-Entrant (18); pour atteindre un Miroir (M) rotatif qui est successivement situé en face de l' Evidement-Circulaire (149-b) qui lui correspond, pendant la rotation de l'Assemblage-Optique-Rotatif (22). Le Disque-D'indexation-Angulaire (149-a) est également doté de 24 Fentes-Radiales (149-c). Elles sont positionnées en couronne sur son pourtour, chacune entre un Evidements-Circulaire (149-b) et le pourtour du Disque-D'indexation-Angulaire (149-a). Les 24 Fentes-Radiales (149-c) sont ainsi toutes angulairement distantes de 15°, autour de l'Axe-De-Rotation (15).

Un Capteur-Optique (149-d) est placé perpendiculairement au Disque-D'indexation-Angulaire (149-a). Il est fixé sur le Support-De-Rotation (156-a) gauche de l' Arbre-Rotatif (14). Donc, il est fixe vis à vis du Dispositif (1). Il forme une pince ouverte de part et d'autre du Disque-D'indexation-Angulaire (149-a), au travers de laquelle passent successivement les Fentes-Radiales (149-c), associées chacune à un Miroir (M) rotatif particulier. A chaque passage d'une Fente-Radiale (149-c) au travers du Capteur-Optique (149-d), c'est-à-dire tous les 15°, un signal est envoyé aux Moyens-De-Contrôle-De-La-Position-Angulaire (149), identifiant la position angulaire d'une Fentes-Radiales (149-c) et donc la présence d'un nouveau Miroir (M) face à l' Axe-De-Faisceau-Entrant (20). Le Processeur-De-Cadencement-Synchronisé-Impulsions-Laser-Rotation (152) effectue alors, de manière automatique, l'asservissement temporel nécessaire à la génération par la Source-Laser-Entrante (16) du Nombre-D'impulsions-D'Impact-Miroir (NIM) requis d'impulsions laser du Faisceau-Laser-Entrant (18) impactant le Miroir (M) en rotation faisant face à cette Fente-Radiale (149-c).

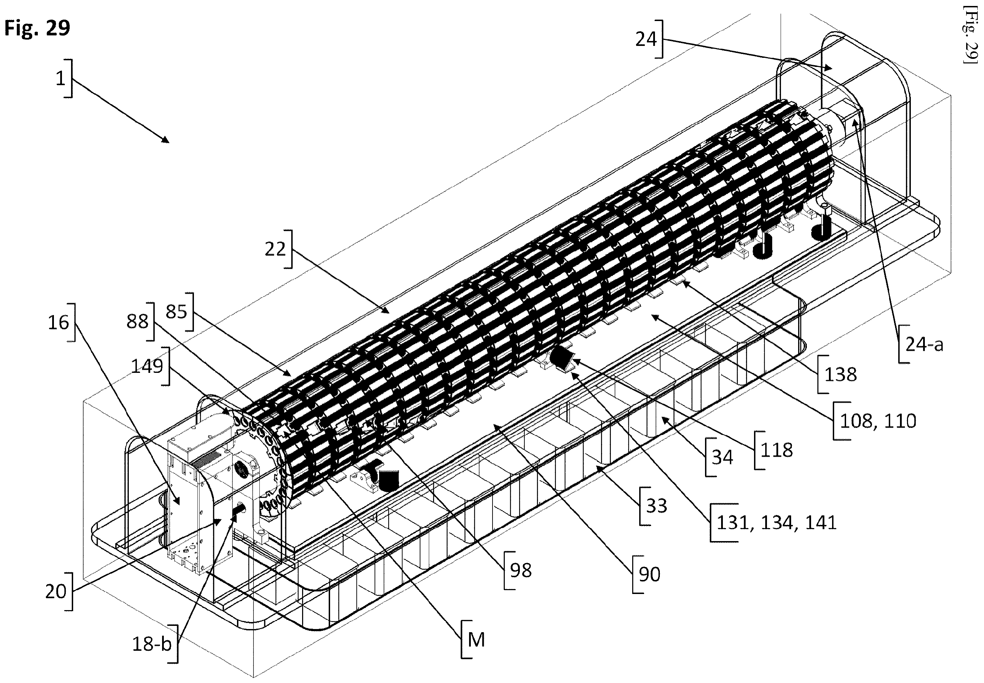

En référence à la figure [Fig.29], on voit un Dispositif (1) selon l'invention développé par la demanderesse, équipé d'une Source-Laser-Entrante (16) pulsée, qui présente les caractéristiques générales suivantes :
a. Type : DPSS (laser à semi-conducteurs pompé par diode).

Les caractéristiques de fonctionnement de la seule Source-Laser-Entrante (16) pulsée utilisée sont les suivantes :
a. Énergie : 100 mJ;
b. Fréquence : 100 Hz;
c. Puissance d'impulsion : 5 MW;
d. Durée d'impulsion : 5-100 ns;
e. Longueur d'onde : 1064 nm;
f. Diamètre du faisceau : 5-10 mm;
g. Taille des Spots-D'Impact-Laser-Rectangulaire-Longitudinaux (139), et des Spots-D'Impact-Laser-Rectangulaire-Transversaux (142), lorsqu'ils sont activés par un Dispositif ABLAT (1) de l'invention : 0.1-3 mm x 5-20 mm.

Le Dispositif (1) génère de manière périodique :
a. vingt Faisceaux-Laser-Secondaires (45), impactant vingt Points-D'Impact (47) d'une Ligne-Pointillée-D'Impact (70) principale ; et,
b. quatre Faisceaux-Laser-Auxiliaires (119) déviés, impactant quatre Points-D'Impact-Déviés (125) répartis par groupe de deux, selon deux Lignes-Pointillées-D'impacts-Déviés (130) distantes.

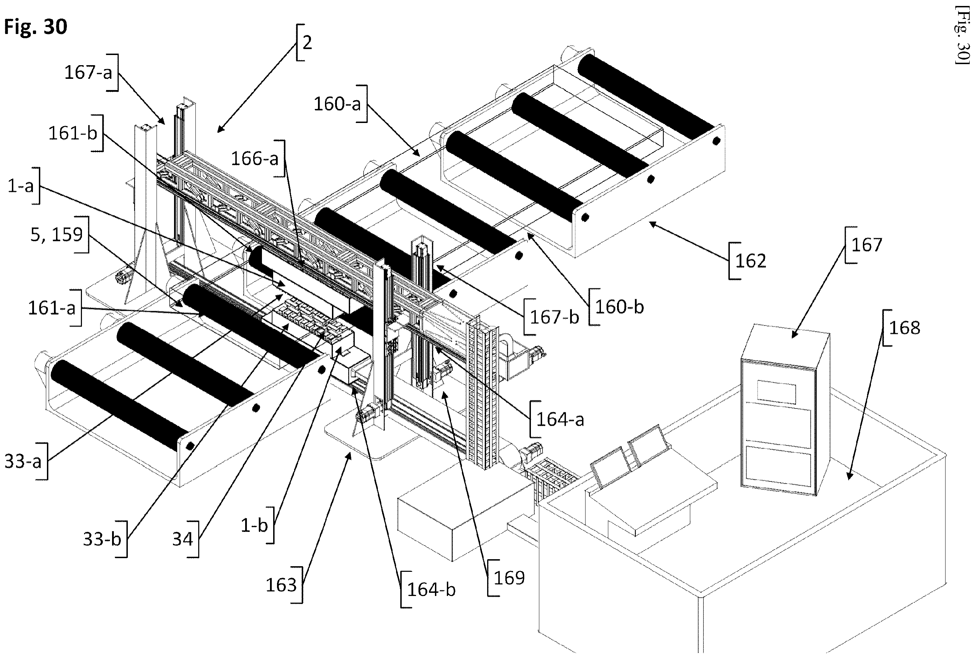

En référence à la figure [Fig.30], on voit une Machine-Outil (2) (scanner 3-D), développée par la demanderesse, équipée de deux Dispositifs (1, 1-a, 1-b) optique-électromagnétique-acoustique CNDU hybride TEMAs/Laser, du type décrit à la figure [Fig.29], alimentés chacun par une seule Source-Laser-Entrante (16) mentionnée ci-dessus. La Machine-Outil (2) effectue la scannographie 3-D de Brames-D'acier (5, 159), pendant ou après leur coulée continue dans une aciérie, à une température allant jusqu'à 1200°C.

Le premier Dispositif (1a) inspecte la Face-Supérieure-De-Brame (160-a) et est situé au dessus d'elle; en sorte que son Ensemble-Capteur (33-a) de 26 TEMAs (34) est situé en regard de cette face supérieure.

Le deuxième Dispositif (1b) inspecte la Face-Inférieure-De-Brame (160-b) et est situé en dessous d'elle; en sorte que son Ensemble-Capteur (33-b) de 26 TEMAs (34) est situé en regard de cette face inférieure.

Les deux Dispositifs (1a, 1b) sont positionnés face a face, de part et d'autre de la Brames-D'acier (5, 159), dans un plan vertical situé entre deux Rouleaux-De-Convoyeur (161-a ; 161-b) du Convoyeur (162) de la coulée en continu d'acier, sur lesquels est déplacé longitudinalement la Brames-D'acier (5, 159).

La Machine-Outil (2) est équipée d'un Ensemble-Mécanique (163) robotisé, activé par un Processeur-Numérique-De-Contrôle (167), situé dans la Zone-De-Pilotage-Operateur (168). Elle comprend un Rail-De-Guidage-Supérieur (164-a), équipé d'une Platine-Supérieure (166-a) à déplacement transversal motorisé selon ce rail de guidage; et un Rail-De-Guidage-Inférieur (164-b) équipé d'une Platine-Inférieure (166-b) à déplacement transversal motorisé selon ce rail de guidage motorisé. Les deux Rails-De-Guidage (164-a, 164-b) sont situées horizontalement, perpendiculairement, et de part et d'autre des faces supérieures et inférieures de la Brames-D'acier (5, 159).

Le Dispositif (1-a) supérieur est fixé sur la Platine-Supérieure (166-a) motorisée en dessous du Rail-De-Guidage-Supérieur (164-a). Il est ainsi déplacé transversalement pour adapter sa position à la position de la Brames-D'acier (159) sur le Convoyeur (162), ou être placé en Zone-De-Maintenance (169) latérale.

Le Dispositif (1-b) inférieur est fixé sur la Platine-Inférieure (166-b) motorisée au dessus du Rail-De-Guidage-Inférieur (164-b). Il est ainsi déplacé transversalement pour adapter sa position à la position de la Brames-D'acier (159) sur le Convoyeur (162), ou être placé en Zone-De-Maintenance (169) latérale.

L' Ensemble-Mécanique (163) comporte également deux groupes de Rails-Latéraux-Motorisés (167-a, 167-b) formant chacun un poteau vertical d'appui. Ils sont situés de part et d'autre du Convoyeur (162). Ils comprennent des moyens motorisés permettent de régler la position verticale du Rail-De-Guidage-Supérieur (164-a) et donc du Dispositif (1-a) supérieur, en fonction de l'épaisseur potentiellement variable des Brames-D'acier (159) inspectés.

Chacun des deux Dispositifs (1-a, 1-b) de la Machine-Outil (2) est équipé de 26 Transducteurs-Électromagnétique-Acoustique TEMA (34) du type décrit dans la demande de brevet français N° FR2009138, au nom de la demanderesse.

La Machine-Outil (2) est dimensionnée et configurée pour que la vitesse de balayage, c'est-à-dire la vitesse longitudinale de déplacement des Brames-D'acier (159) vis-à-vis des deux Dispositifs (1, 1-a, 1-b), est de 0,150 m par seconde.

Les spécifications de la taille des Brames-D'acier (5, 159) inspectées se situe dans la plage suivante :
a. épaisseur 100-350 mm,
b. largeur 1000-2000 mm.

La Machine-Outil (2) peut détecter automatiquement et en continu, quelles que soient leur orientation, toutes les Discontinuités de Surface (12) et Sous-Surfaces (13) dans le Corps (9) d'une Brames-D'acier (5, 159) :
a. avec un signal qui est 6dB supérieur aux signaux provenant de la structure interne du matériau de la brame d'acier,
b. d'une largeur supérieure à 0,1 mm,
c. d'une hauteur supérieure à 0,3 mm, et,
d. d'une longueur supérieure à 10 mm.

### Avantages apportés

Il ressort de la description faite ci-dessus, que le Dispositif (1) CNDU hybride TEMAs /Laser de l'invention présente les avantages suivants :
a. Il comporte un seul Assemblage-Optique-Rotatif (22) monolithique de pièces mécaniques et/ou optiques, en mouvement rotatif autour d'un seul Axe-De-Rotation (15).
b. Toutes ses pièces mécaniques et/ou optiques mobiles en rotation sont liées rigidement entre elles.
c. Il n'est équipé que d'un seul Moteur-D'Entraînement (24-a) et d'un seul Arbre-Rotatif (14).
d. Son nombre de pièces mobiles est minimal. Et donc son cout est minimisé. Sa fiabilité est accrue. Son Temps Moyen Entre Pannes (TMEP) est allongée. Et sa maintenance est minimale.
e. Sa dimension verticale est réduite d'au moins 50% par rapport aux dispositifs de l'art antérieur. Et donc ses applications industrielles dans des milieux confinés sont plus nombreuses.
f. Son Assemblage-Optique-Rotatif (22) est équipé de Miroirs (M) rotatifs qui sont tous liés mécaniquement entre eux, et disposés selon une Ligne Hélicoïdale-Pointillée (43) rotative à pas de vis cylindrique circulaire. Lorsque le Moteur-D'Entraînement (24-a) est activé; les Miroirs (M) rotatifs et la Ligne Hélicoïdale-Pointillée (43) rotative qui les relie, n'effectuent aucun mouvement alternatif longitudinal selon l' Axe-De-Rotation (15). Cela réduit la génération de vibrations et l'immunité aux vibrations extérieures de l'environnement.
g. Ainsi, Assemblage-Optique-Rotatif (22) peut tourner de manière fiable à plus de 3000 tours/minute; et donc générer jusqu'à 1200 impacts laser distants par seconde.
h. Il dispose en outre d'un d'Assemblages-De-Rigidification-Tubulaire (90-a, 90-b) qui procurent concomitamment une rigidification longitudinale et une immunisation aux vibrations transversales et longitudinales de l'Assemblage-Optique-Rotatif (22); ainsi qu'une protection de sécurité par encapsulation du Faisceau-Laser-Entrant (18), pendant la rotation de l'Assemblage-Optique-Rotatif (22). Cette caractéristique fondamentale n'est pas atteinte par l'art antérieur.
i. L' Assemblage-Optique-Rotatif (22) monolithique de l'invention tel que décrit ci-dessus permet,
   i. à partir d'un même Faisceau-Laser-Entrant (18),
   ii. d'effectuer le guidage périodique en série agile-multi-faisceaux de 24 ou plus faisceaux laser sortants distants et parallèles.
j. L' Assemblage-Optique-Rotatif (22) monolithique de l'invention, permet d'émettre périodiquement et à haute fréquence ces 24 faisceaux laser secondaires sortants, selon 3 plans parallèles, ou,
   i. un groupe de 20 Faisceaux-Laser-Secondaires (45) impacte une Ligne-Pointillée-D'Impact (70) principale de 20 impacts laser; et,
   ii. un groupe de 4 Faisceaux-Laser-Secondaire-Déviés (124, 124-a-21, 124-b-22, 124-c-23, 124-d-24) impacte deux Lignes-Pointillées-D'Impacts-Déviés (130-1, 130-2) auxiliaires de 2 impacts laser chacune, parallèles et distantes de la Ligne-Pointillée-D'Impact (70) principale.
k. Il procure une quasi-conservation de l'énergie entre la Puissance-Laser-Entrante (PI) et la Puissance-Laser-Sortante (PO) de chaque faisceau laser secondaire.
l. Il permet, à partir d'un seul Faisceau-Laser-Entrant (18) ayant une certaine Puissance-Laser-Entrante (PI), de tirer de manière périodique des faisceaux laser sortants de même puissance sur 24 points d'impact, avec une fréquence de tir pouvant atteindre 1200 hertz. Ce type de fréquence d'impacts laser ne peut être atteint par l'art antérieur, pour des raisons mécaniques.
m. Pour une Puissance-Laser-Entrante (PI) donnée et un volume donné du Dispositif (1), il accroit significativement le nombre, l'énergie et la fréquence des Chocs-Laser (7) sur la Zone-De-Contrôle (3), ainsi que le nombre, l'amplitude et le rapport signal/bruit des Signaux-A-Scan (AS) détectés par les Transducteurs-Électromagnétique-Acoustique TEMA (34).
n. Et donc, il accroit de manière économique et fiable la résolution du contrôle qualité de la Pièce-Métallique (5).

L'assemblage ABLAT optique rotatif (22) décrit et construit par la demandeuse permet d'effectuer de manière périodique 24 tirs laser à 1200 hertz en 24 points d'impacts répartis sur une Zone-De-Contrôle (3) de 1200 mm de long, ce en ayant un encombrement vertical de moins de 300 mm. Aucun Dispositif optique-électromagnétique-acoustique CNDU hybride TEMAs /Laser de l'art antérieur ne permet d'atteindre ces performances avec cet encombrement minimal.

Grace à la combinaison
a. d'une part, de Lentilles-De-Focalisation-Cylindriques-Longitudinales (138) focalisant des Spots-D'Impact-Laser-Rectangulaire-Longitudinaux (139) et de Lentilles-De-Focalisation-Cylindriques-Transversales (141) focalisant des Spots-D'Impact-Laser-Rectangulaire-Transversaux (142); et,
b. d'autre part, de TEMAs-Longitudinaux (146) à Orientation-Directionnelle-Privilégiée-De-Capture (144) selon une direction longitudinale, et de TEMAs-Transversaux (148) à Orientation-Directionnelle-Privilégiée-De-Capture (144) selon une direction transversale;
c. le Dispositif (1) détecte et qualifie les Discontinuités-De-Surface (12) et les Discontinuités-De-Sous-Surface (13) dans le Corps (9) de la Pièce-Métallique (5), ayant des orientations quelconques, aussi bien avec un élancement principalement longitudinal qu'un élancement principalement transversal. Cette caractéristique fondamentale n'est pas atteinte par l'art antérieur.

Le cout de fabrication d'un Dispositif CNDU hybride TEMAs/Laser selon l'art antérieur pour le contrôle en continu d'une face de Brames-D'acier de largeur 1200 mm, est actuellement estimé par la communauté scientifique à 1 Million €. La technologie de l'invention permet avec une seule Source-Laser-Entrante (16), de réduire ce cout d'un facteur cinq, à performance, productivité et résolution de contrôle équivalente.

### Application industrielle

L'invention offre de précieux avantages industriels et des applications dans l'industrie métallurgique, et dans tous les domaines de l'ingénierie et de la construction mécanique.

L'invention offre des applications industrielles pour le contrôle non destructif automatisé et la scannographie ultrasonique 2D et/ou 3D de grands objets métallurgiques, en particulier pour le balayage 3D en continu et la caractérisation de discontinuités de surfaces et/ou de sous-surfaces de ces grands objets métalliques. L'invention améliore ainsi le contrôle de qualité des pièces métalliques de construction.

Les applications industrielles préférées de l'invention concernent la B-Scannographie et/ou la C-Scannographie et/ou l'imagerie CND 3D en continu à haut débit des discontinuités de surfaces et internes, dans une production de structures métallurgiques larges et épaisses et/ou de composants industriels faits d'un matériau conducteur tel l'acier ou l'aluminium.

Une première application industrielle principale de l'invention est celle du contrôle CND 3D en continu de Brames-D'acier lors de leur coulée continue, dans l'environnement industriel sévère et à haute température (au-dessus de 1000°C) d'une aciérie.

Une deuxième utilisation application industrielle principale de l'invention est la génération CND 3D des paramètres topologiques de discontinuités de Brames-D'acier lors de leur coulée continue, en vue de leur utilisation pour le réglage optimal manuel ou automatique des paramètres de l'équipement de réduction dynamique (dite « Dynamic Soft Reduction » ou DSR en anglais) de la ligne de coulée en continu d'une aciérie.

## Revendications

1. Un Dispositif (1) de test non destructif à ultrasons hybride Transducteurs électromagnétiques acoustiques / Laser comprenant un Assemblage Optique Rotatif (22) monolithique de transmetteurs laser agiles matriciels avec guidage par sauts de multifaisceaux laser pour le contrôle d'objets métallurgiques, pour équiper une Machine-Outil (2) effectuant un contrôle qualité du traitement de métaux, sur une Zone De Contrôle (3) de la Surface (4) d'une Pièce Métallique (5), du type induisant des Vibrations Mécaniques (8) dans le Corps (9) de la Pièce Métallique (5), et, monitorant des Signaux Induits (11) ultrasoniques générés pour identifier les Discontinuités De Surface (12) et les Discontinuités De Sous Surface (13); ce Dispositif (1) comprenant :
a. un Arbre Rotatif (14), capable de tourner autour d'un Axe De Rotation (15);
b. une Source Laser Entrante (16), équipée de Moyens De Guidage Optique (17), configurés pour produire un Faisceau Laser Entrant (18), avec une certaine Puissance Laser Entrante (PI), dirigé le long d'un Axe De Faisceau Entrant (20) parallèle à l'Axe De Rotation (15), ce à une certaine Distance De Faisceau (21) de l'Axe De Rotation (15);
c. un Assemblage Optique Rotatif (22) configuré pour tourner autour de l'Axe De Rotation (15); et incorporant un Ensemble Réflecteur (25),
i. composé d'une pluralité de n (au moins deux) Miroirs (M, M1, M2, ..., M11, M21, ..., M24), agissant comme une Barrière Optique (27),
ii. dont chacun des Miroirs (M, M11) est configuré pour que, dans certaines positions rotatives de l'Assemblage Optique Rotatif (22), le Miroir (M) intercepte l'Axe De Faisceau Entrant (20),
iii. dont chaque Miroir (M) présente un Point De Réflexion (29, 29-11), (i) positionné à une Distance De Réflexion (32) rotative perpendiculaire de l'Axe De Rotation (15), (ii) pour réfléchir le Faisceau Laser Entrant (18) impacté sur ce Miroir (M), (iii) avec un changement de Direction Angulaire De Faisceau (A), et, (iv) avec une Efficacité De Réflexion (E) de l'énergie du Faisceau Laser Entrant (18) sensiblement égale à cent pour cent;
iv. configuré géométriquement de telle sorte que, (i) le Faisceau Laser Entrant (18) impacte successivement un Point De Réflexion (29, 29-11) associé et appartenant à un de ses n Miroirs (M, M11) distants, (ii) chacun des n Points De Réflexion (29, 29-11) des n Miroirs (M), parcourt un Cercle De Rotation (C, C-1, ..., C-11, ...), d'un Rayon De Rotation (37, 37-1... , 37-11...), centré sur un Centre De Rotation (CR, CR-1, ..., CR-11, ...) fixe sur l'Axe De Rotation (15) ; et (iii) les n différents Miroirs (M, M1, M2, ..., M11, M21, ..., M24) redirigent de manière agile, successivement et de manière discontinue le Faisceau Laser Entrant (18) selon une Collection Faisceaux Secondaires (44), faite d'un fagot de n Faisceaux Laser Secondaires (45, 45-1, ..., 45-11, ..., 45-24) distants, issus d'une multitude de changements successifs et discontinus des Directions Angulaire De Faisceau (A) du Faisceau Laser Entrant (18), par réflexion sur la succession des n Miroirs (M) distants et en rotation; et,
v. configuré géométriquement de telle sorte que les n Faisceaux Laser Secondaires (45) générés successivement impactent un Ensemble Impacts (46) fait d'une multitude de n Points D'Impact (47, 47-1, ..., 47-11..., 47-21, ..., 47-24) distants, situés (i) soit sur le Plan D'Impact (48), faisant face à l'Assemblage Optique Rotatif (22), situé sur la Surface (4) de la Zone De Contrôle (3), et à proximité d'un Point De Détection (36) d'un Transducteur Électromagnétique Acoustique TEMA (34), ou, (ii) soit sur un Miroir Auxiliaire (49, 49-21, ..., 49-24);
d. des Moyens De Rotation (24) de l'Assemblage Optique Rotatif (22),
i. comprenant un Moteur D'Entraînement (24-a), connecté à l'Arbre Rotatif (14), et,
ii. configuré pour induire une rotation de l'Arbre Rotatif (14) autour de l'Axe De Rotation (15), avec un Sens De Rotation (DR) continu;
e. un Ensemble-Capteur (33), composé d'une pluralité de p (au moins deux) Transducteurs Électromagnétiques Acoustique (34) du type TEMA, ci après désignés par TEMAs, dont chaque Sonde Électromagnétique Active (35) :
i. fait face à la Zone De Contrôle (3) et est sensiblement centrée sur un Point De Détection (36) de la Zone De Contrôle (3), et,
ii. est configurée pour générer un Signal A-Scan (AS) de détection de la position des Défauts (12, 13) versus temps/distance, acquis à partir des Signaux Induits (11) au voisinage de son Point De Détection (36);
Ce Dispositif (1) présente la combinaison de particularités techniques suivantes :
a. son Assemblage Optique Rotatif (22), incluant ses n Miroirs (M), leurs pièces mécaniques de connexion et ses n Point De Réflexion (29, 29-11) associés, en rotation,
i. est monolithique, c'est-à-dire constitué de pièces mécaniques et/ou optiques toutes rigidement mécaniquement liées entre elles et en position fixe non modifiable les unes par rapport aux autres, et,
ii. est fixé rigidement par des Moyens De Fixation (23) sur le même Arbre Rotatif (14), et
iii. à une géométrie rigide indéformable au cours de sa rotation;
b. les n Miroirs (M) de l' Ensemble Réflecteur (25) et leurs n Points De Réflexion (29, 29-11) associés sont en position fixe par rapport au même Axe De Rotation (15) ;
c. les Distances De Réflexion (32) rotatives des n Points De Réflexion (29, 29-11) de tous les Miroirs (M), perpendiculairement et vis-à-vis de l' Axe De Rotation (15), sont toutes (i) constantes et égales entre elles pendant ladite rotation, et, (ii) sensiblement égales à la Distance De Faisceau (21);
d. chacun des n Points De Réflexion (29, 29-11) des n Miroirs (M), parcourt un Cercle De Rotation (C, C-1, ..., C-11, ...), (i) centré sur l'Axe De Rotation (15), et (ii) maintenu perpendiculaire à l'Axe De Rotation (15) pendant ladite rotation,
e. chacun des n Cercles De Rotation (C) (i) présente une projection, parallèlement à un plan de projection parallèle à l' Axe De Rotation (15) et passant par son Centre De Rotation (CR, CR-1, ..., CR-11, ...), formée d'un Segment De Mouvement Transversal (ST, ST-1, ..., ST-11, ...), perpendiculaire à l' Axe De Rotation (15) et centré sur son Centre De Rotation (CR), et, (ii) présente une projection, parallèlement à un plan de rotation perpendiculaire à l' Axe De Rotation (15) et passant par son Centre De Rotation (CR, CR-1, ..., CR-11, ...), formée d'un Cercle De Mouvement Projeté Planaire (CP, CP-1, ..., CP-11, ...), confondu avec le Cercle De Rotation (C), et ayant un Rayon De Rotation Projetée (RP, RP-1, ..., RP-11, ...), égal à la Distance De Faisceau (21) pendant ladite rotation ;
f. chaque Point De Réflexion (29) d'un Miroir (M) est positionné de manière fixe vis à vis d'une même Surface Cylindrique De Réflexion (38) rotative d'un Cylindre Virtuel De Réflexion (39) de révolution et rotatif,
i. à section circulaire constante,
ii. en rotation autour de l'Axe De Rotation (15),
iii. dont le Rayon De Cylindre De Réflexion (41) est constant et sensiblement égal (i) aux Rayons De Rotation (37, 37-1, ... , 37-11, ...) de chacun des n Cercle De Rotation (C, C-1, ..., C-11, ...), et, (ii) à la Distance De Faisceau (21),
iv. en sorte que la section transversale du Cylindre Virtuel De Réflexion (39) de révolution et de sa Surface Cylindrique De Réflexion (38) rotative est constamment circulaire,
v. mais dont la position longitudinale est fixe vis-à-vis de l'Arbre Rotatif (14), c'est-à-dire sans aucun déplacement longitudinal vis-à-vis de l'axe Axe De Rotation (15);
g. les Points De Réflexion (29) des Miroirs (M) sont positionnés sur une Ligne Hélicoïdale Pointillée (43) rotative
i. à enroulement hélicoïdal circulaire, de rayon égal à la Distance De Faisceau (21),
ii. et à pas de vis cylindrique circulaire,
iii. fixe ainsi que ses points sur la Surface Cylindrique De Réflexion (38), et en rotation avec elle, mais,
iv. dont la position longitudinale est fixe vis-à-vis de l'Arbre Rotatif (14), c'est-à-dire sans aucun déplacement longitudinal vis-à-vis de l'Axe De Rotation (15) ;
h. le Faisceau Laser Entrant (18) est, pendant la rotation, positionné le long de Lignes Génératrices De Réflexion (42) rectilignes successives de la Surface Cylindrique De Réflexion (38) rotative ;
i. attachées chacune à un Point De Réflexion (29) d'un Miroir (M),
ii. se déplaçant en rotation avec le Cylindre Virtuel De Réflexion (39),
iii. mais sans déplacement longitudinal vis-à-vis de l'Axe De Rotation (15).

2. Un Dispositif (1) selon la revendication 1, **caractérisé en ce que**, dans un Système De Coordonnées Cylindriques (CCS), dont l'Axe Cylindrique Polaire (52) coïncide avec l'Axe De Rotation (15), et dont le Plan De Référence (53) est perpendiculaire à l'Axe De Rotation (15) et le coupe à un certain Point D'Origine (O) de référence,
a. les Distances Angulaires Polaires (Dθ) entre les Coordonnées Angulaires (θ) de deux Points De Réflexion (29) successifs de la Ligne Hélicoïdale Pointillée (43) joignant tous les Points De Réflexion (29) et à enroulement circulaire sont positives et constantes;
b. les Distances Cylindriques (r) des Points De Réflexion (29) sont constantes et toutes égales à la Distance De Faisceau (21); et,
c. le Pas De Vis (57) cylindrique circulaire de la Ligne Hélicoïdale Pointillée (43) est positif et constant.

3. Un Dispositif (1) selon la revendication 2, **caractérisé en ce que**:
a. les Distances Angulaires Polaires (Dθ) constantes sont sensiblement égales à 360° divisé par le Nombre De Miroirs (n), Dθ = 360° / n;
En sorte que dans le Système De Coordonnées Cylindriques (CCS),
a. la Longueur Globale De Réflexion (Z), constituée de la différence entre les Hauteurs (z1, zn) des deux Miroirs Extrémaux (M1, Mn) les plus éloignés de l'Assemblage Optique Rotatif (22), est sensiblement égale au Pas De Vis (57) cylindrique de la Ligne Hélicoïdale Pointillée (43); et,
b. l'Ensemble Réflecteur (25) présente un Spectre Angulaire (AS) de Coordonnées Angulaires (θ) couvrant sensiblement 360°.

4. Un Dispositif (1) selon la revendication 1, **caractérisé en ce que**, lorsqu'on considère pour chaque Miroir (M, M11) son Segment Radial (63), joignant son Point De Réflexion (29) à son Point De Projection (64) sur l'Axe De Rotation (15); pour chaque Miroir (M) et vis-à-vis de son Plan D'Orientation (65) passant par le Point De Réflexion (29, 29-11) et perpendiculaire au Segment Radial (63):
a. le Segment Radial (63) a une Longueur Radiale (62) constante égale à la Distance De Faisceau (21),
b. l'Angle De Roulis (AR) rotatif par rapport à l'Axe De Rotation (15) est nul à 0°;
c. l'Angle De Tangage (AP) rotatif par rapport à l'Axe De Rotation (15) est le même pour tous les Miroirs (M); et,
d. la position longitudinale du Point De Projection (64) de chaque Segment Radial (63) est fixe selon l'Axe De Rotation (15) et vis-à-vis de l'Arbre Rotatif (14).
En sorte que:
a. les Faisceaux Laser Secondaires (45),
i. sont tous parallèles et disposés selon le même Plan De Faisceaux Secondaires (68), passant par l'Axe De Rotation (15) et perpendiculaires au Plan D'Impact (48); et,
ii. sont disposés selon un Réseau Plan De Faisceaux Secondaires (69);
b. tous les Points D'Impact (47) de la Zone De Contrôle (3) sont alignés sur une Ligne Pointillée D'Impact (70) rectiligne du Plan D'Impact (48), et sont distants d'une certaine Distance D'Impacts (71) entre deux Points D'impact (47) adjacents.

5. Un Dispositif (1) selon la revendication 4, **caractérisé en ce que** :
a. l'Angle De Tangage (AP) rotatif, par rapport à l'Axe De Rotation (15), de chaque Miroir (M) est fixe égal à 45°, et,
b. la Zone De Contrôle (3) et le Plan D'Impact (48) sont parallèles à l'Axe De Rotation (15);
En sorte que:
a. les Faisceaux Laser Secondaires (45) sont chacun perpendiculaires au Plan D'Impact (48); et,
b. la Longueur Secondaire (72) de chacun des Faisceaux Laser Secondaires (45), et donc la Dimension Verticale (73) de l'Assemblage Optique Rotatif (22) sont minimisées.

6. Un Dispositif (1) selon la revendication 1, **caractérisé en ce qu'**il est équipé par au moins un Processeur B-Scan (BSP) numérique, connecté aux Transducteurs Électromagnétique Acoustique TEMA (34), configuré pour;
a. traiter et combiner les informations de leurs Signaux A-Scan (AS) de détection, et,
b. générer une Présentation B-Scan (75) numérique bidimensionnelle d'une section de la Pièce Métallique (5),
i. dans un Plan De B-Scannographie (SAP) sensiblement confondu avec le Plan De Faisceaux Secondaires (68) vertical, perpendiculaire au Plan D'Impact (48) de la Zone De Contrôle (3) de la Pièce Métallique (5),
ii. sensiblement le long de la Ligne De Détection (77) joignant la Ligne Pointillée D'Impact (70), et,
iii. représentant les Positions Numériques (78) vis-à-vis de la Profondeur (79) des Discontinuités (12, 13) dans le Plan De B-Scannographie (SAP).

7. Un Dispositif (1) selon la revendication 1, **caractérisé en ce que** :
a. son Assemblage Optique Rotatif (22) est constitué d'un assemblage mécanique de Sections Support (80) géométriquement sensiblement identiques, et disposées cote à cote selon l'Axe De Rotation (15);
b. les Sections Support (80) sont assemblées de manière rigide entre elles,
c. un Miroir (M) est fixé sur chaque Section Support (80); et,
d. dans le Système De Coordonnées Cylindriques (CCS), dont l'Axe Cylindrique Polaire (52) coïncide avec l'Axe De Rotation (15), deux Sections Support (80) adjacentes équipées de leur Miroir (M), sont pivotées, l'une par rapport à l'autre, perpendiculairement à l'Axe De Rotation (15), d'une même Distance Angulaire Polaire (Dθ) entre deux Points De Réflexion (29) successifs appartenant à leurs Miroirs (M) respectifs de la Ligne Hélicoïdale Pointillée (43).

8. Un Dispositif (1) selon la revendication 7, **caractérisé en ce que** :
a. ses Sections Support (80) ont chacune la forme d'une Poutre Support (81) allongée, dont l'Axe Support (82) intersecte le l'Axe De Rotation (15);
b. chaque Poutre Support (81) est fixée à l'Arbre Rotatif (14) par un Moyen De Fixation (83);
c. un Miroir (M) est fixé sur une Extrémité Support (84) de chaque Poutre Support (81).

9. Un Dispositif (1) selon la revendication 7, **caractérisé en ce que** :
a. ses Sections Support (80) ont chacune sensiblement la forme d'un Disque Support (85) de forme cylindrique plate;
b. chaque Disque Support (85) est percé d'un Trou De Fixation (86), ménagé perpendiculairement et en son centre, et dont le Diamètre De Trou (87) est sensiblement égal au diamètre de l'Arbre Rotatif (14);
c. les Disques Support (85) sont enchâssés cote à cote sur Arbre Rotatif (14), le long et dans un plan d'empilement perpendiculaire à l'Axe De Rotation (15), par leur Trou De Fixation (86); et,
d. chaque Disque Support (85) est muni d'un Logement Support (88), ménagé sur sa Périphérie De Disque (89), sur lequel est fixé son Miroir (M).

10. Un Dispositif (1) selon la revendication 7, **caractérisé en ce que** :
a. son Assemblage Optique Rotatif (22) est équipé d'un Assemblage De Rigidification (90), constitué d'une pluralité de Tiges Rigides (91),
i. dont l'Axe De Rigidification (92) est parallèle à l'Axe De Rotation (15),
ii. fixes par rapport à l'Arbre Rotatif (14), et fixes l'une par rapport à l'autre; et,
b. chaque Tige Rigide (91) traverse au moins une Section Support (80); à laquelle elle est fixée rigidement par Emboitement (93) dans un Évidement De Rigidification (94) de cette Section Support (80).

11. Un Dispositif (1) selon la revendication 10, **caractérisé en ce que** :
a. les Tiges Rigides (91) sont disposées sensiblement le long de Lignes Génératrices De Rigidification (95) rectilignes d'un même Cylindre Virtuel De Rigidification (96) de révolution, et,
b. l'Axe De Cylindre De Rigidification (97) du Cylindre Virtuel De Rigidification (96) est confondu avec l'Axe De Rotation (15).

12. Un Dispositif (1) selon la revendication 11, **caractérisé en ce que** :
a. les Sections Support (80) de son Assemblage Optique Rotatif (22) ont chacune la forme de Disques Support (85), géométriquement identiques et de forme cylindrique plate, disposés cote à cote, de manière perpendiculaire et centrée par rapport à l'Axe De Rotation (15);
b. chaque Disque Support (85) est muni d'un Logement Support (88) ménagé sur sa Périphérie De Disque (89), sur lequel est fixé son Miroir (M);
c. son Assemblage De Rigidification (90) est formé de Tiges Rigides (91) constituée chacune d'un Tube Rigide Évidé (98) rectiligne,
i. ménageant intérieurement un Canal Longitudinal (99, 99-a) vide le traversant de part en part, selon son Axe De Rigidification (92), et,
ii. dont le Canal Longitudinal (99) est disposé sensiblement le long d'une Ligne Génératrice De Rigidification (95) rectiligne du Cylindre Virtuel De Rigidification (96);
d. la distance de chaque Canal Longitudinal (99) vis-à-vis de l'Axe De Rotation (15) est constante, et sensiblement égale au Rayon De Cylindre De Réflexion (41) et à la Distance De Faisceau (21), en sorte que le Cylindre Virtuel De Rigidification (96) est sensiblement confondu avec le Cylindre Virtuel De Réflexion (39) de révolution;
e. les Tubes Rigides Évidés (98; 98-a) sont enchâssés dans des Encoches De Disque (100) successives ménagées sur la Périphérie De Disque de certains Disque Support (85).

13. Un Dispositif (1) selon la revendication 12, **caractérisé en ce que** :
a. son Assemblage De Rigidification (90) comporte un Assemblage De Rigidification Tubulaire Amont (90-a) constitué par des Tubes Rigides Évidés Amont (98-a), qui ont des Longueurs De Tube (101) différentes, et sont géométriquement configurés de manière qu'ils s'étendent chacun longitudinalement entre,
i. d'une part, une Extrémité Amont De Tube Amont (102-a), (i) située au voisinage de la même Face Latérale Amont (103-a) du premier Disque Support Amont (104-a) de l'Assemblage Optique Rotatif (22), (ii) par laquelle pénètre perpendiculairement le Faisceau Laser Entrant (18),
ii. et d'autre, une Extrémité Avale De Tube Amont (105-a), disposée en regard du Miroir (M) d'un Disque Support Intermédiaire (106) particulier variable, différent pour chaque Tube Rigide Évidé Amont (98-a);
De telle sorte que, lorsque le Moteur D'Entraînement (24-a) et la Source Laser Entrante (16) sont activés :
a. les Axes De-Rigidification (92) des Tubes Rigides Évidés Amont (98-a) sont en rotation selon les Lignes Génératrices De Réflexion (42) rectilignes du Cylindre Virtuel De Réflexion (39) de révolution;
b. le Faisceau Laser Entrant (18)
i. pénètre successivement au travers du Canal Longitudinal (99) d'un des Tubes Rigides Évidés Amont (98-a) successifs,
ii. et impacte successivement le Point De Réflexion (29) d'un Miroir (M) d'un Disque Support Intermédiaire (106) particulier lui faisant face;
c. en sorte que l'Assemblage De Rigidification Tubulaire Amont (90-a) assure concomitamment
i. une rigidification et une immunisation aux vibrations longitudinales de l'Assemblage Optique Rotatif (22), et,
ii. une protection de sécurité par encapsulation du Faisceau Laser Entrant (18) pendant la rotation de l'Assemblage Optique Rotatif (22).

14. Un Dispositif (1) selon la revendication 13 **caractérisé en ce que** :
a. son Assemblage De Rigidification (90) comporte en outre un Assemblage De Rigidification Tubulaire Aval (90-b), constitué par des Tubes Rigides Évidés Aval (98-b), qui ont des Longueurs De Tube (101) différentes, et sont géométriquement configurés de manière qu'ils s'étendent chacun longitudinalement entre,
i. d'une part, une Extrémité Amont De Tube Aval (102-b), disposée en arrière du Miroir (M) d'un Disque Support Intermédiaire (106) particulier, différent pour chaque Tube Rigide Évidé Aval (98-b); et,
ii. d'autre part, une Extrémité Avale De Tube Aval (105-b), située au voisinage de la même Face Latérale Aval (103-b) du dernier Disque Support Aval (104-b) de l'Assemblage Optique Rotatif (22);
b. l'Assemblage De Rigidification Tubulaire Amont (90-a) et l'Assemblage De Rigidification Tubulaire Aval (90-b)
i. ont une topologie similaire, et, sont complémentaires, et ,
ii. sont sensiblement l'image l'un de l'autre, après une réflexion miroir combinée avec une rotation axiale de 180°;
De telle sorte que :
a. la combinaison de l'Assemblage De Rigidification Tubulaire Amont (90-a) et de l'Assemblage De Rigidification Tubulaire Aval (90-b)
i. assure une rigidification et une immunisation aux vibrations longitudinales de l'Assemblage Optique Rotatif (22) sur toute sa longueur pendant sa rotation, et,
ii. sert de guide pour permettre un assemblage et une indexation angulaire aisés des Disques Support (85); et,
b. les Tubes Rigides Évidés Aval (98-b) ne sont jamais pénétrés par le Faisceau Laser Entrant (18).

15. Un Dispositif (1) selon la revendication 1, **caractérisé en ce que** :
a. il est équipé d'un Assemblage De Focalisation (107), constitué d'une pluralité de Lentilles De Focalisation (108), fixes vis-à-vis de l'Axe De Rotation (15) et du Plan D'Impact (48); et,
b. ces Lentilles De Focalisation (108) sont positionnées entre l'Assemblage Optique Rotatif (22) et le Plan D'Impact (48), et leur Axe Optique (109) est perpendiculaire au Plan D'Impact (48).

16. Un Dispositif (1) selon la revendication 15, **caractérisé en ce que** :
a. son Assemblage De Focalisation (107) est équipé de Lentilles De Focalisation Cylindriques (110) (de type cylindrique ou semi-cylindrique) présentant un Axe De Cylindre Optique (111) sensiblement parallèle au Plan D'Impact (48).

17. Un Dispositif (1) selon la revendication 16, **caractérisé en ce que** son Assemblage De Focalisation (107) est constitué de Lentilles De Focalisation Cylindriques (110),
a. configurées chacune pour focaliser les Faisceaux Laser Secondaires (45) les traversant,
i. selon un Spot D'Impact Laser Rectangulaire (112) étroit.
ii. c'est-à-dire dont la Longueur De Spot Laser (113) est au moins deux fois supérieure à sa Largeur De Spot Laser (114), et,
b. définissant ainsi un Axe De Spot Rectangulaire (115)
i. orienté selon la Longueur De Spot Laser (113).

18. Un Dispositif (1) selon la revendication 1, **caractérisé en ce que** :
a. il comprend un Support Secondaire (116), en position fixe vis-à-vis de l'Axe De Rotation (15) et du Plan D'Impact (48);
b. il comprend un Ensemble Réflecteur Auxiliaire (117, 117-a), composé d'au moins deux (q) Miroirs Auxiliaires (49, 118, 118-a-1, 118-a-2, 118-a-3),
i. chacun étant en position fixe entre eux et vis-à-vis du Support Secondaire (116), et,
ii. configurés géométriquement pour dévier par réflexions successives des Faisceaux Laser Auxiliaires (119, 119-a-1, 119-a-2, 119-a-3, 119-a-4) d'une Collection Faisceaux Auxiliaire (120, 120-a, 120-b, 120-c, 120-d), dont le premier faisceau dévié (119-a-1) est constitué d'un des Faisceaux Laser Secondaires (45, 45-21) émis par l'Assemblage Optique Rotatif (22);
iii. qui sont chacun successivement impactés par un des Faisceaux Laser Auxiliaires (119, 119-a-1, 119-a-2, 119-a-3) en un Point De Réflexion Auxiliaire (121, 121-a-1, 121-a-2, 121-a-3) de ce Miroir Auxiliaire (118, 118-a-1, 118-a-2, 118-a-3 ) pour constituer un nouveau Faisceau Laser Auxiliaire dévié de la Collection Faisceaux Auxiliaire (120, 120-a, 120-b, 120-c, 120-d), chaque fois avec un changement de Direction Angulaire De Faisceau (A) de ce Faisceau Laser Auxiliaire (119, 119-a-1, 119-a-2, 119-a-3) impactant;
c. un Miroir Auxiliaire Amont (122, 118-a-1) de l'Ensemble Réflecteur Auxiliaire (117, 117-a) est positionné sur le trajet d'un Faisceau Laser Secondaire (45, 45-21); et est configuré géométriquement
i. pour être impacté par ce Faisceau Laser Secondaire (45, 45-21), sur son Point De Réflexion Auxiliaire (121, 121-a-1);
ii. et pour le réfléchir en un premier Faisceau Laser Auxiliaire (119, 119-a-2) dévié de la Collection Faisceaux Auxiliaire (120, 120-a);
d. un Miroir Auxiliaire Aval (123, 118-a-3) de l'Ensemble Réflecteur Auxiliaire (117, 117-a) est configuré géométriquement,
i. pour faire face sensiblement à la fois (i) au dernier Faisceau Laser Auxiliaire (119, 119-a-3) de la Collection Faisceaux Auxiliaire (120, 120-a), et (ii) à la Zone De Contrôle (3); et,
ii. pour dévier ce dernier Faisceau Laser Auxiliaire (119, 119-a-3), selon un ultime Faisceau Laser Secondaire Dévié (124, 119-a4, 124-a), qui impacte, en aval de la Collection Faisceaux Auxiliaire (120, 120-a), un Point D'impact Dévié (125, 125-a) du Plan D'Impact (48) de la Zone De Contrôle (3) voisin d'un Point De Détection (36) d'un Transducteur Électromagnétique Acoustique TEMA (34).

19. Un Dispositif (1) selon la revendication 18, **caractérisé en ce que** :
a. il comprend Assemblage Réflecteur Auxiliaire (126, 126-1), constitué d'au moins deux Ensembles Réflecteur Auxiliaires (117, 117-a, 117-c),
b. les dits au moins deux Ensembles Réflecteur Auxiliaires (117, 117-a, 117-c) sont configurés géométriquement de telle sorte que leurs au moins deux Faisceaux Laser Secondaires Déviés (124, 124-a, 124-c),
i. sont parallèles et disposés selon un même Plan De Faisceaux Secondaires Déviés (127, 127-1),
ii. sont sensiblement perpendiculaires au Plan D'Impact (48),
iii. sont disposés selon un Réseau Plan De Faisceaux Secondaires Déviés (128, 128-1), et,
iv. impactent un Ensemble Impacts Déviés (129, 129-1) fait d'au moins deux Points D'Impact Déviés (125, 125-a, 125-c) distants, disposés sur une Ligne Pointillée D'Impacts Déviés (130, 130-1) rectiligne du Plan D'Impact (48) de la Zone De Contrôle (3).

20. Un Dispositif (1) selon la revendication 19, **caractérisé en ce que** :
a. il est équipé d'un Assemblage De Focalisation (107) constituée de Lentilles De Focalisation (108), positionnées de manière fixe vis-à-vis de l'Axe De Rotation (15) et du Plan D'Impact (48); et,
b. les Lentilles De Focalisation (108) sont configurées géométriquement en deux groupes, selon le positionnement de leurs Axes Optiques (109), incluant;
i. un premier groupe fait de Lentilles De Focalisation Secondaires (131), (i) dont l'Axe Optique Secondaire (132) est confondu avec l'Axe Secondaire (133) d'un Faisceau Laser Secondaire (45), issu du Point De Réflexion (29) d'un Miroir (M) rotatif, et (ii) dans ce cas elle est fixée vis-à-vis de l'Axe De Rotation (15), entre le Cylindre Virtuel De Réflexion (39) de révolution et le Point D'Impact (47) de ce Faisceau Laser Secondaire (45), et, (iii) configurées pour focaliser ce Faisceau Laser Secondaire (45) sur son Point D'Impact (47) de la Ligne Pointillée D'Impact (70), et,
ii. un second groupe fait de Lentilles De Focalisation Auxiliaires (134), (i) dont l'Axe Optique Auxiliaire (135) est confondu avec l'Axe Auxiliaire (136) d'un ultime Faisceau Laser Secondaire Dévié (124), issu du Point De Réflexion Auxiliaire (121, 121-b-3) final d'un Miroir Auxiliaire Aval (123, 118-b-3), et (ii) dans ce cas elle est fixée vis-à-vis de l'Axe De Rotation (15), entre le Cylindre Virtuel De Réflexion (39) de révolution et le Point D'impact Dévié (125, 125-b) du Faisceau Laser Secondaire Dévié (124, 124-a), et, (iii) configurées pour focaliser ce Faisceau Laser Secondaire Dévié (124, 124-b) sur son Point D'impact Dévié (125, 125-b) d'une Ligne Pointillée D'Impacts Déviés (130, 130-2).

21. Un Dispositif (1) selon la revendication 20, **caractérisé en ce que** :
a. son Assemblage De Focalisation (107) est constitué de Lentilles De Focalisation Cylindriques (110),
i. fixes vis-à-vis du Support Secondaire (116);
ii. présentant un Axe De Cylindre Optique (111) sensiblement parallèle au Plan D'Impact (48),
iii. configurées chacune pour focaliser un Faisceau Laser Secondaire (45) ou un Faisceau Laser Secondaire Dévié (124) selon un Spot D'Impact Laser Rectangulaire (112) sur le Plan D'Impact (48), selon un Axe De Spot Rectangulaire (115);
b. ces Lentilles De Focalisation Cylindriques (110) sont géométriquement configurées de telle manière que l'Assemblage De Focalisation (107) soit divisé en deux groupes:
i. d'une part, une Collection De Focalisation Longitudinale (137), constituée de Lentilles De Focalisation Cylindriques Longitudinales (138), c'est-à-dire dont l' Axe De Cylindre Optique (111) est sensiblement longitudinal vis-à-vis de de l'Axe De Rotation (15), qui sont configurées pour focaliser un faisceau lumineux les traversant sur un Spot D'Impact Laser Rectangulaire Longitudinal (139), et,
ii. d'autre part, une Collection De Focalisation Transversale (140), constituée de Lentilles De Focalisation Cylindriques Transversales (141), c'est-à-dire dont l' Axe De Cylindre Optique (111) est sensiblement transversal vis-à-vis de de l'Axe De Rotation (15), qui sont configurées pour focaliser un faisceau lumineux les traversant sur un Spot D'Impact Laser Rectangulaire Transversal (142).

22. Un Dispositif (1) selon la revendication 21, **caractérisé en ce que** :
a. Il comporte à la fois :
i. un Réseau Plan De Faisceaux Secondaires (69), constitué de Faisceaux Laser Secondaires (45, 45-11), (i) émis par l'Assemblage Optique Rotatif (22), (ii) qui impactent les Points D'Impact (47) de la Ligne Pointillée D'Impacts (70), et,
ii. au moins un Réseau Plan De Faisceaux Secondaires Déviés (128, 128-1, 128-2), constitué de Faisceaux Laser Secondaires Déviés (124, 124-a-21, 124-b-22, 124-c-23, 124-d-24), (i) issus d'un Assemblage Réflecteur Auxiliaire (126, 126-1, 126-2), (ii) qui impactent les Points D'Impact Déviés (125, 125-a-21, 125-b-22, 125-c-23, 125-d-24) d'au moins une Ligne Pointillée D'Impacts Déviés (130, 130-1, 130-2);
b. Les Lentilles De Focalisation Cylindriques Longitudinales (138), et les Lentilles De Focalisation Cylindriques Transversales (141) sont positionnées de manière complémentaire et exclusive en deux groupes, en sorte que:
i. un premier groupe (110-1) focalise le Réseau Plan De Faisceaux Secondaires (69) sur sa Ligne Pointillée D'Impact (70), (i) uniquement selon des Spots D'Impact Laser Rectangulaire Longitudinaux (139), ou (ii) uniquement selon des Spots D'Impact Laser Rectangulaire Transversaux (142); et,
ii. alternativement, et de manière exclusive de la précédente, un second groupe (110-2) focalise le Réseau Plan De Faisceaux Secondaires Déviés (128, 128-1, 128-2) sur une Ligne Pointillée D'Impacts Déviés (130, 130-1, 130-2), (i) uniquement selon des Spots D'Impact Laser Rectangulaire Transversaux (142), ou (ii) uniquement selon des Spots D'Impact Laser Rectangulaire Longitudinaux (139).

23. Un Dispositif (1) selon la revendication 1 , **caractérisé en ce que** :
a. son Ensemble Capteur (33) est composé de TEMAs Directionnels (143), du type présentant un Orientation Directionnelle Privilégiée De Capture (144) des Signaux Induits (11) générés par l'interaction des Vibrations Mécaniques (8) avec les Discontinuités De Surface (12) et les Discontinuités De Sous Surface (13);
b. son Ensemble Capteur (33) est configuré de manière à être divisé en deux groupes,
i. d'une part une Collection De Capteurs Longitudinaux (145), constituée de TEMAs Longitudinaux (146, 146-T, 146-D), c'est-à-dire à Orientation Directionnelle Privilégiée De Capture (144) selon une direction longitudinale vis-à-vis de de l'Axe De Rotation (15), et,
ii. d'autre part une Collection De Capteurs Transversaux (147), constituée de TEMAs Transversaux (148, 148-T, 148-D), c'est-à-dire à Orientation Directionnelle Privilégiée De Capture (144) selon une direction transversale vis-à-vis de de l'Axe De Rotation (15);
c. les Spots D'Impact Laser Rectangulaire Transversaux (142, 15-a-21, 125-b-22, 125-c-23, 125-d-24) sont (en nombre) majoritairement situés entre deux TEMAs Longitudinaux (146); et,
d. les Spots D'Impact Laser Rectangulaire Longitudinaux (139, 47-11) sont (en nombre) majoritairement situés au voisinage et au dessus ou en dessous de TEMAs Transversaux (148), en faisant référence à un orientation de positionnement en hauteur prise perpendiculairement à l'Axe De Rotation (15).

24. Un Dispositif (1) selon la revendication 20, **caractérisé en ce que** son Assemblage Optique Rotatif (22) est géométriquement configuré de manière que :
a. il comporte à la fois :
i. un Réseau Plan De Faisceaux Secondaires (69), (i) constitué de Faisceaux Laser Secondaires (45, 45-11), (ii) qui impactent les Points D'Impact (47) de la Ligne Pointillée D'Impact (70) principale,
ii. deux Réseaux Plan De Faisceaux Secondaires Déviés (128, 128-1, 128-2), (i) constitués de deux groupes de Faisceaux Laser Secondaire Déviés (124-a, 124-c) et (124-b, 124-d), (ii) issus de deux Assemblages Réflecteur Auxiliaires (126, 126-1, 126-2), (iii) qui impactent deux Lignes Pointillées D'Impacts Déviés (130, 130-1, 130-2) auxiliaires distantes, et,
b. la Ligne Pointillée D'Impact (70) principale et les deux Lignes Pointillées D'impacts Déviés (130, 130-1, 130-2) auxiliaires sont toutes trois parallèles à l'Axe De Rotation (15) et distantes entre elles; et,
c. les deux Lignes Pointillées D'impacts Déviés (130, 130-1, 130-2) sont situées de part et d'autre, c'est-à-dire au dessus et au dessous de la Ligne Pointillée D'Impact (70) principale, en faisant référence à un orientation de positionnement en hauteur prise perpendiculairement à l'Axe De Rotation (15).

25. Un Dispositif (1) selon la revendication 24, **caractérisé en ce que** son Assemblage Optique Rotatif (22) est géométriquement configuré de manière que :
a. sa la Ligne Pointillée D'Impact (70) principale est formée de Spots D'Impact Laser Rectangulaire Longitudinaux (139); et,
b. ses deux Lignes Pointillées D'impacts Déviés (130, 130-1, 130-2) auxiliaires sont formées de Spots D'Impact Laser Rectangulaire Transversaux (142, 125-a-21, 125-b-22, 125-c-23, 125-d-24).

26. Un Dispositif (1) selon les revendications 23 et 25, **caractérisé en ce que** son Assemblage Optique Rotatif (22) est géométriquement configuré de manière que :
a. ses TEMAs Longitudinaux (146, 146-T, 146-D) sont majoritairement (en nombre)
i. alignés de part et d'autre et de manière alternée vis-à-vis de Ligne Pointillée D'Impact (70) principale, et,
ii. positionnés longitudinalement a coté d'un Spot D'Impact Laser Rectangulaire Transversal (142, 125-a-21, 125-b-22, 125-c-23, 125-d-24) d'une des deux Lignes Pointillées D'impacts Déviés (130, 130-1, 130-2); et,
b. ses TEMAs Transversaux (148, 148-T, 148-D) sont majoritairement (en nombre) positionnés et alignés alternativement au dessus et/ou en dessous des TEMAs Longitudinaux (146, 146-T, 146-D), en faisant référence à un orientation de positionnement de hauteur prise dans une direction perpendiculaire à l'Axe De Rotation (15).

27. Un Dispositif (1) selon la revendication 1, comprenant en outre :
a. des Moyens De Contrôle De La Position Angulaire (149) du seul Arbre Rotatif (14), et donc de l'Assemblage Optique Rotatif (22) monolithique en rotation vis-à-vis de l' Axe De Rotation (15);
i. reliés à l'unique Arbre Rotatif (14);
b. des Moyens De Contrôle Et Cadencement Des Impulsions Laser (150),
i. reliés électriquement à la Source Laser Entrante (16),
ii. et configuré pour contrôler et/ou cadencer la génération d'impulsions laser par la Source Laser Entrante (16);
c. des Moyens De Cadencement De La Rotation Moteur (151),
i. reliés électriquement au Moteur D'Entraînement (24-a);
d. un Processeur De Cadencement Synchronisé Impulsions Laser Rotation (152),
i. relié électriquement aux Moyens De Contrôle De La Position Angulaire (149) de l'Arbre Rotatif (14), et,
ii. relié électriquement aux Moyens De Cadencement De La Rotation Moteur (151), pour recevoir continument la position angulaire de l'Arbre Rotatif (14);
Ce Dispositif (1) étant **caractérisé en ce que**, le Processeur De Cadencement Synchronisé Impulsions Laser Rotation (152) est configuré:
a. soit en Mode Pilotage Moteur (153),
i. pour piloter électriquement les Moyens De Cadencement De La Rotation Moteur (151),
ii. en fonction du cadencement des impulsions laser générées par la Source Laser Entrante (16),
iii. ce afin de successivement positionner de manière adaptative la position angulaire axiale de l'Assemblage Optique Rotatif (22),
iv. en sorte que le Nombre D'impulsions D'Impact Miroir (NIM) des impulsions du Faisceau Laser Entrant (18) impactant chacun des Miroirs (M, M1, ..., M20) en rotation, au voisinage de son Point De Réflexion (29) de la Ligne Hélicoïdale Pointillée (43) rotative, soit constant (par exemple NIM =2); ou,
b. soit en Mode Pilotage Impulsions (154),
i. pour piloter électriquement les Moyens De Contrôle Et Cadencement Des Impulsions Laser (150),
ii. en fonction du cadencement de la position angulaire axiale de l'Assemblage Optique Rotatif (22), reçue continument des Moyens De Contrôle De La Position Angulaire (149),
iii. ce afin de successivement adapter le cadencement des impulsions du Faisceau Laser Entrant (18),
iv. en sorte que le Nombre D'impulsions D'Impact Miroir (NIM) des impulsions du Faisceau Laser Entrant (18) impactant chacun des Miroirs (M, M1, ..., M20) en rotation, au voisinage de son Point De Réflexion (29) de la Ligne Hélicoïdale Pointillée (43) rotative, soit constant (par exemple NIM =2).

## Patentansprüche

1. Ein Hybridgerät (1) zur zerstörungsfreien Ultraschallprüfung mit elektromagnetischen Akustikwandlern/Laser, bestehend aus einer monolithischen rotierenden optischen Baugruppe (22) aus beweglichen Matrix-Lasersendern mit Laser-Mehrstrahl-Hopping-Führung zur Prüfung metallurgischer Objekte, zur Ausrüstung einer Werkzeugmaschine (2), die eine Qualitätskontrolle bei der Metallverarbeitung in einer Kontrollzone (3) der Oberfläche (4) eines Metallteils (5) durchführt, und zwar von der Art, dass mechanische Schwingungen (8) im Körper (9) des Metallteils (5) induziert werden, und zur Überwachung der erzeugten induzierten Ultraschallsignale (11), um Oberflächendiskontinuitäten (12) und Untergrunddiskontinuitäten (13) zu identifizieren; dieses Gerät (1) umfasst:
a. eine rotierende Welle (14), die sich um eine Rotationsachse (15) drehen kann;
b. eine Eingangslaserquelle (16), die mit optischen Führungsmitteln (17) ausgestattet ist und einen Eingangslaserstrahl (18) mit einer bestimmten Eingangslaserleistung (IP) erzeugt, der entlang einer Eingangsstrahlachse (20) parallel zur Rotationsachse (15) gerichtet ist, und zwar in einem bestimmten Strahlabstand (21) von der Rotationsachse (15);
c. eine rotierende optische Baugruppe (22), die sich um die Rotationsachse (15) drehen kann; und eine Reflektoranordnung (25) umfasst,
i. die aus einer Vielzahl von n (mindestens zwei) Spiegeln (M, M1, M2, ..., M11, M21, ..., M24) besteht und als optische Barriere (27) fungiert,
ii. wobei jeder der Spiegel (M, M11) so konfiguriert ist, dass er in bestimmten Drehpositionen der drehbaren optischen Anordnung (22) die Achse (20) des einfallenden Strahls schneidet,
iii. wobei jeder Spiegel (M) einen Reflexionspunkt (29, 29-11) aufweist, (i) der in einem senkrechten Rotationsreflexionsabstand (32) von der Rotationsachse (15) positioniert ist, (ii) um den auf diesen Spiegel (M) auftreffenden einfallenden Laserstrahl (18) zu reflektieren, (iii) mit einer Änderung der Strahlwinkelrichtung (A) und (iv) mit einer Reflexionseffizienz (E) der Energie des einfallenden Laserstrahls (18) von im Wesentlichen einhundert Prozent;
iv. geometrisch so konfiguriert, dass (i) der eingehende Laserstrahl (18) nacheinander auf einen Reflexionspunkt (29, 29-11) trifft, der einem seiner n entfernten Spiegel (M, M11) zugeordnet ist und zu diesem gehört, (ii) jeder der n Reflexionspunkte (29, 29-11) der n Spiegel (M) einen Rotationskreis (C, C-1, ..., C-11, ...) mit einem Rotationsradius (37, 37-1..., 37-11 ...) umläuft, der um ein Rotationszentrum (CR, CR-1, ..., CR-11, ...) zentriert ist, das auf der Rotationsachse (15) fixiert ist; und (iii) die n verschiedenen Spiegel (M, M1, M2, ..., M11, M21, ..., M24) den eingehenden Laserstrahl (18) auf flexible, sukzessive und diskontinuierliche Weise entsprechend einer sekundären Strahlsammlung (44) umlenken, die aus einem Bündel von n entfernten sekundären Laserstrahlen (45, 45-1, ..., 45-11, ..., 45-24) besteht, die aus einer Vielzahl von sukzessiven und diskontinuierlichen Änderungen der Winkelstrahlrichtungen (A) des eingehenden Laserstrahls (18) durch Reflexion an der Abfolge der n entfernten und rotierenden Spiegel (M) resultieren; und
v. geometrisch so konfiguriert, dass die n nacheinander erzeugten sekundären Laserstrahlen (45) auf einen Aufprallsatz (46) treffen, der aus einer Vielzahl von n entfernten Aufprallpunkten (47, 47-1, ..., 47-11..., 47-21, ..., 47-24) besteht, die sich (i) entweder auf der Aufprallebene (48) gegenüber der rotierenden optischen Baugruppe (22) befinden, die sich auf der Oberfläche (4) der Kontrollzone (3) befindet und in der Nähe eines Erfassungspunkts (36) eines elektromagnetischen akustischen TEMA-Wandlers (34) liegt, oder (ii) entweder auf einem Hilfsspiegel (49, 49-21, ..., 49-24);
d. Rotationsmittel (24) der rotierenden optischen Baugruppe (22),
i. bestehend aus einem Antriebsmotor (24-a), der mit der Drehwelle (14) verbunden ist und,
ii. so konfiguriert ist, dass er eine Drehung der Drehwelle (14) um die Drehachse (15) mit einer kontinuierlichen Drehrichtung (DR) bewirkt;
e. eine Sensorbaugruppe (33), bestehend aus einer Vielzahl von (mindestens zwei) akustischen elektromagnetischen Wandlern (34) des TEMA-Typs, im Folgenden als TEMAs bezeichnet, wobei jede aktive elektromagnetische Sonde (35)
i. der Kontrollzone (3) zugewandt und im Wesentlichen auf einen Erfassungspunkt (36) der Kontrollzone (3) zentriert ist und
ii. so konfiguriert ist, dass sie ein A-Scan-Signal (AS) erzeugt, um die Position der Defekte (12, 13) im Verhältnis zur Zeit/Entfernung zu erfassen, das aus den induzierten Signalen (11) in der Nähe ihres Erfassungspunkts (36) gewonnen wird;
Dieses Gerät (1) zeichnet sich dadurch aus, dass es die folgende Kombination technischer Merkmale aufweist:
f. seine rotierende optische Baugruppe (22), einschließlich seiner n Spiegel (M), ihrer mechanischen Verbindungsteile und ihrer n zugehörigen Reflexionspunkte (29, 29-11),
i. ist bei Rotation monolithisch, d. h., sie besteht aus mechanischen und/oder optischen Teilen, die alle mechanisch starr miteinander verbunden sind und sich in einer festen Position befinden, die relativ zueinander nicht verändert werden kann, und
ii. ist durch Befestigungsmittel (23) starr auf derselben Rotationswelle (14) und
iii. an einer starren Geometrie befestigt, die während ihrer Rotation nicht verformt werden kann;
g. die n Spiegel (M) der Reflektorbaugruppe (25) und ihre n zugehörigen Reflexionspunkte (29, 29-11) befinden sich in einer festen Position relativ zu derselben Rotationsachse (15);
h. die rotierenden Reflexionsabstände (32) der n Reflexionspunkte (29, 29-11) aller Spiegel (M), senkrecht zu und in Bezug auf die Rotationsachse (15), sind alle (i) während der Rotation konstant und einander gleich und (ii) im Wesentlichen gleich dem Strahlabstand (21);
i. jeder der n Reflexionspunkte (29, 29-11) der n Spiegel (M) einen Rotationskreis (C, C-1, ..., C-11, ...) durchläuft, (i) der auf der Rotationsachse (15) zentriert ist und (ii) während der Rotation senkrecht zur Rotationsachse (15) gehalten wird,
j. wobei jeder der n Rotationskreise (C) (i) eine Projektion parallel zu einer Projektionsebene parallel zur Rotationsachse (15) hat und durch ihr Rotationszentrum (CR, CR-1, ..., CR-11, ...) verläuft, die aus einem Querbewegungssegment (ST, ST-1, ..., ST-11, ...) gebildet wird, das senkrecht zur Rotationsachse (15) ist und auf ihrem Rotationszentrum (CR) zentriert ist, und (ii) eine Projektion parallel zu einer Rotationsebene senkrecht zur Rotationsachse (15) hat und durch ihr Rotationszentrum (CR, CR-1, ..., CR-11, ...) verläuft, die aus einem planaren projizierten Bewegungskreis (CP, CP-1, ..., CP-11, ...), verschmolzen mit dem Rotationskreis (C) und mit einem projizierten Rotationsradius (RP, RP-1, ..., RP-11, ...), der der Strahldistanz (21) während der Rotation entspricht;
k. jeder Reflexionspunkt (29) eines Spiegels (M) ist in Bezug auf dieselbe rotierende zylindrische Reflexionsoberfläche (38) eines virtuellen Reflexionszylinders (39) fest positioniert und rotiert
i. mit einem konstanten kreisförmigen
ii. Querschnitt um die Rotationsachse (15),
iii. dessen Reflexionszylinderradius (41) konstant und im Wesentlichen gleich (i) den Rotationsradien (37, 37-1, ..., 37-11, ...) jedes der n Rotationskreise (C, C-1, ..., C-11, ...) und (ii) der Strahldistanz (21) ist,
iv. sodass der Querschnitt des virtuellen Reflexionszylinders (39) und seiner rotierenden zylindrischen Reflexionsoberfläche (38) konstant kreisförmig ist,
v. dessen Längsposition jedoch in Bezug auf die Rotationswelle (14) fest ist, d. h. ohne jegliche Längsverschiebung in Bezug auf die Rotationsachse (15);
l. die Reflexionspunkte (29) der Spiegel (M) sind auf einer rotierenden gepunkteten Schraubenlinie (43)
i. mit kreisförmiger Schraubenwindung positioniert, deren Radius der Strahldistanz (21) entspricht,
ii. und mit kreisförmiger zylindrischer Schraubensteigung,
iii. die ebenso wie ihre Punkte auf der zylindrischen Reflexionsfläche (38) befestigt ist und sich mit dieser dreht,
iv. deren Längsposition jedoch in Bezug auf die rotierende Welle (14) fest ist, d. h. ohne Längsverschiebung in Bezug auf die Rotationsachse (15);
m. der eingehende Laserstrahl (18) wird während der Rotation entlang aufeinanderfolgender geradliniger Reflexionserzeugungslinien (42) der rotierenden zylindrischen Reflexionsfläche (38) positioniert;
i. jede ist mit einem Reflexionspunkt (29) eines Spiegels (M) verbunden,
ii. der sich mit dem virtuellen Reflexionszylinder (39) dreht,
iii.jedoch ohne Längsverschiebung in Bezug auf die Rotationsachse (15).

2. Eine Vorrichtung (1) nach Anspruch 1, **dadurch gekennzeichnet, dass** in einem zylindrischen Koordinatensystem (CCS), dessen polare Zylinderachse (52) mit der Rotationsachse (15) zusammenfällt und dessen Referenzebene (53) senkrecht zur Rotationsachse (15) steht und diese an einem bestimmten Referenzursprungspunkt (O) schneidet,
a. die polaren Winkelabstände (Dθ) zwischen den Winkelkoordinaten (θ) zweier aufeinanderfolgender Reflexionspunkte (29) der gepunkteten Schraubenlinie (43),
b. die alle Reflexionspunkte (29) verbindet und kreisförmig gewunden ist, sind positiv und konstant; die zylindrischen Abstände (r) der Reflexionspunkte (29) sind konstant und alle gleich der Strahldistanz (21); und
c. die kreisförmige zylindrische Schraubensteigung (57) der gepunkteten Schraubenlinie (43) ist positiv und konstant.

3. Eine Vorrichtung (1) nach Anspruch 2, **dadurch gekennzeichnet, dass**:
a. die konstanten polaren Winkelabstände (Dθ) entsprechen ungefähr 360° geteilt durch die Anzahl der Spiegel (n), Dθ = 360° / n;
Damit im Zylinderkoordinatensystem (CCS)
b. die Gesamtreflexionslänge (Z), die sich aus der Differenz zwischen den Höhen (z1, zn) der beiden von der rotierenden optischen Baugruppe (22) am weitesten entfernten Endspiegel (M1, Mn) zusammensetzt, ist im Wesentlichen gleich der zylindrischen Schraubensteigung (57) der gepunkteten Schraubenlinie (43); und
c. die Reflektorbaugruppe (25) weist ein Winkelspektrum (AS) von Winkelkoordinaten (θ) auf, das im Wesentlichen 360° abdeckt.

4. Eine Vorrichtung (1) nach Anspruch 1, **dadurch gekennzeichnet, dass** bei Betrachtung des Radialsegments (63) jedes Spiegels (M, M11), das seinen Reflexionspunkt (29) mit seinem Projektionspunkt (64) auf der Rotationsachse (15) verbindet, für jeden Spiegel (M) und in Bezug auf seine Orientierungsebene (65), die durch den Reflexionspunkt (29, 29-11) verläuft und senkrecht zum Radialsegment (63) steht, gilt:
a. das Radialsegment (63) weist eine konstante Radiallänge (62) auf, die der Strahldistanz (21) entspricht,
b. der Rotationsrollwinkel (AR) relativ zur Rotationsachse (15) beträgt 0°,
c. der Rotationsnickwinkel (AP) relativ zur Rotationsachse (15) ist für alle Spiegel (M) gleich, und
d. die Längsposition des Projektionspunkts (64) jedes Radialsegments (63) ist entlang der Rotationsachse (15) und in Bezug auf die Rotationswelle (14) fixiert.
So dass:
e. die sekundären Laserstrahlen (45)
i. sind alle parallel und entsprechend der gleichen sekundären Strahlebene (68) angeordnet, die durch die Rotationsachse (15) verläuft und senkrecht zur Aufprallebene (48) steht; und
ii. sie sind entsprechend einem sekundären Strahlebenennetzwerk (69) angeordnet;
f. alle Aufprallpunkte (47) der Kontrollzone (3) sind auf einer geraden gepunkteten Aufpralllinie (70) der Aufprallebene (48) ausgerichtet und durch einen bestimmten Aufprallabstand (71) zwischen zwei benachbarten Aufprallpunkten (47) getrennt.

5. Eine Vorrichtung (1) nach Anspruch 4, **dadurch gekennzeichnet, dass**:
a. der rotierende Nickwinkel (AP) jedes Spiegels (M) relativ zur Rotationsachse (15) ist fest auf 45° eingestellt und
b. die Kontrollzone (3) und die Aufprallebene (48) verlaufen parallel zur Rotationsachse (15);
So dass:
c. die sekundären Laserstrahlen (45) verlaufen jeweils senkrecht zur Auftreffebene (48); und
d. die sekundäre Länge (72) jedes der sekundären Laserstrahlen (45) und damit die vertikale Abmessung (73) der rotierenden optischen Baugruppe (22) sind minimiert.

6. Eine Vorrichtung (1) nach Anspruch 1, **dadurch gekennzeichnet, dass** sie mit mindestens einem digitalen B-Scan-Prozessor (BSP) ausgestattet ist, der mit den elektromagnetischen akustischen Wandlern (34) von TEMA verbunden ist und für Folgendes konfiguriert ist:
a. Verarbeiten und kombinieren Sie die Informationen ihrer A-Scan (AS)-Erkennungssignale und
b. erzeugen Sie eine zweidimensionale digitale B-Scan-Darstellung (75) eines Abschnitts des Metallteils (5)
i. in einer B-Scan-Ebene (SAP), die im Wesentlichen mit der vertikalen Sekundärstrahlebene (68) verschmolzen ist, senkrecht zur Aufprallebene (48) der Kontrollzone (3) des Metallteils (5),
ii. im Wesentlichen entlang der Erkennungslinie (77), die mit der gepunkteten Aufpralllinie (70) verbunden ist, und
iii. die die digitalen Positionen (78) in Bezug auf die Tiefe (79) der Diskontinuitäten (12, 13) in der B-Scan-Ebene (SAP) darstellt.

7. Eine Vorrichtung (1) nach Anspruch 1, **dadurch gekennzeichnet, dass**:
a. seine rotierende optische Baugruppe (22) besteht aus einer mechanischen Baugruppe von Trägerabschnitten (80), die geometrisch im Wesentlichen identisch und Seite an Seite entlang der Rotationsachse (15) angeordnet sind;
b. die Trägerabschnitte (80) sind starr miteinander verbunden,
c. an jedem Trägerabschnitt (80) ist ein Spiegel (M) befestigt; und
d. im zylindrischen Koordinatensystem (CCS), dessen polare Zylinderachse (52) mit der Rotationsachse (15) zusammenfällt, sind zwei benachbarte Trägerabschnitte (80), die mit ihrem Spiegel (M) ausgestattet sind, senkrecht zur Rotationsachse (15) um denselben polaren Winkelabstand (Dθ) zwischen zwei aufeinanderfolgenden Reflexionspunkten (29), die zu ihren jeweiligen Spiegeln (M) der gepunkteten Schraubenlinie (43) gehören, gegeneinander geschwenkt.

8. Eine Vorrichtung (1) nach Anspruch 7, **dadurch gekennzeichnet, dass**:
a. seine Stützabschnitte (80) haben jeweils die Form eines länglichen Stützbalkens (81), dessen Stützachse (82) die Rotationsachse (15) schneidet;
b. jeder Stützbalken (81) ist durch ein Befestigungsmittel (83) an der Rotationswelle (14) befestigt;
c. ein Spiegel (M) ist an einem Stützende (84) jedes Stützbalkens (81) befestigt.

9. Eine Vorrichtung (1) nach Anspruch 7, **dadurch gekennzeichnet, dass**:
a. seine Stützabschnitte (80) haben jeweils im Wesentlichen die Form einer Stützscheibe (85) mit flacher zylindrischer Form;
b. jede Stützscheibe (85) ist mit einem Befestigungsloch (86) versehen, das senkrecht und in ihrer Mitte angeordnet ist und dessen Lochdurchmesser (87) im Wesentlichen dem Durchmesser der Drehwelle (14) entspricht;
c. die Stützscheiben (85) sind mit ihrem Befestigungsloch (86) Seite an Seite auf der Drehwelle (14) entlang und in einer Stapelebene senkrecht zur Drehachse (15) eingebettet; und
d. jede Stützscheibe (85) ist mit einem Stützgehäuse (88) versehen, das an ihrem Scheibenumfang (89) angeordnet ist und an dem ihr Spiegel (M) befestigt ist.

10. Eine Vorrichtung (1) nach Anspruch 7, **dadurch gekennzeichnet, dass**:
a. seine rotierende optische Baugruppe (22) ist mit einer Versteifungsbaugruppe (90) ausgestattet, die aus einer Vielzahl von starren Stäben (91) besteht,
i. deren Versteifungsachse (92) parallel zur Rotationsachse (15) verläuft,
ii. die relativ zur Rotationswelle (14) fixiert sind und relativ zueinander fixiert sind; und
b. jeder starre Stab (91) verläuft durch mindestens einen Stützabschnitt (80), an dem er durch Einpassen (93) in eine Versteifungsaussparung (94) dieses Stützabschnitts (80) starr befestigt ist.

11. Eine Vorrichtung (1) nach Anspruch 10, **dadurch gekennzeichnet, dass**:
a. die starren Stäbe (91) sind im Wesentlichen entlang geradliniger Versteifungserzeugungslinien (95) desselben virtuellen Versteifungszylinders (96) der Rotation angeordnet, und
b. die Versteifungszylinderachse (97) des virtuellen Versteifungszylinders (96) ist mit der Rotationsachse (15) verschmolzen.

12. Eine Vorrichtung (1) nach Anspruch 11, **dadurch gekennzeichnet, dass**:
a. die Stützabschnitte (80) der rotierenden optischen Baugruppe (22) haben jeweils die Form von geometrisch identischen Stützscheiben (85) von flacher zylindrischer Gestalt, die nebeneinander, senkrecht und zentriert zur Rotationsachse (15) angeordnet sind;
b. jede Stützscheibe (85) ist mit einem an ihrem Scheibenumfang (89) angeordneten Stützgehäuse (88) versehen, an dem ihr Spiegel (M) befestigt ist;
c. ihre Versteifungsbaugruppe (90) besteht aus starren Stäben (91), die jeweils aus einem geradlinigen, hohlen, starren Rohr (98) bestehen,
i. das im Inneren einen leeren Längskanal (99, 99-a) bildet, der entlang seiner Versteifungsachse (92) vollständig durch es hindurchgeht, und
ii. dessen Längskanal (99) im Wesentlichen entlang einer geradlinigen Versteifungserzeugungslinie (95) des virtuellen Versteifungszylinders (96) angeordnet ist;
d. der Abstand jedes Längskanals (99) von der Rotationsachse (15) ist konstant und entspricht im Wesentlichen dem Radius (41) des Reflexionszylinders und der Strahldistanz (21), sodass der virtuelle Versteifungszylinder (96) im Wesentlichen mit dem virtuellen Rotationsreflexionszylinder (39) übereinstimmt;
e. die ausgehöhlten starren Rohre (98; 98-a) sind in aufeinanderfolgende Scheibenkerben (100) eingebettet, die am Scheibenumfang bestimmter Stützscheiben (85) angeordnet sind.

13. Eine Vorrichtung (1) nach Anspruch 12, **dadurch gekennzeichnet, dass**:
a. seine Versteifungsanordnung (90) umfasst eine stromaufwärts gelegene röhrenförmige Versteifungsanordnung (90-a), die aus stromaufwärts gelegenen hohlen starren Rohren (98-a) besteht, die unterschiedliche Rohrlängen (101) aufweisen und geometrisch so konfiguriert sind, dass sie sich jeweils in Längsrichtung zwischen
i. einerseits einem stromaufwärts gelegenen Ende (102-a) des stromaufwärts gelegenen Rohrs, (i) das sich in der Nähe derselben stromaufwärts gelegenen Seitenfläche (103-a) der ersten stromaufwärts gelegenen Trägerscheibe (104-a) der rotierenden optischen Anordnung (22) befindet, (ii) durch die der eingehende Laserstrahl (18) senkrecht hindurchdringt, und
ii. andererseits einem stromabwärts gelegenen Ende (105-a) des stromaufwärts gelegenen Rohrs, das gegenüber dem Spiegel (M) einer bestimmten variablen Zwischenträgerscheibe (106) angeordnet ist, die für jedes stromaufwärts gelegene hohle starre Rohr (98-a) unterschiedlich ist, erstrecken;
Wenn der Antriebsmotor (24-a) und die Eingangslaserquelle (16) aktiviert sind, gilt:
b. die Entsteifungsachsen (92) der vorgelagerten hohlen starren Rohre (98-a) rotieren entsprechend den geradlinigen Reflexionserzeugungslinien (42) des virtuellen Reflexionszylinders (39);
c. der eingehende Laserstrahl (18)
i. durchdringt nacheinander den Längskanal (99) eines der aufeinanderfolgenden vorgelagerten hohlen starren Rohre (98-a)
ii. und trifft nacheinander auf den Reflexionspunkt (29) eines Spiegels (M) einer bestimmten ihm zugewandten Zwischenstützscheibe (106);
d. so dass die vorgelagerte rohrförmige Versteifungsbaugruppe (90-a) gleichzeitig für
i. Versteifung und Immunität gegenüber Längsvibrationen der rotierenden optischen Baugruppe (22) sorgt und
ii. durch Kapselung des eingehenden Laserstrahls (18) während der Rotation der rotierenden optischen Baugruppe (22) Sicherheitsschutz bietet.

14. Eine Vorrichtung (1) nach Anspruch 13, **dadurch gekennzeichnet, dass**:
a. seine Versteifungsanordnung (90) umfasst ferner eine stromabwärtige röhrenförmige Versteifungsanordnung (90-b), die aus stromabwärtigen hohlen starren Rohren (98-b) besteht, die unterschiedliche Rohrlängen (101) aufweisen und geometrisch so konfiguriert sind, dass sie sich jeweils in Längsrichtung zwischen
i. einerseits einem stromaufwärtigen Ende (102-b) des stromabwärtigen Rohrs, das hinter dem Spiegel (M) einer bestimmten Zwischenstützscheibe (106) angeordnet ist, die für jedes stromabwärtige hohle starre Rohr (98-b) unterschiedlich ist, und
ii. andererseits einem stromabwärtigen Ende (105-b) des stromabwärtigen Rohrs erstrecken, das sich in der Nähe derselben stromabwärtigen Seitenfläche (103-b) der letzten stromabwärtigen Stützscheibe (104-b) der rotierenden optischen Anordnung (22) befindet;
b. die vorgelagerte röhrenförmige Versteifungsanordnung (90-a) und die nachgelagerte röhrenförmige Versteifungsanordnung (90-b)
i. weisen eine ähnliche Topologie auf und sind komplementär und
ii. nach einer Spiegelreflexion in Kombination mit einer axialen Drehung um 180° im Wesentlichen das Bild voneinander;
So dass:
c. die Kombination aus der vorgelagerten röhrenförmigen Versteifungsbaugruppe (90-a) und der nachgelagerten röhrenförmigen Versteifungsbaugruppe (90-b)
i. sorgt für Längsversteifung und Vibrationsfestigkeit der rotierenden optischen Baugruppe (22) über ihre gesamte Länge während der Rotation und dient als Führung, um eine einfache Montage und
ii. Winkelindexierung der Stützscheiben (85) zu ermöglichen; und
d. die nachgelagerten hohlen starren Rohre (98-b) werden nie vom einfallenden Laserstrahl (18) durchdrungen.

15. Eine Vorrichtung (1) nach Anspruch 1, **dadurch gekennzeichnet, dass**:
a. Es ist mit einer Fokussierbaugruppe (107) ausgestattet, die aus mehreren Fokussierlinsen (108) besteht, die in Bezug auf die Rotationsachse (15) und die Aufprallebene (48) fixiert sind;
b. Diese Fokussierlinsen (108) sind zwischen der rotierenden optischen Baugruppe (22) und der Aufprallebene (48) positioniert und ihre optische Achse (109) verläuft senkrecht zur Aufprallebene (48)

16. Eine Vorrichtung (1) nach Anspruch 15, **dadurch gekennzeichnet, dass**:
a. seine Fokussieranordnung (107) ist mit zylindrischen Fokussierlinsen (110) (zylindrischer oder halbzylindrischer Art) ausgestattet, deren optische Zylinderachse (111) im Wesentlichen parallel zur Auftreffebene (48) verläuft.

17. Eine Vorrichtung (1) nach Anspruch 16, **dadurch gekennzeichnet, dass** ihre Fokussieranordnung (107) aus zylindrischen Fokussierlinsen (110) besteht,
a. Sie sind jeweils so konfiguriert, dass sie die durch sie hindurchgehenden sekundären Laserstrahlen (45)
i. auf einen schmalen rechteckigen Laserauftreffpunkt (112) fokussieren,
ii. d. h., dessen Laserpunktlänge (113) mindestens das Doppelte seiner Laserpunktbreite (114) beträgt, und
b. so eine rechteckige Punktachse (115) definieren,
i. die entsprechend der Laserpunktlänge (113) ausgerichtet ist.

18. Eine Vorrichtung (1) nach Anspruch 1, **dadurch gekennzeichnet, dass**:
a. Es umfasst eine Sekundärstütze (116) in einer festen Position in Bezug auf die Rotationsachse (15) und die Aufprallebene (48);
b. Es umfasst eine Hilfsreflektoranordnung (117, 117-a), die aus mindestens zwei (q) Hilfsspiegeln (49, 118, 118-a-1, 118-a-2, 118-a-3) besteht,
i. die sich jeweils in einer festen Position zueinander und in Bezug auf den Sekundärträger (116) befinden und
ii. geometrisch so konfiguriert sind, dass sie durch aufeinanderfolgende Reflexionen die Hilfslaserstrahlen (119, 119-a-1, 119-a-2, 119-a-3, 119-a-4) einer Hilfsstrahlsammlung (120, 120-a, 120-b, 120-c, 120-d) ablenken, wobei der erste abgelenkte Strahl (119-a-1) aus einem der Sekundärlaserstrahlen (45, 45-21) besteht, die von der rotierenden optischen Anordnung emittiert werden. (22);
iii. die jeweils nacheinander von einem der Hilfslaserstrahlen (119, 119-a-1, 119-a-2, 119-a-3) an einem Hilfsreflexionspunkt (121, 121-a-1, 121-a-2, 121-a-3) dieses Hilfsspiegels (118, 118-a-1, 118-a-2, 118-a-3) getroffen werden, um einen neuen Hilfslaserstrahl zu bilden, der von der Hilfsstrahlsammlung (120, 120-a, 120-b, 120-c, 120-d) abgelenkt wird, wobei sich jedes Mal die Winkelstrahlrichtung (A) dieses auftreffenden Hilfslaserstrahls (119, 119-a-1, 119-a-2, 119-a-3) ändert;
c. ein vorgelagerter Hilfsspiegel (122, 118-a-1) der Hilfsreflektoranordnung (117, 117-a) ist im Pfad eines sekundären Laserstrahls (45, 45-21) positioniert und geometrisch
i. so konfiguriert, dass er von diesem sekundären Laserstrahl (45, 45-21) an seinem Hilfsreflexionspunkt (121, 121-a-1) getroffen wird und
ii. ihn in einen ersten Hilfslaserstrahl (119, 119-a-2) reflektiert, der von der Hilfsstrahlsammlung (120, 120-a) abgelenkt wird;
d. ein nachgeschalteter Hilfsspiegel (123, 118-a-3) der Hilfsreflektoranordnung (117, 117-a) ist geometrisch so konfiguriert,
i. dass er im Wesentlichen sowohl (i) dem letzten Hilfslaserstrahl (119, 119-a-3) der Hilfsstrahlsammlung (120, 120-a) als auch (ii) der Kontrollzone (3) zugewandt ist; und
ii. diesen letzten Hilfslaserstrahl (119, 119-a-3) entsprechend einem letzten abgelenkten Sekundärlaserstrahl (124, 119-a4, 124-a) abzulenken, der stromabwärts der Hilfsstrahlsammlung (120, 120-a) auf einen abgelenkten Auftreffpunkt (125, 125-a) der Auftreffebene (48) der Kontrollzone (3) in der Nähe eines Erfassungspunkts (36) eines elektromagnetischen akustischen TEMA-Wandlers (34) trifft.

19. Eine Vorrichtung (1) nach Anspruch 18, **dadurch gekennzeichnet, dass**:
a. es umfasst eine Hilfsreflektoranordnung (126, 126-1), die aus mindestens zwei Hilfsreflektoranordnungen (117, 117-a, 117-c) besteht,
b. wobei die mindestens zwei Hilfsreflektoranordnungen (117, 117-a, 117-c) geometrisch so konfiguriert sind, dass ihre mindestens zwei abgelenkten sekundären Laserstrahlen (124, 124-a, 124-c)
i. parallel und entsprechend derselben abgelenkten sekundären Strahlebene (127, 127-1) angeordnet sind,
ii. im Wesentlichen senkrecht zur Aufprallebene (48) stehen,
iii. entsprechend einer Anordnung abgelenkter sekundärer Strahlebenen (128, 128-1) angeordnet sind und
iv. auf eine abgelenkte Aufprallanordnung (129, 129-1) auftreffen, die aus mindestens zwei entfernten abgelenkten Aufprallpunkten (125, 125-a, 125-c) besteht, auf einer geraden gepunkteten Linie abgelenkter Stöße (130, 130-1) der Aufprallebene (48) der Kontrollzone (3) angeordnet.

20. Eine Vorrichtung (1) nach Anspruch 19, **dadurch gekennzeichnet, dass**:
a. es ist mit einer Fokussieranordnung (107) ausgestattet, die aus Fokussierlinsen (108) besteht, die in Bezug auf die Rotationsachse (15) und die Aufprallebene (48) fest positioniert sind; und
b. die Fokussierlinsen (108) sind entsprechend der Positionierung ihrer optischen Achsen (109) geometrisch in zwei Gruppen konfiguriert, darunter:
i. eine erste Gruppe aus sekundären Fokussierlinsen (131), (i) deren sekundäre optische Achse (132) mit der sekundären Achse (133) eines sekundären Laserstrahls (45) zusammenfällt, der vom Reflexionspunkt (29) eines rotierenden Spiegels (M) kommt, und (ii) in diesem Fall in Bezug auf die Rotationsachse (15) zwischen dem virtuellen Reflexionszylinder (39) der Rotation und dem Auftreffpunkt (47) dieses sekundären Laserstrahls (45) fixiert ist, und (iii) so konfiguriert ist, dass dieser sekundäre Laserstrahl (45) auf seinen Auftreffpunkt (47) der gepunkteten Auftrefflinie (70) fokussiert wird, und
ii. eine zweite Gruppe aus zusätzlichen Fokussierlinsen (134), (i) deren zusätzliche optische Achse (135) mit der zusätzlichen Achse (136) eines letzten abgelenkten sekundären Laserstrahls (124) zusammenfällt, der vom letzten zusätzlichen Reflexionspunkt (121) kommt, 121-b-3) eines nachgeschalteten Hilfsspiegels (123, 118-b-3) und (ii) in diesem Fall ist er in Bezug auf die Rotationsachse (15) zwischen dem virtuellen Reflexionszylinder (39) der Rotation und dem abgelenkten Auftreffpunkt (125, 125-b) des abgelenkten sekundären Laserstrahls (124, 124-a) fixiert und (iii) so konfiguriert, dass er diesen abgelenkten sekundären Laserstrahl (124, 124-b) auf seinen abgelenkten Auftreffpunkt (125, 125-b) einer abgelenkten gepunkteten Auftrefflinie (130, 130-2) fokussiert.

21. Eine Vorrichtung (1) nach Anspruch 20, **dadurch gekennzeichnet, dass**:
a. seine Fokussieranordnung (107) besteht aus zylindrischen Fokussierlinsen (110),
i. die in Bezug auf den Sekundärträger (116) befestigt sind;
ii. sie haben eine optische Zylinderachse (111), die im Wesentlichen parallel zur Aufprallebene (48) verläuft, und
iii. sind jeweils so konfiguriert, dass sie einen sekundären Laserstrahl (45) oder einen abgelenkten sekundären Laserstrahl (124) entsprechend einem rechteckigen Laseraufprallpunkt (112) auf der Aufprallebene (48) entsprechend einer rechteckigen Punktachse (115) fokussieren;
b. diese zylindrischen Fokussierlinsen (110) sind geometrisch so konfiguriert, dass die Fokussieranordnung (107) in zwei Gruppen unterteilt ist:
i. einerseits eine longitudinale Fokussiersammlung (137), bestehend aus longitudinalen zylindrischen Fokussierlinsen (138), d. h. deren optische Zylinderachse (111) im Wesentlichen longitudinal zur Rotationsachse (15) verläuft, die so konfiguriert sind, dass sie einen durch sie hindurchgehenden Lichtstrahl auf einen longitudinalen rechteckigen Laserauftreffpunkt (139) fokussieren, und
ii. andererseits eine transversale Fokussiersammlung (140), bestehend aus transversalen zylindrischen Fokussierlinsen (141), d. h. deren optische Zylinderachse (111) im Wesentlichen transversal zur Rotationsachse (15) verläuft, die so konfiguriert sind, dass sie einen durch sie hindurchgehenden Lichtstrahl auf einen transversalen rechteckigen Laserauftreffpunkt (142) fokussieren.

22. Eine Vorrichtung (1) nach Anspruch 21, **dadurch gekennzeichnet, dass**:
a. Es umfasst sowohl:
i. ein ebenes Netzwerk sekundärer Strahlen (69), bestehend aus sekundären Laserstrahlen (45, 45-11), (i) die von der rotierenden optischen Baugruppe (22) emittiert werden, (ii) die auf die Auftreffpunkte (47) der gepunkteten Auftrefflinie (70) treffen,
ii. als auch mindestens ein ebenes Netzwerk abgelenkter sekundärer Strahlen (128, 128-1, 128-2), bestehend aus abgelenkten sekundären Laserstrahlen (124, 124-a-21, 124-b-22, 124-c-23, 124-d-24), (i) die von einer Hilfsreflektorbaugruppe (126, 126-1, 126-2) kommen, (ii) die auf die abgelenkten Auftreffpunkte (125, 125-a-21, 125-b-22 125-c-23, 125-d-24) von mindestens einer abgelenkten gepunkteten Auftrefflinie (130, 130-1, 130-2);
b. Die longitudinalen zylindrischen Fokussierlinsen (138) und die transversalen zylindrischen Fokussierlinsen (141) sind in zwei Gruppen komplementär und exklusiv angeordnet, sodass:
i. eine erste Gruppe (110-1) das sekundäre Strahlebenen-Array (69) auf seine gepunktete Auftrefflinie (70) fokussiert, (i) nur entsprechend den longitudinalen rechteckigen Laserauftreffpunkten (139) oder (ii) nur entsprechend den transversalen rechteckigen Laserauftreffpunkten (142); und
ii. alternativ und ausschließlich zur vorherigen fokussiert eine zweite Gruppe (110-2) das ebene Netzwerk abgelenkter Sekundärstrahlen (128, 128-1, 128-2) auf eine gepunktete Linie abgelenkter Stöße (130, 130-1, 130-2), (i) nur entsprechend quer verlaufender rechteckiger Laseraufprallpunkte (142) oder (ii) nur entsprechend längs verlaufender rechteckiger Laseraufprallpunkte (139).

23. Eine Vorrichtung (1) nach Anspruch 1, **dadurch gekennzeichnet, dass**:
a. seine Sensoranordnung (33) besteht aus gerichteten TEMAs (143) des Typs mit einer bevorzugten Richtungsorientierung zur Erfassung (144) der induzierten Signale (11), die durch die Wechselwirkung der mechanischen Vibrationen (8) mit den Oberflächendiskontinuitäten (12) und den Untergrunddiskontinuitäten (13) erzeugt werden;
b. seine Sensoranordnung (33) ist so konfiguriert, dass sie in zwei Gruppen unterteilt ist,
i. einerseits eine Längssensorsammlung (145), bestehend aus Längs-TEMAs (146, 146-T, 146-D), d. h. mit bevorzugter Erfassungsrichtung (144) in Längsrichtung in Bezug auf die Rotationsachse (15), und
ii. andererseits eine Quersensorsammlung (147), bestehend aus Quer-TEMAs (148, 148-T, 148-D), d. h. mit bevorzugter Erfassungsrichtung (144) in Querrichtung in Bezug auf die Rotationsachse (15);
c. die quer verlaufenden rechteckigen Laseraufprallpunkte (142, 15-a-21, 125-b-22, 125-c-23, 125-d-24) befinden sich (in Anzahl) überwiegend zwischen zwei längs verlaufenden TEMAs (146); und
d. die längs verlaufenden rechteckigen Laseraufprallpunkte (139, 47-11) befinden sich (in Anzahl) überwiegend in der Nähe und über oder unter den quer verlaufenden TEMAs (148), bezogen auf eine Höhenpositionierungsausrichtung senkrecht zur Rotationsachse (15).

24. Eine Vorrichtung (1) nach Anspruch 20, **dadurch gekennzeichnet, dass** ihre rotierende optische Baugruppe (22) geometrisch so konfiguriert ist, dass:
a. es umfasst beides:
i. ein ebenes Netzwerk sekundärer Strahlen (69), (i) bestehend aus sekundären Laserstrahlen (45, 45-11), (ii) die auf die Auftreffpunkte (47) der gepunkteten Hauptauftrefflinie (70) treffen,
ii. zwei ebene Netzwerke abgelenkter sekundärer Strahlen (128, 128-1, 128-2), (i) bestehend aus zwei Gruppen abgelenkter sekundärer Laserstrahlen (124-a, 124-c) und (124-b, 124-d), (ii) stammend von zwei Hilfsreflektoranordnungen (126, 126-1, 126-2), (iii) die auf zwei entfernte Hilfslinien abgelenkter Auftreffpunkte (130, 130-1, 130-2) treffen, und
b. die gepunktete Linie Die gepunktete Hauptauftrefflinie (70) und die beiden Hilfslinien abgelenkter Auftreffpunkte (130, 130-1, 130-2) sind alle drei parallel zur Rotationsachse (15) und voneinander beabstandet; und
c. die beiden abgelenkten gepunkteten Aufpralllinien (130, 130-1, 130-2) befinden sich auf beiden Seiten, d. h. oberhalb und unterhalb der HauptAufpralllinie (70), in Bezug auf eine Höhenpositionierungsausrichtung senkrecht zur Rotationsachse (15).

25. Eine Vorrichtung (1) nach Anspruch 24, **dadurch gekennzeichnet, dass** ihre rotierende optische Baugruppe (22) geometrisch so konfiguriert ist, dass:
a. seine gepunktete Hauptaufpralllinie (70) besteht aus längsverlaufenden rechteckigen Laseraufprallpunkten (139) und
b. seine beiden zusätzlichen abgelenkten gepunkteten Aufpralllinien (130, 130-1, 130-2) bestehen aus querverlaufenden rechteckigen Laseraufprallpunkten (142, 125-a-21, 125-b-22, 125-c-23, 125-d-24).

26. Eine Vorrichtung (1) gemäß den Ansprüchen 23 und 25, **dadurch gekennzeichnet, dass** ihre rotierende optische Baugruppe (22) geometrisch so konfiguriert ist, dass:
a. seine longitudinalen TEMAs (146, 146-T, 146-D) sind überwiegend (zahlmäßig)
i. auf beiden Seiten und abwechselnd in Bezug auf die gepunktete Hauptaufpralllinie (70) ausgerichtet und
ii. in Längsrichtung neben einem quer verlaufenden rechteckigen Laseraufprallpunkt (142, 125-a-21, 125-b-22, 125-c-23, 125-d-24) einer der beiden abgelenkten gepunkteten Aufpralllinien (130, 130-1, 130-2) positioniert; und
b. seine transversalen TEMAs (148, 148-T, 148-D) sind überwiegend (zahlmäßig) abwechselnd über und/oder unter den longitudinalen TEMAs (146, 146-T, 146-D) positioniert und ausgerichtet, in Bezug auf eine Höhenpositionierungsausrichtung senkrecht zur Rotationsachse (15).

27. Eine Vorrichtung (1) nach Anspruch 1, die weiterhin Folgendes umfasst:
a. Winkelpositions-Steuermittel (149) der einzelnen Drehwelle (14) und daher der monolithischen rotierenden optischen Baugruppe (22), die sich in Bezug auf die Drehachse (15) dreht;
i. verbunden mit der einzelnen Drehwelle (14);
b. Laserpuls-Steuer- und Zeitmessmittel (150),
i. elektrisch verbunden mit der Eingangslaserquelle (16)
ii. und konfiguriert, um die Erzeugung von Laserpulsen durch die Eingangslaserquelle (16) zu steuern und/oder zu takten;
c. Motorrotations-Zeitmessmittel (151),
i. elektrisch verbunden mit dem Antriebsmotor (24-a);
d. ein synchronisierter Rotationslaserpuls-Zeitmessprozessor (152),
i. elektrisch verbunden mit den Winkelpositions-Steuermitteln (149) der Drehwelle (14) und
ii. elektrisch verbunden mit den Motorrotations-Zeitmessmitteln (151), um kontinuierlich die Winkelposition der Drehwelle (14) zu empfangen;
Dieses Gerät (1) ist **dadurch gekennzeichnet, dass** der synchronisierte Zeitprozessor für Rotationslaserpulse (152) folgendermaßen konfiguriert ist:
e. entweder im Motorsteuerungsmodus (153),
i. um die Motorrotations-Zeitsteuerungseinrichtung (151)
ii. entsprechend der Zeitsteuerung der von der eingehenden Laserquelle (16)
iii. erzeugten Laserimpulse elektrisch zu steuern, um die axiale Winkelposition der rotierenden optischen Baugruppe (22) sukzessive adaptiv zu positionieren,
iv. sodass die Anzahl der Spiegelaufprallimpulse (NIM) der Impulse des eingehenden Laserstrahls (18), die auf jeden der rotierenden Spiegel (M, M1, ..., M20) in der Nähe seines Reflexionspunkts (29) der rotierenden gepunkteten Schraubenlinie (43) auftreffen, konstant ist (z. B. NIM = 2);
f. oder im Impulssteuerungsmodus (154)
i. die Laserimpulssteuerungs- und -zeitsteuerungseinrichtung (150)
ii. als Funktion der Zeitsteuerung der axialen Winkelposition der rotierenden optischen Baugruppe (22), die kontinuierlich von der Winkelpositionssteuerungseinrichtung (149) empfangen wird, elektrisch zu steuern,
iii. um die Zeitsteuerung der Impulse des eingehenden Laserstrahls (18) sukzessive anzupassen,
iv. sodass die Anzahl der Spiegelaufprallimpulse (NIM) der Impulse des eingehenden Laserstrahls (18), die auf jeden der rotierenden Spiegel (M, M1, ..., M20) in der Nähe seines Reflexionspunkts (29) der rotierenden gepunkteten Schraubenlinie (43) auftreffen, konstant ist (z. B. NIM = 2).

## Claims

1. A Hybrid Ultrasonic Non-Destructive Testing Device (1) Electromagnetic Acoustic Transducers / Laser comprising a monolithic Rotating Optical Assembly (22) of agile matrix laser transmitters with laser multi-beam hopping guidance for the inspection of metallurgical objects, for equipping a Machine Tool (2) performing quality control of metal processing, on a Control Zone (3) of the Surface (4) of a Metal Part (5), of the type inducing Mechanical Vibrations (8) in the Body (9) of the Metal Part (5), and, monitoring generated ultrasonic Induced Signals (11) to identify Surface Discontinuities (12) and Subsurface Discontinuities (13); this Device (1) comprising:
a. a Rotating Shaft (14), capable of rotating about a Rotation Axis (15);
b. an Input Laser Source (16), equipped with Optical Guidance Means (17), configured to produce an Input Laser Beam (18), with a certain Input Laser Power (IP), directed along an Input Beam Axis (20) parallel to the Rotation Axis (15), this at a certain Beam Distance (21) from the Rotation Axis (15);
c. a Rotating Optical Assembly (22) configured to rotate about the Rotation Axis (15); and incorporating a Reflector Assembly (25),
i. composed of a plurality of n (at least two) Mirrors (M, M1, M2, ..., M11, M21, ..., M24), acting as an Optical Barrier (27),
ii. each of the Mirrors (M, M11) being configured so that, in certain rotational positions of the Rotatable Optical Assembly (22), the Mirror (M) intercepts the Incoming Beam Axis (20),
iii. each Mirror (M) of which has a Reflection Point (29, 29-11), (i) positioned at a perpendicular rotational Reflection Distance (32) from the Rotation Axis (15), (ii) to reflect the Incoming Laser Beam (18) impacted on this Mirror (M), (iii) with a change in Beam Angular Direction (A), and, (iv) with a Reflection Efficiency (E) of the energy of the Incoming Laser Beam (18) substantially equal to one hundred percent;
iv. geometrically configured such that, (i) the Incoming Laser Beam (18) successively impacts a Reflection Point (29, 29-11) associated with and belonging to one of its n distant Mirrors (M, M11), (ii) each of the n Reflection Points (29, 29-11) of the n Mirrors (M), travels a Rotation Circle (C, C-1, ..., C-11, ...), of a Rotation Radius (37, 37-1... , 37-11...), centered on a Center of Rotation (CR, CR-1, ..., CR-11, ...) fixed on the Axis of Rotation (15); and (iii) the n different Mirrors (M, M1, M2, ..., M11, M21, ..., M24) redirect in an agile, successive and discontinuous manner the Incoming Laser Beam (18) according to a Secondary Beam Collection (44), made of a bundle of n distant Secondary Laser Beams (45, 45-1, ..., 45-11, ..., 45-24), resulting from a multitude of successive and discontinuous changes of the Angular Beam Directions (A) of the Incoming Laser Beam (18), by reflection on the succession of the n distant and rotating Mirrors (M); and,
v. geometrically configured such that the n successively generated Secondary Laser Beams (45) impact an Impact Set (46) made of a multitude of n distant Impact Points (47, 47-1, ..., 47-11..., 47-21, ..., 47-24), located (i) either on the Impact Plane (48), facing the Rotating Optical Assembly (22), located on the Surface (4) of the Control Zone (3), and close to a Detection Point (36) of a TEMA Electromagnetic Acoustic Transducer (34), or, (ii) either on an Auxiliary Mirror (49, 49-21, ..., 49-24);
d. Rotation Means (24) of the Rotary Optical Assembly (22),
i. comprising a Drive Motor (24-a), connected to the Rotary Shaft (14), and,
ii. configured to induce rotation of the Rotary Shaft (14) about the Rotation Axis (15), with a continuous Direction of Rotation (DR)
e. a Sensor Assembly (33), composed of a plurality of p (at least two) Acoustic Electromagnetic Transducers (34) of the TEMA type, hereinafter referred to as TEMAs, each Active Electromagnetic Probe (35):
i. faces the Control Zone (3) and is substantially centered on a Detection Point (36) of the Control Zone (3), and,
ii. is configured to generate an A-Scan Signal (AS) for detecting the position of the Defects (12, 13) versus time/distance, acquired from the Induced Signals (11) in the vicinity of its Detection Point (36);
This Device (1) being **characterized in that** it presents the following combination of technical features
f. its Rotating Optical Assembly (22), including its n Mirrors (M), their mechanical connection parts and its n associated Reflection Points (29, 29-11), in rotation,
i. is monolithic, that is to say made up of mechanical and/or optical parts all rigidly mechanically linked together and in a fixed position which cannot be modified relative to each other, and,
ii. is rigidly fixed by Fixing Means (23) on the same Rotating Shaft (14), and,
iii. has a rigid geometry which cannot be deformed during its rotation;
g. the n Mirrors (M) of the Reflector Assembly (25) and their n associated Reflection Points (29, 29-11) are in a fixed position relative to the same Rotation Axis (15);
h. the rotating Reflection Distances (32) of the n Reflection Points (29, 29-11) of all the Mirrors (M), perpendicular to and with respect to the Rotation Axis (15), are all (i) constant and equal to each other during said rotation, and, (ii) substantially equal to the Beam Distance (21);
i. each of the n Reflection Points (29, 29-11) of the n Mirrors (M), travels a Rotation Circle (C, C-1, ..., C-11, ...), (i) centered on the Rotation Axis (15), and (ii) kept perpendicular to the Rotation Axis (15) during said rotation, each of the n Rotation Circles (C) (i) has a projection, parallel to a projection plane parallel to the Rotation Axis (15) and passing through its Rotation Center (CR, CR-1, ..., CR-11, ...), formed of a Transverse Movement Segment (ST, ST-1, ..., ST-11, ...), perpendicular to the Rotation Axis (15) and centered on its Rotation Center (CR), and, (ii) has a projection, parallel to a rotation plane perpendicular to the Rotation Axis (15) and passing through its Rotation Center (CR, CR-1, ..., CR-11, ...), formed of a Planar Projected Circle of Motion (CP, CP-1, ..., CP-11, ...), merged with the Circle of Rotation (C), and having a Projected Radius of Rotation (RP, RP-1, ..., RP-11, ...), equal to the Beam Distance (21) during said rotation;
j. each Reflection Point (29) of a Mirror (M) is positioned in a fixed manner with respect to the same rotating Cylindrical Reflection Surface (38) of a Virtual Reflection Cylinder (39) of revolution and rotating,
i. with a constant circular section,
ii. rotating around the Rotation Axis (15),
iii. whose Reflection Cylinder Radius (41) is constant and substantially equal (i) to the Rotation Radii (37, 37-1, ..., 37-11, ...) of each of the n Rotation Circles (C, C-1, ..., C-11, ...), and, (ii) to the Beam Distance (21),
iv. so that the cross-section of the Virtual Reflection Cylinder (39) of revolution and of its rotating Cylindrical Reflection Surface (38) is constantly circular,
v. but whose longitudinal position is fixed with respect to the Rotating Shaft (14), that is, without any longitudinal displacement with respect to the axis Axis of Rotation (15);
k. the Reflection Points (29) of the Mirrors (M) are positioned on a rotating Dotted Helical Line (43)
i. with circular helical winding, of radius equal to the Beam Distance (21),
ii. and with circular cylindrical screw pitch
iii. fixed as well as its points on the Cylindrical Reflection Surface (38), and rotating with it, but,
iv. whose longitudinal position is fixed with respect to the Rotating Shaft (14), that is, without any longitudinal displacement with respect to the Axis of Rotation (15)
1. the Incoming Laser Beam (18) is, during rotation, positioned along successive rectilinear Reflection Generating Lines (42) of the rotating Cylindrical Reflection Surface (38);
i. each attached to a Reflection Point (29) of a Mirror (M),
ii. moving in rotation with the Virtual Reflection Cylinder (39),
iii. but without longitudinal displacement with respect to the Rotation Axis (15)

2. A Device (1) according to claim 1, **characterized in that**, in a Cylindrical Coordinate System (CCS), whose Polar Cylindrical Axis (52) coincides with the Rotation Axis (15), and whose Reference Plane (53) is perpendicular to the Rotation Axis (15) and intersects it at a certain reference Point of Origin (O),
a. the Polar Angular Distances (Dθ) between the Angular Coordinates (θ) of two successive Reflection Points (29) of the Dotted Helical Line (43) joining all the Reflection Points (29) and circularly wound are positive and constant;
b. the Cylindrical Distances (r) of the Reflection Points (29) are constant and all equal to the Beam Distance (21); and,
c. the circular cylindrical Screw Pitch (57) of the Dotted Helical Line (43) is positive and constant.

3. A Device (1) according to claim 2, **characterized in that**: the constant Polar Angular Distances (Dθ) are approximately equal to 360° divided by the Number of Mirrors (n), Dθ = 360° / n;
So that in the Cylindrical Coordinate System (CCS),
a. the Overall Reflection Length (Z), consisting of the difference between the Heights (z1, zn) of the two End Mirrors (M1, Mn) furthest from the Rotating Optical Assembly (22), is substantially equal to the cylindrical Screw Pitch (57) of the Dotted Helical Line (43); and,
b. the Reflector Assembly (25) has an Angular Spectrum (AS) of Angular Coordinates (θ) covering substantially 360°.

4. A Device (1) according to claim 1, **characterized in that**, when considering for each Mirror (M, M11) its Radial Segment (63), joining its Point of Reflection (29) to its Point of Projection (64) on the Axis of Rotation (15); for each Mirror (M) and with respect to its Plane of Orientation (65) passing through the Point of Reflection (29, 29-11) and perpendicular to the Radial Segment (63):
a. the Radial Segment (63) has a constant Radial Length (62) equal to the Beam Distance (21),
b. the rotational Roll Angle (AR) relative to the Rotation Axis (15) is zero at 0°;
c. the rotational Pitch Angle (AP) relative to the Rotation Axis (15) is the same for all Mirrors (M); and,
d. the longitudinal position of the Projection Point (64) of each Radial Segment (63) is fixed along the Rotation Axis (15) and with respect to the Rotary Shaft (14).
So that:
e. the Secondary Laser Beams (45),
i. are all parallel and arranged according to the same Secondary Beam Plane (68), passing through the Rotation Axis (15) and perpendicular to the Impact Plane (48); and,
ii. are arranged according to a Secondary Beam Plane Network (69);
f. all the Impact Points (47) of the Control Zone (3) are aligned on a straight Dotted Impact Line (70) of the Impact Plane (48), and are separated by a certain Impact Distance (71) between two adjacent Impact Points (47).

5. A Device (1) according to claim 4, **characterized in that**:
a. the rotating Pitch Angle (AP), relative to the Rotation Axis (15), of each Mirror (M) is fixed equal to 45°, and the Control Zone (3) and the Impact Plane (48) are parallel to the Rotation Axis (15);
So that:
b. the Secondary Laser Beams (45) are each perpendicular to the Plane of Impact (48); and,
c. the Secondary Length (72) of each of the Secondary Laser Beams (45), and therefore the Vertical Dimension (73) of the Rotating Optical Assembly (22) are minimized.

6. A Device (1) according to claim 1, **characterized in that** it is equipped with at least one digital B-Scan Processor (BSP), connected to the TEMA Electromagnetic Acoustic Transducers (34), configured for;
a. process and combine the information of their A-Scan (AS) detection Signals, and,
b. generate a two-dimensional digital B-Scan Presentation (75) of a section of the Metal Part (5)
i. in a B-Scan Plane (SAP) substantially merged with the vertical Secondary Beam Plane (68), perpendicular to the Impact Plane (48) of the Control Zone (3) of the Metal Part (5),
ii. substantially along the Detection Line (77) joining the Dotted Impact Line (70), and,
iii. representing the Digital Positions (78) with respect to the Depth (79) of the Discontinuities (12, 13) in the B-Scan Plane (SAP)

7. A Device (1) according to claim 1, **characterized in that**:
a. its Rotating Optical Assembly (22) consists of a mechanical assembly of Support Sections (80) geometrically substantially identical, and arranged side by side along the Axis of Rotation (15);
b. the Support Sections (80) are rigidly assembled together,
c. a Mirror (M) is fixed on each Support Section (80); and,
d. in the Cylindrical Coordinate System (CCS), whose Polar Cylindrical Axis (52) coincides with the Axis of Rotation (15), two adjacent Support Sections (80) equipped with their Mirror (M), are pivoted, one with respect to the other, perpendicular to the Axis of Rotation (15), by the same Polar Angular Distance (Dθ) between two successive Reflection Points (29) belonging to their respective Mirrors (M) of the Dotted Helical Line (43).

8. A Device (1) according to claim 7, **characterized in that**:
a. its Support Sections (80) each have the shape of an elongated Support Beam (81), the Support Axis (82) of which intersects the Rotation Axis (15);
b. each Support Beam (81) is fixed to the Rotary Shaft (14) by a Fixing Means (83);
c. a Mirror (M) is fixed on a Support End (84) of each Support Beam (81).

9. A Device (1) according to claim 7, **characterized in that**:
a. its Support Sections (80) each have substantially the shape of a Support Disc (85) of flat cylindrical shape;
b. each Support Disc (85) is pierced with a Fixing Hole (86), arranged perpendicularly and in its center, and whose Hole Diameter (87) is substantially equal to the diameter of the Rotary Shaft (14);
c. the Support Discs (85) are embedded side by side on the Rotary Shaft (14), along and in a stacking plane perpendicular to the Axis of Rotation (15), by their Fixing Hole (86); and,
d. each Support Disc (85) is provided with a Support Housing (88), arranged on its Disc Periphery (89), on which its Mirror (M) is fixed.

10. A Device (1) according to claim 7, **characterized in that**:
a. its Rotating Optical Assembly (22) is equipped with a Rigidification Assembly (90), consisting of a plurality of Rigid Rods (91),
i. the Rigidification Axis (92) of which is parallel to the Rotation Axis (15),
ii. fixed relative to the Rotating Shaft (14), and fixed relative to each other; and,
b. each Rigid Rod (91) passes through at least one Support Section (80); to which it is rigidly fixed by Fitting (93) into a Rigidification Recess (94) of this Support Section (80).

11. A Device (1) according to claim 10, **characterized in that**:
a. the Rigid Rods (91) are arranged substantially along rectilinear Stiffening Generating Lines (95) of the same Virtual Stiffening Cylinder (96) of revolution, and
b. the Stiffening Cylinder Axis (97) of the Virtual Stiffening Cylinder (96) is merged with the Rotation Axis (15).

12. A Device (1) according to claim 11, **characterized in that**:
a. the Support Sections (80) of its Rotating Optical Assembly (22) each have the form of Support Discs (85), geometrically identical and of flat cylindrical shape, arranged side by side, perpendicularly and centered with respect to the Rotation Axis (15);
b. each Support Disc (85) is provided with a Support Housing (88) arranged on its Disc Periphery (89), on which its Mirror (M) is fixed
c. its Rigidification Assembly (90) is formed of Rigid Rods (91) each consisting of a rectilinear Hollowed Rigid Tube (98),
i. internally forming an empty Longitudinal Channel (99, 99-a) passing right through it, along its Rigidification Axis (92), and,
ii. the Longitudinal Channel (99) of which is arranged substantially along a rectilinear Rigidification Generating Line (95) of the Virtual Rigidification Cylinder (96);
d. the distance of each Longitudinal Channel (99) from the Rotation Axis (15) is constant, and substantially equal to the Reflection Cylinder Radius (41) and the Beam Distance (21), so that the Virtual Rigidification Cylinder (96) is substantially coincident with the Virtual Reflection Cylinder (39) of revolution;
e. the Hollowed Rigid Tubes (98; 98-a) are embedded in successive Disc Notches (100) arranged on the Disc Periphery of certain Support Discs (85).

13. A Device (1) according to claim 12, **characterized in that**:
a. its Stiffening Assembly (90) comprises an Upstream Tubular Stiffening Assembly (90-a) constituted by Upstream Hollow Rigid Tubes (98-a), which have different Tube Lengths (101), and are geometrically configured so that they each extend longitudinally between,
i. on the one hand, an Upstream Tube Upstream End (102-a), (i) located in the vicinity of the same Upstream Lateral Face (103-a) of the first Upstream Support Disc (104-a) of the Rotating Optical Assembly (22), (ii) through which the Incoming Laser Beam (18) penetrates perpendicularly,
ii. and on the other hand, an Upstream Tube Downstream End (105-a), arranged opposite the Mirror (M) of a particular variable Intermediate Support Disc (106), different for each Upstream Hollow Rigid Tube (98-a);
Such that when the Drive Motor (24-a) and the Input Laser Source (16) are activated:
b. the De-Rigidification Axes (92) of the Upstream Hollow Rigid Tubes (98-a) are in rotation according to the rectilinear Reflection Generating Lines (42) of the Virtual Reflection Cylinder (39) of revolution;
c. the Incoming Laser Beam (18)
i. successively penetrates through the Longitudinal Channel (99) of one of the successive Upstream Hollow Rigid Tubes (98-a),
ii. and successively impacts the Reflection Point (29) of a Mirror (M) of a particular Intermediate Support Disk (106) facing it;
d. such that the Upstream Tubular Stiffening Assembly (90-a) concomitantly provides
i. stiffening and immunity to longitudinal vibrations of the Rotating Optical Assembly (22), and,
ii. safety protection by encapsulation of the Incoming Laser Beam (18) during rotation of the Rotating Optical Assembly (22).

14. A Device (1) according to claim 13 **characterized in that**:
a. its Stiffening Assembly (90) further comprises a Downstream Tubular Stiffening Assembly (90-b), constituted by Downstream Hollow Rigid Tubes (98-b), which have different Tube Lengths (101), and are geometrically configured so that they each extend longitudinally between,
i. on the one hand, a Downstream Tube Upstream End (102-b), arranged behind the Mirror (M) of a particular Intermediate Support Disk (106), different for each Downstream Hollow Rigid Tube (98-b); and,
ii. on the other hand, a Downstream Tube Downstream End (105-b), located in the vicinity of the same Downstream Lateral Face (103-b) of the last Downstream Support Disk (104-b) of the Rotating Optical Assembly (22);
b. the Upstream Tubular Stiffening Assembly (90-a) and the Downstream Tubular Stiffening Assembly (90-b)
i. have a similar topology, and, are complementary, and,
ii. are substantially the image of each other, after a mirror reflection combined with an axial rotation of 180°;
So that:
c. the combination of the Upstream Tubular Stiffening Assembly (90-a) and the Downstream Tubular Stiffening Assembly (90-b)
i. provides longitudinal stiffening and vibration immunity to the Rotating Optical Assembly (22) along its entire length during rotation, and
ii. serves as a guide to allow easy assembly and angular indexing of the Support Discs (85); and, the Downstream Hollowed Rigid Tubes (98-b) are never penetrated by the Incoming Laser Beam (18).

15. A Device (1) according to claim 1, **characterized in that**:
a. it is equipped with a Focusing Assembly (107), consisting of a plurality of Focusing Lenses (108), fixed with respect to the Rotation Axis (15) and the Impact Plane (48); and,
b. these Focusing Lenses (108) are positioned between the Rotating Optical Assembly (22) and the Impact Plane (48), and their Optical Axis (109) is perpendicular to the Impact Plane (48).

16. A Device (1) according to claim 15, **characterized in that**:
a. its Focusing Assembly (107) is equipped with Cylindrical Focusing Lenses (110) (cylindrical or semi-cylindrical type) having an Optical Cylinder Axis (111) substantially parallel to the Plane of Impact (48).

17. A Device (1) according to claim 16, **characterized in that** its Focusing Assembly (107) consists of Cylindrical Focusing Lenses (110),
a. each configured to focus the Secondary Laser Beams (45) passing through them,
i. according to a narrow Rectangular Laser Impact Spot (112),
ii. that is to say whose Laser Spot Length (113) is at least twice its Laser Spot Width (114), and,
b. thus defining a Rectangular Spot Axis (115)
i. oriented according to the Laser Spot Length (113).

18. A Device (1) according to claim 1, **characterized in that**:
a. it comprises a Secondary Support (116), in a fixed position with respect to the Axis of Rotation (15) and the Plane of Impact (48);
b. it comprises an Auxiliary Reflector Assembly (117, 117-a), composed of at least two (q) Auxiliary Mirrors (49, 118, 118-a-1, 118-a-2, 118-a-3)
i. each being in a fixed position between them and with respect to the Secondary Support (116), and,
ii. geometrically configured to deflect by successive reflections the Auxiliary Laser Beams (119, 119-a-1, 119-a-2, 119-a-3, 119-a-4) of an Auxiliary Beam Collection (120, 120-a, 120-b, 120-c, 120-d), the first deflected beam (119-a-1) of which is constituted by one of the Secondary Laser Beams (45, 45-21) emitted by the Rotary Optical Assembly (22);
iii. which are each successively impacted by one of the Auxiliary Laser Beams (119, 119-a-1, 119-a-2, 119-a-3) at an Auxiliary Reflection Point (121, 121-a-1, 121-a-2, 121-a-3) of this Auxiliary Mirror (118, 118-a-1, 118-a-2, 118-a-3) to constitute a new Auxiliary Laser Beam deflected from the Auxiliary Beam Collection (120, 120-a, 120-b, 120-c, 120-d), each time with a change in Angular Beam Direction (A) of this impacting Auxiliary Laser Beam (119, 119-a-1, 119-a-2, 119-a-3);
c. an Upstream Auxiliary Mirror (122, 118-a-1) of the Auxiliary Reflector Assembly (117, 117-a) is positioned in the path of a Secondary Laser Beam (45, 45-21); and is geometrically configured
i. to be impacted by this Secondary Laser Beam (45, 45-21), on its Auxiliary Reflection Point (121, 121-a-1);
ii. and to reflect it into a first Auxiliary Laser Beam (119, 119-a-2) deflected from the Auxiliary Beam Collection (120, 120-a);
d. a Downstream Auxiliary Mirror (123, 118-a-3) of the Auxiliary Reflector Assembly (117, 117-a) is geometrically configured
i. to substantially face both (i) the last Auxiliary Laser Beam (119, 119-a-3) of the Auxiliary Beam Collection (120, 120-a), and (ii) the Control Zone (3); and,
ii. to deflect this last Auxiliary Laser Beam (119, 119-a-3), according to a final Deflected Secondary Laser Beam (124, 119-a4, 124-a), which impacts, downstream of the Auxiliary Beam Collection (120, 120-a), a Deflected Impact Point (125, 125-a) of the Impact Plane (48) of the Control Zone (3) close to a Detection Point (36) of a TEMA Electromagnetic Acoustic Transducer (34)

19. A Device (1) according to claim 18, **characterized in that**:
a. it comprises Auxiliary Reflector Assembly (126, 126-1), consisting of at least two Auxiliary Reflector Assemblies (117, 117-a, 117-c),
b. said at least two Auxiliary Reflector Assemblies (117, 117-a, 117-c) are geometrically configured such that their at least two Deflected Secondary Laser Beams (124, 124-a, 124-c),
i. are parallel and arranged according to the same Deflected Secondary Beam Plane (127, 127-1),
ii. are substantially perpendicular to the Impact Plane (48),
iii. are arranged according to a Deflected Secondary Beam Plane Array (128, 128-1), and,
iv. impact a Deflected Impact Assembly (129, 129-1) made of at least two Deflected Impact Points (125, 125-a, 125-c) distant, arranged on a straight Dotted Line of Deflected Impacts (130, 130-1) of the Impact Plane (48) of the Control Zone (3).

20. A Device (1) according to claim 19, **characterized in that**:
a. it is equipped with a Focusing Assembly (107) consisting of Focusing Lenses (108), fixedly positioned with respect to the Rotation Axis (15) and the Impact Plane (48); and,
b. the Focusing Lenses (108) are geometrically configured in two groups, according to the positioning of their Optical Axes (109), including;
i. a first group made of Secondary Focusing Lenses (131), (i) whose Secondary Optical Axis (132) is coincident with the Secondary Axis (133) of a Secondary Laser Beam (45), coming from the Reflection Point (29) of a rotating Mirror (M), and (ii) in this case it is fixed with respect to the Rotation Axis (15), between the Virtual Reflection Cylinder (39) of revolution and the Impact Point (47) of this Secondary Laser Beam (45), and, (iii) configured to focus this Secondary Laser Beam (45) on its Impact Point (47) of the Dotted Impact Line (70), and,
ii. a second group made of Auxiliary Focusing Lenses (134), (i) whose Auxiliary Optical Axis (135) is coincident with the Auxiliary Axis (136) of a final Deflected Secondary Laser Beam (124), coming from the final Auxiliary Reflection Point (121, 121-b-3) of a Downstream Auxiliary Mirror (123, 118-b-3), and (ii) in this case it is fixed with respect to the Rotation Axis (15), between the Virtual Reflection Cylinder (39) of revolution and the Deflected Impact Point (125, 125-b) of the Deflected Secondary Laser Beam (124, 124-a), and, (iii) configured to focus this Deflected Secondary Laser Beam (124, 124-b) on its Deflected Impact Point (125, 125-b) of a Deflected Impact Dotted Line (130, 130-2).

21. A Device (1) according to claim 20, **characterized in that**:
a. its Focusing Assembly (107) consists of Cylindrical Focusing Lenses (110),
i. fixed with respect to the Secondary Support (116);
ii. having an Optical Cylinder Axis (111) substantially parallel to the Impact Plane (48),
iii. each configured to focus a Secondary Laser Beam (45) or a Deflected Secondary Laser Beam (124) according to a Rectangular Laser Impact Spot (112) on the Impact Plane (48), according to a Rectangular Spot Axis (115);
b. these Cylindrical Focusing Lenses (110) are geometrically configured in such a way that the Focusing Assembly (107) is divided into two groups:
i. on the one hand, a Longitudinal Focusing Collection (137), consisting of Longitudinal Cylindrical Focusing Lenses (138), i.e. whose Optical Cylinder Axis (111) is substantially longitudinal with respect to the Rotation Axis (15), which are configured to focus a light beam passing through them onto a Longitudinal Rectangular Laser Impact Spot (139), and,
ii. on the other hand, a Transverse Focusing Collection (140), consisting of Transverse Cylindrical Focusing Lenses (141), i.e. whose Optical Cylinder Axis (111) is substantially transverse with respect to of the Rotation Axis (15), which are configured to focus a light beam passing through them onto a Transverse Rectangular Laser Impact Spot (142).

22. A Device (1) according to claim 21, **characterized in that**:
a. It comprises both:
i. a Plane Network of Secondary Beams (69), consisting of Secondary Laser Beams (45, 45-11), (i) emitted by the Rotating Optical Assembly (22), (ii) which impact the Impact Points (47) of the Dotted Line of Impacts (70), and,
ii. at least one Plane Network of Deflected Secondary Beams (128, 128-1, 128-2), consisting of Deflected Secondary Laser Beams (124, 124-a-21, 124-b-22, 124-c-23, 124-d-24), (i) coming from an Auxiliary Reflector Assembly (126, 126-1, 126-2), (ii) which impact the Deflected Impact Points (125, 125-a-21, 125-b-22, 125-c-23, 125-d-24) of at least one Deflected Dotted Impact Line (130, 130-1, 130-2);
b. The Longitudinal Cylindrical Focusing Lenses (138), and the Transverse Cylindrical Focusing Lenses (141) are positioned in a complementary and exclusive manner in two groups, such that:
i. a first group (110-1) focuses the Secondary Beam Plane Array (69) on its Dotted Impact Line (70), (i) only according to Longitudinal Rectangular Laser Impact Spots (139), or (ii) only according to Transverse Rectangular Laser Impact Spots (142); and,
ii. alternatively, and exclusively from the previous one, a second group (110-2) focuses the Plane Network of Deflected Secondary Beams (128, 128-1, 128-2) on a Dotted Line of Deflected Impacts (130, 130-1, 130-2), (i) only according to Transverse Rectangular Laser Impact Spots (142), or (ii) only according to Longitudinal Rectangular Laser Impact Spots (139).

23. A Device (1) according to claim 1, **characterized in that**:
a. its Sensor Assembly (33) is composed of Directional TEMAs (143), of the type having a Preferred Directional Orientation for Capture (144) of the Induced Signals (11) generated by the interaction of the Mechanical Vibrations (8) with the Surface Discontinuities (12) and the Subsurface Discontinuities (13);
b. its Sensor Assembly (33) is configured so as to be divided into two groups,
i. on the one hand a Longitudinal Sensor Collection (145), consisting of Longitudinal TEMAs (146, 146-T, 146-D), i.e. with Preferred Directional Orientation of Capture (144) in a longitudinal direction with respect to the Axis of Rotation (15), and,on the other hand a Transverse Sensor Collection (147), consisting of Transverse TEMAs (148, 148-T, 148-D), i.e. with Preferred Directional Orientation of Capture (144) in a transverse direction with respect to the Axis of Rotation (15); the Transverse Rectangular Laser Impact Spots (142, 15-a-21, 125-b-22, 125-c-23, 125-d-24) are (in number) predominantly located between two Longitudinal TEMAs (146); and, the Longitudinal Rectangular Laser Impact Spots (139, 47-11) are (in number) predominantly located in the vicinity of and above or below Transverse TEMAs (148), with reference to a height positioning orientation taken perpendicular to the Axis of Rotation (15).

24. A Device (1) according to claim 20, **characterized in that** its Rotating Optical Assembly (22) is geometrically configured so that:
a. it comprises both :
i. a Plane Network of Secondary Beams (69), (i) consisting of Secondary Laser Beams (45, 45-11), (ii) which impact the Impact Points (47) of the main Dotted Line of Impact (70),
ii. two Plane Networks of Deflected Secondary Beams (128, 128-1, 128-2), (i) consisting of two groups of Deflected Secondary Laser Beams (124-a, 124-c) and (124-b, 124-d), (ii) coming from two Auxiliary Reflector Assemblies (126, 126-1, 126-2), (iii) which impact two distant auxiliary Dotted Lines of Deflected Impacts (130, 130-1, 130-2), and,
b. the Dotted Line The main Impact Dotted Line (70) and the two auxiliary Deflected Impact Dotted Lines (130, 130-1, 130-2) are all three parallel to the Rotation Axis (15) and spaced apart from each other; and,
c. the two Deflected Impact Dotted Lines (130, 130-1, 130-2) are located on either side, i.e. above and below the main Impact Dotted Line (70), with reference to a height positioning orientation taken perpendicular to the Rotation Axis (15).

25. A Device (1) according to claim 24, **characterized in that** its Rotating Optical Assembly (22) is geometrically configured so that:
a. its main Dotted Impact Line (70) is formed of Longitudinal Rectangular Laser Impact Spots (139); and,
b. its two auxiliary Deflected Impact Dotted Lines (130, 130-1, 130-2) are formed of Transverse Rectangular Laser Impact Spots (142, 125-a-21, 125-b-22, 125-c-23, 125-d-24).

26. A Device (1) according to claims 23 and 25, **characterized in that** its Rotating Optical Assembly (22) is geometrically configured so that:
a. its Longitudinal TEMAs (146, 146-T, 146-D) are mostly (in number)
i. aligned on either side and alternately with respect to the main Dotted Impact Line (70), and
ii. positioned longitudinally next to a Transverse Rectangular Laser Impact Spot (142, 125-a-21, 125-b-22, 125-c-23, 125-d-24) of one of the two Deflected Dotted Impact Lines (130, 130-1, 130-2); and,
b. its Transverse TEMAs (148, 148-T, 148-D) are predominantly (in number) positioned and aligned alternately above and/or below the Longitudinal TEMAs (146, 146-T, 146-D), with reference to a height positioning orientation taken in a direction perpendicular to the Axis of Rotation (15).

27. A Device (1) according to claim 1, further comprising:
a. Angular Position Control Means (149) of the single Rotating Shaft (14), and therefore of the monolithic Rotating Optical Assembly (22) rotating with respect to the Rotation Axis (15);
i. connected to the single Rotating Shaft (14);
b. Laser Pulse Control and Timing Means (150),
i. electrically connected to the Input Laser Source (16),
ii. and configured to control and/or clock the generation of laser pulses by the Input Laser Source (16);
c. Motor Rotation Timing Means (151)
i. electrically connected to the Drive Motor (24-a);
d. a Synchronized Rotation Laser Pulse Timing Processor (152),
i. electrically connected to the Angular Position Control Means (149) of the Rotary Shaft (14), and,
ii. electrically connected to the Motor Rotation Timing Means (151), for continuously receiving the angular position of the Rotary Shaft (14);
This Device (1) being **characterized in that** the Synchronized Timing Processor for Rotational Laser Pulses (152) is configured:
e. either in Motor Control Mode (153),
i. to electrically control the Motor Rotation Timing Means (151)
ii. according to the timing of the laser pulses generated by the Incoming Laser Source (16),
iii. in order to successively adaptively position the axial angular position of the Rotating Optical Assembly (22),
iv. so that the Number of Mirror Impact Pulses (NIM) of the pulses of the Incoming Laser Beam (18) impacting each of the rotating Mirrors (M, M1, ..., M20), in the vicinity of its Reflection Point (29) of the rotating Dotted Helical Line (43), is constant (for example NIM = 2); or,
f. either in Pulse Control Mode (154),
i. to electrically control the Laser Pulse Control and Timing Means (150),
ii. as a function of the timing of the axial angular position of the Rotating Optical Assembly (22), continuously received from the Angular Position Control Means (149),
iii. in order to successively adapt the timing of the pulses of the Incoming Laser Beam (18),
iv. so that the Number of Mirror Impact Pulses (NIM) of the pulses of the Incoming Laser Beam (18) impacting each of the rotating Mirrors (M, M1, ..., M20), in the vicinity of its Reflection Point (29) of the rotating Dotted Helical Line (43), is constant (for example NIM = 2).
